# EUROPÄISCHE PATENTSCHRIFT

(11) **EP 3 357 111 B1**
(45) Veröffentlichungstag und Bekanntmachung des Hinweises auf die Patenterteilung: **09.09.2020**
(21) Anmeldenummer: 16770269.5
(22) Anmeldetag: 22.09.2016
(51) Int. Cl.: H01M 4/04, C23C 26/00, B05D 1/06, B01D 1/06, B05D 3/06, H01M 4/139, H01M 4/88, H01M 8/0202, H01M 8/023, H01M 10/052, H01M 10/0562, H01M 10/058

(54) **VERFAHREN ZUR SUBSTRATBESCHICHTUNG MIT PARTIKELN UND VORRICHTUNG ZUR AUSFÜHRUNG DES VERFAHRENS**
METHOD FOR SUBSTRATE COATING WITH PARTICLES AND DEVICE FOR CARRYING OUT THE METHOD
PROCÉDÉ DE REVÊTEMENT DE SUBSTRAT AVEC DES PARTICULES ET DISPOSITIF POUR METTRE EN OEUVRE LE PROCÉDÉ

(30) Priorität: 28.09.2015 DE 102015116351
(43) Veröffentlichungstag der Anmeldung: 08.08.2018
(73) Patentinhaber: VON ARDENNE Asset GmbH & Co. KG, 01328 Dresden (DE)
(72) Erfinder: VIELUF, Maik, 01324 Dresden (DE); REINHOLD, Ekkehart, 01465 Dresden OT Langebrück (DE); ULLMANN, Lars, 01833 Stolpen (DE)
(74) Vertreter: Viering, Jentschura & Partner mbB Patent- und Rechtsanwälte
(86) Internationale Anmeldenummer: PCT/EP2016/072540
(87) Internationale Veröffentlichungsnummer: WO 2017/055165

(56) Entgegenhaltungen:
- WO-A1-96/11061
- FR-A- 1 265 945
- US-A- 3 695 909
- US-A- 4 780 331
- US-A1- 2002 127 332
- US-A1- 2011 135 836

## Beschreibung

Die Erfindung betrifft ein Verfahren und eine dazu verwendbare Vorrichtung zur Beschichtung eines Substrats mit Partikeln unter Vakuumbedingungen.

Als Partikel sollen kleinkörnige Materialien mit einer Korngröße (Partikelgröße) im Nanometer- und Mikrometerbereich bezeichnet sein. Darunter sollen sowohl Pulver, allgemein bis zu Partikelgrößen von einigen µm, als auch Granulat, Partikelgrößen im Mikrometerbereich, fallen.

Mit Partikeln behandelte oder beschichtete Oberflächen sind aus verschiedenen Bereichen bekannt und können sehr unterschiedliche Strukturen aufweisen. Beispielsweise sind der Oberflächenschutz und die Oberflächenvergütung durch Pulverbeschichtung bekannt. Um Oberflächen hoher Härte oder Verschleißfestigkeit zu erzielen, werden Oberflächen mit einem pulverförmig aufgetragenen Zusatzstoff legiert.

Zur Herstellung von Lithium-Ionen-Batterien werden für die Elektroden poröse Aktivmaterialien mit einer Schichtdicke von 20 µm bis einigen Hundert Mikrometern benötigt, welche der Einlagerung (Interkalation) der Lithium-Ionen dienen. Zur Herstellung von Brennstoffzellen werden Gasdiffusionsschichten (so genannte Gas-Diffusions-Layer (GDL)) verwendet, welche eine hohe und zugleich feinverteilte Gasdurchlässigkeit aufweisen. Dabei kann es erforderlich sein, die Gasdiffusionsschicht in Form einer mikroporösen Schicht zu bearbeiten, um deren Gasverteilvermögen, elektrische Leitfähigkeit und/oder deren Wasserabweisung zu erhöhen.

Zum Aufbringen von Pulver auf eine zu behandelnde oder beschichtende Oberfläche sind in Abhängigkeit von der zu erzielenden Oberfläche oder Schichtdicke verschiedene Verfahren bekannt. Häufig wird ein Pulver mit einem Bindemittel nasschemisch oder mechanisch vermischt, und z. B. durch Spritzen, Slot Die Coating, Siebdruck oder so genanntes Spin-Coating auf die Oberfläche aufgebracht und in einem nachfolgenden Prozess getrocknet. Hinderlich sind bei den aufwendigen nasschemischen Herstellungsprozessen, deren Neigung zur Bildung von Agglomeraten und von Gaseinschlüssen, der Aufwand zu Bereitstellung der erforderlichen Reinheit, die Trocknung und die verwendeten Lösungsmittel und die in der Oberfläche eingelagerten Bindemittelreste, meist Polymerketten, welche die elektrischen Eigenschaften der Schicht negativ beeinflussen.

In den Schriften US 2011/135836 A1, US 4 780 331 A, US 3 695 909 A, FR 1 265 945 A, US 2002/127332 AI und WO 96/11061 A1 sind verschiedene Verfahren beschrieben, mittels denen unter anderem Feststoffpartikel auf einem Substrat deponiert werden können.

Für die Elektroden der Lithium-Ionen-Batterien führen die Bindemittelreste zu unbefriedigend hochohmigen Übergangswiderständen zwischen den Partikeln der Elektrodenschicht. Den bekannten PVD-Verfahren zur Oberflächenveredelung bzw. zur Herstellung von porösen Aktivmaterialien, wie dem Sputtern oder dem thermischen Bedampfen sind hinsichtlich der Schichtdicke und/oder der Schichtstruktur Grenzen gesetzt bzw. sind diese zu ineffektiv, um im industriellen Maßstab die erforderlichen Schichteigenschaften zu erzielen.

Gemäß verschiedenen Ausführungsformen werden ein Verfahren und eine Vorrichtung bereitgestellt, welche anschaulich eine trockene Beschichtung ermöglichen. Gemäß verschiedenen Ausführungsformen werden (z.B. zum Zeitpunkt der Beschichtung, d.h. während des Beschichtens) flüssige Lösungsmittel und flüssige Bindemittel nicht benötigt. Mit anderen Worten kann das Beschichten (d.h. das Bilden einer Schicht) trocken (d.h. frei von einer Flüssigkeit) erfolgen.

Gemäß verschiedenen Ausführungsformen wird ein Verfahren und eine dazu verwendbare Vorrichtung bereitgestellt zum Aufbringen von Partikelmaterialien (Feststoffpartikeln) auf Oberflächen. Verfahren und Vorrichtung sollen geeignet sein, verschiedene Materialien, auch dielektrische, aufzubringen und verschiedene Schichtstrukturen, auch poröse Strukturen, zu erzielen.

Beispielsweise sollen die Aktivmaterialien von Anode und Kathode einer Lithium-Ionen-Batterie mit der erforderlichen porösen Struktur mit einer Porosität z.B. in einem Bereich von ungefähr 30% bis ungefähr 40% oder von mehr als ungefähr 40% herstellbar sein.

Beispielsweise sollen Feststoffelektrolyte einer Dünnfilm-Lithium-Ion-Batterie mit einer erforderlichen dichten Schicht herstellbar sein.

Beispielsweise kann eine (z.B. mikroporöse) Gasdiffusionsschicht herstellbar sein, welche anschaulich eine ausreichend hohe elektrische Leitfähigkeit (z.B. von mehr als ungefähr 10⁶ Siemens/Meter) und/oder hohe Hydrophobie (Wasserabweisung) aufweist. Beispielsweise können intrinsisch nicht hydrophobe Polymergewebe oder intrinsisch nicht hydrophobe Metallgewebe mittels der Feststoffpartikel beschichtet werden. Die auf dem Polymergewebe und/oder Metallgewebe abgeschiedenen Feststoffpartikel können eine Oberflächenfunktionalisierung bzw. Oberflächenstrukturierung bereitstellen, welche anschaulich eine gute elektrische Leitfähigkeit (z.B. von als ungefähr 10⁶ Siemens/Meter) und einen hohen Korrosionsschutz ermöglichen, was zu einer verbesserten Brennstoff-Zellperformance (z.B. Effizienz) führt. Anschaulich kann die mittels der Feststoffpartikel gebildete Schicht wasserabweisend (hydrophob) sein, wobei das von den Feststoffpartikeln abperlende Wasser mögliche Korrosionsareale minimiert und im Gewebe nicht stagniert, so dass der Gasfluss bzw. die Gasflussversorgung störungsfrei und anschaulich möglichst effektiv ablaufen kann. Anschaulich kann dadurch vermieden werden, dass vom Wasser benetzte Oberflächen den Gasfluss stören, z.B. behindern, und damit die elektrische Zellspannung reduzieren.

Gemäß verschiedenen Ausführungsformen kann das Verfahren Folgendes aufweisen: Positionieren einer zu beschichtenden Substratoberfläche eines Substrats in einem Vakuum und in Richtung eines Bereichs, in dem Feststoffpartikel angeordnet sind, mit denen die Substratoberfläche beschichtet werden soll; und Einbringen von Elektronen (z.B. Primärelektronen und/oder Sekundärelektronen) in die Feststoffpartikel zur elektrostatischen Aufladung der Feststoffpartikel derart, dass eine durch die elektrostatische Aufladung bewirkte Kraft die Feststoffpartikel voneinander trennt und in Richtung der Substratoberfläche des Substrats beschleunigt zum Beschichten der Substratoberfläche mit zumindest einem Teil der voneinander getrennten Feststoffpartikel; und Verdampfen eines Beschichtungsmaterials in Richtung der Substratoberfläche zum Beschichten der Substratoberfläche mit zumindest einem Teil des Beschichtungsmaterials, wobei das Beschichten der Substratoberfläche mit zumindest dem Teil des Beschichtungsmaterials und das Beschichten der Substratoberfläche mit zumindest dem Teil der voneinander getrennten Feststoffpartikel entweder: einander zeitlich und/oder räumlich überlappen, oder zeitlich und/oder räumlich einen Abstand voneinander aufweisen.

Das Einbringen von Elektronen in die Feststoffpartikel kann mittels einer Elektronenquelle erfolgen (z.B. aus dieser heraus), z.B. einer Primärelektronenquelle und/oder einer Sekundärelektronenquelle. Mit anderen Worten können die in die Feststoffpartikel eingebrachten Elektronen aus der Elektronenquelle stammen. Die in die Feststoffpartikel eingebrachten Elektronen können Primärelektronen und/oder Sekundärelektronen aufweisen.

Die Sekundärelektronen können beispielsweise mittels einer Sekundäremission bereitgestellt sein oder werden. Sekundäremission (Bilden von Sekundärelektronen) kann als Emission von Elektronen aus einer Oberflächen oder einem Körper (auch als Sekundärelektronenquelle bezeichnet, z.B. ein Bestrahlungsziel-Festkörper) verstanden, welche von darauf auftreffender Primärstrahlung (z.B. Primärelektronen) angeregt (z.B. bewirkt) wird. Die Primärstrahlung (z.B. Primärelektronen oder Primärionen) können eine größere kinetische Energie aufweisen als die Sekundärelektronen. Die Primärstrahlung (d.h. die Sekundäremission anregende Strahlung) kann beispielsweise Röntgen- oder Gammastrahlung aufweisen oder daraus gebildet sein.

Die Primärelektronen können beispielsweise mittels einer Glühkathode (z.B. einer Elektronenkanone) bereitgestellt sein oder werden. Die Sekundärelektronen können beispielsweise mittels einer Sekundärelektronenquelle bereitgestellt werden, z.B. indem diese mit Primärelektronen bestrahlt wird.

Eine Temperatur der Feststoffpartikel während des Einbringens der Elektronen und/oder während des Beschichtens kann kleiner sein als eine Aggregatzustand-Übergangstemperatur (z.B. eine Verdampfungstemperatur, eine Schmelztemperatur und/oder eine Sublimationstemperatur) der Feststoffpartikel. Damit kann anschaulich verhindert werden, dass die Feststoffpartikel aufschmelzen, sublimieren, zusammensintern oder verdampfen. Anschaulich können die Feststoffpartikel mittels des Einbringens der Elektronen elektrostatisch aufgeladen werden, ohne deren Temperatur über die Verdampfungstemperatur zu bringen. Die thermische Verlustleistung kann von der Temperatur der Feststoffpartikel abhängen und z.B. bei deren Schmelztemperatur oder Sublimationstemperatur definiert sein oder werden.

Gemäß verschiedenen Ausführungsformen können die Feststoffpartikel zusätzlich gekühlt sein oder werden. Alternativ oder zusätzlich kann eine Leistung der Elektronen (z.B. elektrische und/oder kinetische Leistung), d.h. eine von den Elektronen eingetragene Leistung, derart eingerichtet sein, dass die Temperatur der Feststoffpartikel während des Einbringens der Elektronen und/oder während des Beschichtens kleiner ist als deren Aggregatzustand-Übergangstemperatur. Beispielsweise kann die mittels der Elektronen eingetragene Leistung kleiner sein als eine thermische Verlustleistung der Feststoffpartikel.

Im Rahmen dieser Beschreibung können die Feststoffpartikel als Partikel (anschaulich Körner) verstanden werden, welche einen Feststoff aufweisen oder daraus gebildet sind, d.h. in einem festen Aggregatzustand vorliegende Materie (wobei die Materie mehrere Atome und/oder Moleküle aufweisen kann). Die Feststoffpartikel können eine Ausdehnung (anschaulich Partikelgröße) größer als 5 nm aufweisen, z.B. größer als 0,1 µm, z.B. kleiner als 1 mm, z.B. kleiner als 500 µm, z.B. in einem Bereich von ungefähr 10 nm bis ungefähr 500 µm , z.B. in einem Bereich von ungefähr 100 nm bis ungefähr 100 µm, z.B. in einem Bereich von ungefähr 200 nm bis ungefähr 10 µm, oder in einem Bereich von ungefähr 0,1 µm bis ungefähr 1 mm, z.B. in einem Bereich von ungefähr 1 µm bis ungefähr 500 µm, z.B. in einem Bereich von ungefähr 10 µm bis ungefähr 250 µm. Die Feststoffpartikel können anschaulich ein Granulat oder ein Pulver bilden. Die Ausdehnung der Feststoffpartikel kann deren gemittelte Ausdehnung sein, z.B. über alle Feststoffpartikel gemittelt und/oder für jedes Feststoffpartikel einzeln gemittelt. Die gemittelte Ausdehnung eines einzelnen Feststoffpartikels kann anschaulich einem Durchmesser einer Kugel entsprechen, welche das Volumen des Feststoffpartikels aufweist. Beispielsweise können die Feststoffpartikel als Pulver oder Granulat vorliegen.

Gemäß verschiedenen Ausführungsformen können die Feststoffpartikel in einem Behälter angeordnet sein oder werden, welcher eine (z.B. isolierende oder zumindest teilweise elektrisch leitfähige, d.h. zumindest abschnittsweise eine elektrische Leitfähigkeit von mehr als 10⁶ Siemens/Meter aufweisend) Behälterwandung aufweist, wobei das Einbringen von Elektronen in die Feststoffpartikel indirekt über die Behälterwandung und/oder direkt, z.B. mittels Primär- und/oder Sekundärelektronen (auch als Elektronenregen bezeichnet), erfolgen kann. Beispielsweise kann das Einbringen von Elektronen in die Feststoffpartikel aus einem Direktbeschuss der Feststoffpartikel mit einem Elektronenstrahl (z.B. dessen Kern), dem Saumenstrahl und/oder der Behälterwandung erfolgen.

Gemäß verschiedenen Ausführungsformen kann ein Elektronenstrahl, welcher z.B. von einer Elektronenstrahlenkanone emittiert wird (auch als Primärelektronenstrahl bezeichnet), eine gerichtete (z.B. kollimierte) Bewegung von Elektronen in eine Strahlrichtung aufweisen oder daraus bestehen. Im Querschnitt des Elektronenstrahls (quer zur Strahlrichtung), z.B. am Auftreffort, ähnelt die räumlich verteilte Häufigkeit der Elektronen (laterale Intensitätsverteilung) ungefähr einer Gaußverteilung. Anschaulich weist der Elektronenstrahl neben seinem Kern (der eigentliche Fokus am Auftreffort) einen diesen umgebenden Randbereich (anschaulich ein Mantel) auf, der auch als Saumenstrahl bezeichnet wird. Die laterale Ausdehnung des Kerns kann ungefähr die Halbwertsbreite der lateralen Intensitätsverteilung des Elektronenstrahls sein. Mit anderen Worten kann der Elektronenstrahl einen Kern (Strahlkern) und einen Mantel (Strahlmantel oder Saumenstrahl) aufweisen oder daraus gebildet sein.

Wird lediglich ein Teil des Elektronenstrahls (z.B. der Saumenstrahl) zum Einbringen der Elektronen verwendet, kann die in die Feststoffpartikel eingebracht Leistung geringer sein, als die von der Elektronenkanone emittierte Leistung. Dies kann das Steuern und/oder Regeln der in die Feststoffpartikel eingebrachten Leistung erleichtern, da die Elektronenkanone beispielsweise bei einer zeitliche konstanten Leistung betrieben werden kann oder diese zumindest weniger verändert werden muss (z.B. den benötigten Leistungshub verringern).

Damit kann beispielsweise erreicht werden, dass die Elektronen mittels der Behälterwandung oder mittels Sekundäremission (z.B. mittels Direktbeaufschlagung von Bereichen außerhalb und/oder innerhalb des Partikelbehälters zur Erzeugung von Sekundärelektronen) verteilt werden, was eine elektrische Stromdichte, welche durch das Einbringen von Elektronen in die Feststoffpartikel bewirkt wird, verringert. Somit kann anschaulich ein lokales Erwärmen der Feststoffpartikel reduziert und/oder verhindert werden, z.B. ein dadurch bewirktes lokales Aufschmelzen oder Zusammensintern.

Gemäß verschiedenen Ausführungsformen kann das Verfahren ferner aufweisen: Abführen von Elektronen aus den Feststoffpartikeln während des Einbringens von Elektronen in die Feststoffpartikel, wobei das Abführen gesteuert oder geregelt erfolgt, z.B. mittels einer Steuerung. Damit kann ein elektrisches Potential der Feststoffpartikel, welches durch das Einbringen von Elektronen bewirkt wird, gesteuert oder geregelt werden. Anschaulich kann ein Teil der elektrischen Ladung, welche durch das Einbringen von Elektronen in die Feststoffpartikel eingebracht wird mittels des Abführens von Elektronen wieder abgeführt werden.

Gemäß verschiedenen Ausführungsformen kann eine Steuerung eine nach vorn gerichtete Steuerstrecke aufweisen und somit anschaulich eine Ablaufsteuerung implementieren, welche eine Eingangsgröße in eine Ausgangsgröße umsetzt. Die Steuerstrecke kann aber auch Teil eines Regelkreises sein, so dass eine Regelung implementiert wird. Die Regelung weist im Gegensatz zu der reinen Vorwärts-Steuerung eine fortlaufende Einflussnahme der Ausgangsgröße auf die Eingangsgröße auf, welche durch den Regelkreis bewirkt wird (Rückführung). Gemäß verschiedenen Ausführungsformen kann anstatt der Steuerung eine Regelung verwendet werden.

Gemäß verschiedenen Ausführungsformen kann das Einbringen gesteuert oder geregelt erfolgen, z.B. mittels der Steuerung. Damit kann ein elektrisches Potential der Feststoffpartikel, welches durch das Einbringen von Elektronen bewirkt wird, gesteuert oder geregelt werden.

Wie vorstehend beschrieben weist das Verfahren in einer ersten Alternative auf: Verdampfen eines Beschichtungsmaterials (mit anderen Worten Erzeugen eines Materialdampfstroms, auch als Co-Verdampfung bezeichnet) in Richtung der Substratoberfläche zum Beschichten der Substratoberfläche mit zumindest einem Teil des Beschichtungsmaterials (auch als zweites Beschichtungsmaterial bezeichnet), wobei das Beschichten der Substratoberfläche mit zumindest dem Teil des Beschichtungsmaterials und das Beschichten der Substratoberfläche mit zumindest dem Teil der voneinander getrennten Feststoffpartikel einander zeitlich und/oder räumlich überlappen. Anschaulich können der Teil des Beschichtungsmaterials (anschaulich eine Dampfwolke) und der Teil der Feststoffpartikel (anschaulich eine Partikelwolke) einander zumindest teilweise durchdringen. Somit kann erreicht werden, dass die Feststoffpartikel mit dem Beschichtungsmaterial beschichtet werden, bevor diese das Substrat erreichen. Alternativ oder zusätzlich kann erreicht werden, dass das Beschichtungsmaterial die Feststoffpartikel untereinander verbindet und/oder diese mit dem Substrat verbindet. Das Verdampfen des Beschichtungsmaterials kann ein thermisches Verdampfen und/oder ein Sputtern (auch als Kathodenzerstäubung bezeichnet) aufweisen.

Gemäß verschiedenen Ausführungsformen kann das Beschichtungsmaterial mit den Primärelektronen bestrahlt werden. Optional können das Beschichtungsmaterial und/oder der zusätzliche Behälter Sekundärelektronen emittieren, welche in die Feststoffpartikel eingebracht werden.

Wie vorstehend beschrieben weist das Verfahren in einer zweiten Alternative auf: Verdampfen eines Beschichtungsmaterials (Co-Verdampfen) in Richtung der Substratoberfläche zum Beschichten der Substratoberfläche mit zumindest einem Teil des Beschichtungsmaterials, wobei das Beschichten der Substratoberfläche mit zumindest dem Teil des Beschichtungsmaterials und das Beschichten der Substratoberfläche mit zumindest dem Teil der voneinander getrennten Feststoffpartikel zeitlich und/oder räumlich einen Abstand voneinander aufweisen. Somit kann erreicht werden, dass die Feststoffpartikel mit dem Beschichtungsmaterial beschichtet werden, nachdem diese das Substrat erreicht haben. Beispielsweise kann eine von den Feststoffpartikeln gebildete Schicht mit dem Beschichtungsmaterial beschichtet werden.

Gemäß verschiedenen Ausführungsformen kann das Beschichtungsmaterial eine Lithium-Phosphor-Verbindung aufweisen, z.B. Lithium-Phosphor-Oxinitrid (LiPON) und/oder Lithium-Phosphor-Oxid (LiPO). Optional kann die Lithium-Phosphor-Verbindung (z.B. das Lithium-Phosphor-Oxid, z.B. kann das LiPO-Beschichtungsmaterial) nachträglich, z.B. nach dem Beschichten, nitriert und/oder oxidiert werden, z.B. indem dieses einer Sauerstoffatmosphäre und/oder einer Stickstoffatmosphäre ausgesetzt ist oder wird. Beispielsweise können die Feststoffpartikel mit der Lithium-Phosphor-Verbindung beschichtet sein oder werden.

Gemäß verschiedenen Ausführungsformen kann das Verfahren ferner aufweisen: Steuern und/oder Regeln (z.B. mittels einer Steuerung bzw. Regelung) eines elektrischen Potentialunterschieds zwischen dem Substrat und den Feststoffpartikeln. Werden die Feststoffpartikel in einem Behälter angeordnet, kann das elektrische Potential der Feststoffpartikel dem elektrischen Potential des Behälters entsprechen. Beispielsweise kann das elektrische Potential des (z.B. isolierten) Behälters ungefähr dem elektrischen Potential der Elektronenstrahlquelle entsprechen oder zumindest in einem Bereich von 10% bis 100% des elektrischen Potential der Elektronenstrahlquelle liegen. Beispielsweise kann ein elektrisches Potential des Substrats und/oder ein elektrisches Potential der Feststoffpartikel gesteuert und/oder geregelt werden. Beispielsweise kann eine an dem Substrat angelegte elektrische Spannung (d.h. ein elektrischer Potentialunterschied zu einem elektrischen Bezugspotential) gesteuert oder geregelt werden. Alternativ oder zusätzlich kann eine an den Feststoffpartikeln angelegte elektrische Spannung (d.h. ein elektrischer Potentialunterschied zu einem elektrischen Bezugspotential) gesteuert oder geregelt werden. Das elektrische Bezugspotential kann beispielsweise von einer Vakuumkammer bereitgestellt sein oder werden. Alternativ kann der elektrische Potentialunterschied zwischen Substrat und Feststoffpartikel auch floatend gesteuert oder geregelt werden (d.h. unabhängig von dem elektrischen Bezugspotential).

Die Beschleunigungsspannung der Elektronenstrahlquelle kann beispielsweise verstanden werden, als Differenz des elektrischen Potentials der Elektronenstrahlquelle zu einem Referenzpotential (auch als Bezugspotential bezeichnet). Mittels der Beschleunigungsspannung können die Primärelektronen beschleunigt werden bevor diese in die Feststoffpartikel eingebracht werden, d.h. bevor diese die Feststoffpartikel erreichen.

Die Feststoffpartikel können gemäß verschiedenen Ausführungsformen beim Verlassen des Bereichs z.B. eine negative elektrische Ladung aufweisen. Dadurch kann, z.B. bei leitfähigen Substraten oder Schichten (z.B. Partikelschichten), mittels einer elektrischen BIAS-Spannung (elektrischer Potentialunterschied zwischen Substrat und Feststoffpartikel bzw. Behälter) eine gesteuerte Abscheidung der Feststoffpartikel auf dem Substrat erfolgen.

Optional kann von dem elektrischen Potentialunterschied zwischen Substrat und Feststoffpartikel (z.B. mittels der elektrischen BIAS-Spannung) ein Sputtereffekt bewirkt werden, um eine Eigenschaft des Schichtgefüges, z.B. mechanische Härte, elektrische Leitfähigkeit, Porosität, zu steuern.

Gemäß verschiedenen Ausführungsformen kann das Verfahren ferner aufweisen: Steuern (z.B. mittels der Steuerung) einer Ausbreitungscharakteristik der Feststoffpartikel, welche von dem Bereich weg beschleunigt werden. Die Ausbreitungscharakteristik kann zumindest eines von Folgendem aufweisen: eine Haupt-Ausbreitungsrichtung, eine mittlere Abweichung von der Haupt-Ausbreitungsrichtung (z.B. ein Raumwinkel in den sich die Feststoffpartikel ausbreiten), eine Haupt-Ausbreitungsgeschwindigkeit, oder eine mittlere Abweichung von der Haupt-Ausbreitungsgeschwindigkeit.

Beispielsweise kann ein (z.B. mechanisch und/oder elektrisch) initiiertes Fokussieren der Feststoffpartikel erfolgen, z.B. indem die mittlere Abweichung von der Haupt-Ausbreitungsrichtung verringert wird. Alternativ oder zusätzlich kann ein Ablenken der Feststoffpartikel erfolgen, z.B. indem ein räumlicher Verlauf der Haupt-Ausbreitungsrichtung verändert wird.

Die Haupt-Ausbreitungsrichtung kann eine Richtung bezeichnen, in welche sich die von dem Bereich weg beschleunigten Feststoffpartikel im Mittel (d.h. der Schwerpunkt der Feststoffpartikeln) im zeitlichen Verlauf von dem Bereich weg bewegen. Der Schwerpunkt der Feststoffpartikel (z.B. einer Vielzahl von Feststoffpartikeln oder einer räumlichen Verteilung von Feststoffpartikel) kann als ein mit der Masse der Feststoffpartikel gewichtetes Mittel der Positionen der Feststoffpartikel beschreiben. Die Haupt-Ausbreitungsgeschwindigkeit kann eine Geschwindigkeit bezeichnen, mit der sich die Feststoffpartikel im Mittel (d.h. der Schwerpunkt der Feststoffpartikel) ausbreiten, d.h. bewegen. Die mittlere Abweichung von einer Haupt-Größe (Haupt-Ausbreitungsgeschwindigkeit oder Haupt-Ausbreitungsrichtung) kann als eine mit der Masse der Feststoffpartikel gewichtete Standardabweichung um die Haupt-Größe verstanden werden.

Alternativ oder zusätzlich zur Haupt-Ausbreitungsgeschwindigkeit kann ein Haupt-Impuls und/oder eine Haupt-kinetisch-Energie der Feststoffpartikel und/oder eine mittlere Abweisung davon verwendet werden.

Gemäß verschiedenen Ausführungsformen kann das Steuern (z.B. mittels der Steuerung) des Beschichtens aufweisen, eine Schichteigenschaft (Eigenschaft des Schichtgefüges) zu steuern, z.B. zumindest eine von folgenden Schichteigenschaften: eine Dichte der Schicht (Partikelschicht), eine Porosität der Schicht, eine mechanische Härte der Schicht, eine Dicke der Schicht, eine mittlere Porengröße der Schicht, eine mittlere Dichte der Poren, eine chemische Zusammensetzung der Schicht, eine elektrische Leitfähigkeit der Schicht; eine Gaspermeabilität der Schicht; eine Permittivität der Schicht. Beispielsweise kann das Steuern (z.B. mittels der Steuerung) des Beschichtens zumindest eines von Folgendem aufweisen: Verdichten der Schicht, welche aus den Feststoffpartikeln auf dem Substrat gebildet wird; Stoppen des Beschichtens, wenn eine vordefinierte Schichtdicke der Schicht erreicht ist; Härten der Schicht.

Alternativ oder zusätzlich kann das Steuern (z.B. mittels der Steuerung) des Beschichtens aufweisen, einen Gradienten in zumindest einer Schichteigenschaft (Eigenschaft des Schichtgefüges) zu bilden, z.B. zumindest eine von folgenden Schichteigenschaften: eine Dichte der Schicht (Partikelschicht), eine Porosität der Schicht, eine mechanische Härte der Schicht, eine Dicke der Schicht, eine mittlere Porengröße der Schicht, eine mittlere Dichte der Poren, eine chemische Zusammensetzung der Schicht, eine elektrische Leitfähigkeit der Schicht; eine Gaspermeabilität der Schicht; eine Permittivität der Schicht.

Gemäß verschiedenen Ausführungsformen kann die Partikelschicht (auch als Schicht bezeichnet) Feststoffpartikel aufweisen oder daraus gebildet sein. Optional kann die Partikelschicht das Beschichtungsmaterial aufweisen, z.B. in Form einer Beschichtung der Feststoffpartikel, in Form einer Feststoffpartikel-Substrat-Verbindung und/oder in Form einer Feststoffpartikel-Feststoffpartikel-Verbindung.

Gemäß verschiedenen Ausführungsformen kann das Beschichten aufweisen die elektrischen, chemischen oder physikalischen Eigenschaften des Substrats und/oder der zu beschichtenden Oberfläche zu verändern, z.B. gesteuert zu verändern.

Beispielsweise kann das Härten der Schicht (d.h. ein Vergrößern der mechanischen Härte der Schicht) erfolgen, indem ein elektrisches Potential des Substrats derart eingerichtet ist oder wird, dass Feststoffpartikel, welche mit einer Kraft geringer als eine vordefinierte Kraft (anschaulich schwach) gebunden sind oder werden, von dem Substrat oder von einer darauf gebildeten Schicht gelöst (abgetrennt) werden und von dem Substrat weg beschleunigt werden. Somit können lediglich die am Substrat angelagerten (abgeschiedenen) Feststoffpartikel zum Bilden der Schicht verbleiben, welche mit einer Kraft größer oder gleich der vordefinierten Kraft an dem Substrat und/oder einer darauf gebildeten Schicht gebunden sind.

Beispielsweise kann ein Verdichten erfolgen, indem die Haupt-Ausbreitungsgeschwindigkeit erhöht wird, z.B. indem der elektrische Potentialunterschied zwischen Substrat und dem Bereich (z.B. den darin angeordneten Feststoffpartikeln oder dem Behälter) vergrößert wird. Anschaulich können die Feststoffpartikel dann einen größeren Impuls aufweisen, mit dem diese auf das Substrat und/oder eine darauf gebildete Schicht auftreffen.

Die mittels des Beschichtens gebildete Schicht kann eine Schichtdicke (d.h. eine Ausdehnung quer zu der Substratoberfläche) aufweisen größer als ungefähr 10 nm, z.B. größer als ungefähr 100 nm, z.B. größer als ungefähr 1 µm, z.B. größer als ungefähr 10 µm, z.B. größer als ungefähr 20 µm (z.B. in einem Bereich von ungefähr 20 µm bis ungefähr 500 µm), z.B. größer als ungefähr 100 µm, z.B. größer als ungefähr 1 mm, z.B. größer als ungefähr 10 mm. Alternativ oder zusätzlich kann die Schicht eine Dicke (Schichtdicke) von weniger als ungefähr 1 mm aufweisen, z.B. weniger als ungefähr 500 µm, z.B. weniger als ungefähr 100 µm, z.B. weniger als ungefähr 10 µm, z.B. weniger als ungefähr 1 µm, z.B. weniger als ungefähr 500 nm, z.B. weniger als ungefähr 250 nm, z.B. weniger als ungefähr 100 nm, z.B. weniger als ungefähr 50 nm, z.B. weniger als ungefähr 25 nm, z.B. weniger als ungefähr 10 nm, z.B. weniger als ungefähr 5 nm, z.B. in einem Bereich von ungefähr 10 nm bis ungefähr 100 nm oder z.B. in einem Bereich von ungefähr 100 nm bis ungefähr 1 µm, oder z.B. in einem Bereich von ungefähr 1 µm bis ungefähr 10 µm, oder z.B. in einem Bereich von ungefähr 10 µm bis ungefähr 100 µm, oder z.B. in einem Bereich von ungefähr 100 µm bis ungefähr 1 mm.

Gemäß verschiedenen Ausführungsformen kann der Behälter elektrisch isolierend positioniert (z.B. gelagert) sein oder werden oder ein elektrisch isolierendes Material aufweisen oder daraus gebildet sein, welches beispielsweise das Innere des Behälters umgeben kann (beispielsweise in Form einer Schicht). Dann kann ein Abführen von Elektronen von dem Behälter verringert oder verhindert werden, was beispielsweise das elektrische Potential des Behälters (Behälterpotential), welches durch das Einbringen von Elektronen erreicht wird, vergrößert. Dadurch kann anschaulich ein höheres Behälterpotential entstehen, welches wiederum zu einer höheren kinetischen Energie der Feststoffpartikel führt. Alternativ oder zusätzlich kann ein höheres Behälterpotential eine Vereinzelung und/oder Deagglomeration der Feststoffpartikel (z.B. im Pulvermaterial) begünstigen.

Alternativ kann der Behälter gemäß verschiedenen Ausführungsformen mittels eines einstellbaren Widerstands (Potentiometer) mit einem elektrischen Bezugspotential gekoppelt sein oder werden, z.B. mit elektrischer Masse. Die Steuerung kann eingerichtet sein, einen Widerstandswert des Potentiometers zu stellen und/oder zu regeln, z.B. auf Grundlage eines Beschichtungsfortschritts und/oder auf Grundlage einer Stellgröße, welche eine Schichteigenschaft repräsentiert.

Gemäß verschiedenen Ausführungsformen kann das Substrat elektrisch isolierend positioniert sein oder werden. Dann kann ein Abführen von Elektronen von dem Substrat verringert oder verhindert werden.

Alternativ kann das Substrat gemäß verschiedenen Ausführungsformen mittels eines einstellbaren Widerstands (Potentiometer) mit einem elektrischen Bezugspotential gekoppelt sein oder werden, z.B. mit elektrischer Masse. Die Steuerung kann eingerichtet sein, einen Widerstandswert des Potentiometers zu stellen und/oder zu regeln, z.B. auf Grundlage eines Beschichtungsfortschritts und/oder auf Grundlage einer Stellgröße, welche eine Schichteigenschaft repräsentiert.

Das Beschichtungsmaterial kann ein Verbinder-Material aufweisen oder daraus gebildet sein, welches sich von den Feststoffpartikeln unterscheidet. Das Verfahren kann ferner aufweisen: Bilden einer Feststoffpartikel-Feststoffpartikel-Verbindung, welche das Verbinder-Material aufweist oder daraus gebildet ist. Die Schicht kann die Feststoffpartikel und die Feststoffpartikel-Feststoffpartikel-Verbindung aufweisen. Das Verbinder-Material kann eingerichtet sein in einem gasförmigen Zustand mit den Feststoffpartikeln chemisch zu reagieren (z.B. kann ein Karbid gebildet werden, z.B. Titankarbid und/oder Siliziumkarbid).

Alternativ oder zusätzlich kann das Verfahren aufweisen: Bilden einer Substrat-Feststoffpartikel-Verbindung, welche das Verbinder-Material aufweist oder daraus gebildet ist. Die Schicht kann die Feststoffpartikel und die Substrat-Feststoffpartikel-Verbindung aufweisen. Das Verbinder-Material kann eingerichtet sein in einem gasförmigen Zustand mit den Feststoffpartikeln und/oder dem Substrat chemisch zu reagieren.

Gemäß verschiedenen Ausführungsformen können die Feststoffpartikel ein Akkumulator-Aktivmaterial, ein Solarzellen-Aktivmaterial, ein Katalysatormaterial und/oder ein Feststoffelektrolyt (Festelektrolyt) aufweisen.

Als Elektrolyt kann ein Material verstanden werden, welches im festen (Feststoffelektrolyt), flüssigen oder gelösten Zustand in Ionen dissoziiert ist, so dass sich diese unter dem Einfluss eines elektrischen Feldes gerichtet bewegen können. Als Akkumulator-Aktivmaterial kann ein Material verstanden werden, welches unter einer chemischen Reaktion elektrische Ladungen aufnimmt oder abgibt (mit anderen Worten, welches elektrische Energie in chemische Energie umwandelt, und umgekehrt). Ein Katalysatormaterial kann als Material verstanden werden, welches eine Reaktionsgeschwindigkeit durch die Senkung der Aktivierungsenergie einer chemischen Reaktion erhöht, ohne dabei selbst verbraucht zu werden. Ein Solarzellen-Aktivmaterial kann verstanden werden als ein Material, welches Strahlungsenergie (Energie von elektromagnetischer Strahlung, z.B. Licht) in elektrische Energie umwandelt, und umgekehrt.

Das Feststoffelektrolyt kann beispielsweise eines von Folgendem aufweisen oder daraus gebildet sein: Yttriumstabilisiertes Zirkonium (YSZ) Zirkoniumdioxid (ZrO₂), oder Yttriumoxid (Y₂O₃); Lithium-Phosphor-Oxinitrid (LiPON); ein Super-lonenleiter (Ionic Conductor) wie LiSICON (Lithium Super-Ionenleiter) oder NaSICON (Natrium Super-Ionenleiter); ein sulfidisches Glas. In einem Super-Ionenleiter kann die lonenleitfähigkeit größer sein als ungefähr 0,01 Ohm⁻¹ cm⁻¹ (z.B. bei 300 Kelvin), z.B. größer als ungefähr 0,1 Ohm⁻¹ cm⁻¹, und/oder die Aktivierungsenergie zum lonentransport kann keiner sein als ungefähr 1 Elektronenvolt (eV), z.B. kleiner als ungefähr 0,1 eV.

Gemäß verschiedenen Ausführungsformen können die Feststoffpartikel zumindest ein Material der folgenden Materialien aufweisen oder daraus gebildet sein: ein Metall; ein Übergangsmetall, ein Oxid (z.B. ein Metalloxid oder ein Übergangsmetalloxid); ein Dielektrikum; ein Polymer (z.B. ein Kohlenstoff-basiertes Polymer oder ein Silizium-basiertes Polymer); ein Oxinitrid; ein Nitrid; ein Karbid; eine Keramik; ein Halbmetall (z.B. Kohlenstoff); ein Perowskit; ein Glas oder glasartiges Material (z.B. ein sulfidisches Glas); ein Halbleitermaterial (z.B Silizium); ein Halbleiteroxid; ein halborganisches Material, und/oder ein organisches Material (z.B. Polyvinylidenflurid - "PVDF", Carboxymethylcellulose - "CMC" und/oder Hydroxypropylmethylcellusose - "HPMC").

Gemäß verschiedenen Ausführungsformen können die Feststoffpartikel eine Lithium-Phosphor-Verbindung aufweisen, z.B. Lithium-Phosphor-Oxinitrid (LiPON) und/oder Lithium-Phosphor-Oxid (LiPO). Beispielsweise kann die Lithium-Phosphor-Verbindungm, z.B. das Lithium-Phosphor-Oxid (z.B. können LiPO-Feststoffpartikel), nachträglich, z.B. nach dem Beschichten, oxidiert und/oder nitriert werden, z.B. indem dieses einer Sauerstoffatmosphäre und/oder einer Stickstoffatmosphäre ausgesetzt ist oder wird.

Gemäß verschiedenen Ausführungsformen können die Feststoffpartikel und/oder das Beschichtungsmaterial ein Halbleitermaterial eines Typs oder verschiedener Typen aufweisen oder daraus gebildet sein, einschließlich Gruppe IV-Halbleiter (z.B. Silizium oder Germanium), Verbindungshalbleiter, z.B. Gruppe III-V-Verbindungshalbleiter (beispielsweise Galliumarsenid), Gruppe-III-Halbleiter, Gruppe V-Halbleiter oder Polymere. In mehreren Ausführungsformen können die Feststoffpartikel und/oder das Beschichtungsmaterial aus Silizium (dotiert oder undotiert) gebildet sein oder werden. Der Begriff Halbleitermaterial kann als eine chemische Zusammensetzung verstanden werden, welche ein halbleitendes Basismaterial (z.B. Silizium) aufweist oder daraus gebildet ist und/oder in einem undotierten Zustand halbleitend ist, d.h. eine elektrische Leitfähigkeit aufweist in einem Bereich von ungefähr 10⁻⁶ Siemens/Meter bis ungefähr 10⁶ Siemens/Meter. Das Halbleitermaterial bzw. das halbleitende Basismaterial kann beispielsweise einen Elementhalbleiter (z.B. Silizium oder Germanium) oder einen Verbindungshalbleiter (z.B. Siliziumkarbid oder SiGe) aufweisen oder daraus gebildet sein.

Der Kohlenstoff kann zumindest eine der folgenden Kohlenstoffkonfigurationen aufweisen oder daraus gebildet sein: Graphit; amorpher Kohlenstoff; tetraedrischer Kohlenstoff; diamantähnlicher Kohlenstoff; Fullerene; Diamant; Kohlenstoffnanoröhren; amorph-tetraedrischem Kohlenstoff; und/oder nanokristalliner Kohlenstoff, z.B. nanokristalliner Graphit. Optional kann in dem Kohlenstoff Wasserstoff aufgenommen sein (d.h. eine mit Wasserstoff versetzte Kohlenstoffkonfiguration).

Gemäß verschiedenen Ausführungsformen können die Feststoffpartikel eine Beschichtung aufweisen, z.B. eine Metallbeschichtung (z.B. kann die Beschichtung Lithium, Titan, Aluminium und/oder Platin aufweisen oder daraus gebildet sein, z.B. mit Platin beschichtete Rußpartikel und/oder mit Ruthenium beschichtete Rußpartikel) oder eine Oxidbeschichtung (z.B. kann die Beschichtung Aluminiumoxid, Siliziumoxid, und/oder Titanoxid aufweisen oder daraus gebildet sein) und/oder Halbleiterbeschichtung (z.B. kann die Beschichtung Silizium aufweisen oder daraus gebildet sein) und/oder Keramikbeschichtung (z.B. kann die Beschichtung LiPON aufweisen oder daraus gebildet sein). Gemäß verschiedenen Ausführungsformen kann die Beschichtung der Feststoffpartikel mittels der Co-Verdampfung bereitgestellt sein oder werden.

Gemäß verschiedenen Ausführungsformen kann das Verfahren ferner aufweisen: Steuern (z.B. mittels der Steuerung) des Beschichtens der Substratoberfläche mit zumindest dem Teil der voneinander getrennten Feststoffpartikel auf Grundlage einer Menge von Elektronen, welche in die Feststoffpartikel eingebracht wird und/oder welche von den Feststoffpartikeln abgeführt wird. Beispielsweise kann auf Grundlage der Menge von Elektronen, welche in die Feststoffpartikel eingebracht wird und/oder welche von den Feststoffpartikeln abgeführt wird, eine Größe ermittelt werden, welche die Dicke einer Schicht repräsentiert, welche von den auf dem Substrat abgeschiedenen Feststoffpartikel gebildet wird. Beispielsweise kann die Größe eine Menge der voneinander getrennten und in Richtung der Substratoberfläche des Substrats beschleunigten Feststoffpartikel aufweisen oder daraus gebildet sein.

Eine Menge von Elektronen kann eine elektrische Ladung definieren, welche den Feststoffpartikeln zugeführt bzw. von diesen abgeführt wird. Ist die zugeführte elektrische Ladung größer als die abgeführte elektrische Ladung werden die Feststoffpartikel elektrostatisch aufgeladen. Die Menge von Elektronen (bzw. deren elektrische Ladung), welche jeweils in die Feststoffpartikel eingebracht bzw. von diesen abgeführt wird, können ein elektrisches Potential der Feststoffpartikel definieren. Je größer eine Differenz des elektrischen Potentials der Feststoffpartikel und eines elektrischen Bezugspotentials ist, desto größer kann die Kraft sein, welche durch die elektrostatische Aufladung bewirkt wird. Das elektrische Bezugspotential kann beispielsweise ein elektrisches Potential des Substrats und/oder einer Kammerwand (z.B. einer Vakuumkammer) aufweisen oder daraus gebildet sein.

Gemäß verschiedenen Ausführungsformen kann das Substrat während des Beschichtens der Substratoberfläche mit zumindest dem Teil der voneinander getrennten Feststoffpartikel bewegt werden. Beispielsweise kann das Substrat pendelnd oder gleichmäßig bewegt werden, z.B. entlang einer Transportrichtung.

Gemäß verschiedenen Ausführungsformen kann das Substrat eine Elektrode eines Akkumulators, eines Kondensators, einer Solarzelle oder einer Brennstoffzelle aufweisen oder daraus gebildet sein. Die Elektrode kann beispielsweise eine Folie oder eine Folienstruktur, eine Platte oder eine Plattenstruktur aufweisen oder daraus gebildet sein.

Gemäß verschiedenen Ausführungsformen kann das Substrat eine (z.B. mikroporöse) Gasdiffusionsschicht einer Brennstoffzelle aufweisen oder daraus gebildet sein. Die Gasdiffusionsschicht kann beispielsweise eine gasdurchlässige Struktur (z.B. Mikrostruktur) aufweisen oder daraus gebildet sein, beispielsweise ein Gewebe aus mehreren Filamenten oder eine Membran aufweisend oder daraus gebildet. Die Filamente können ein Polymer und/oder ein Metall aufweisen oder daraus gebildet sein. Beispielsweise kann die Gasdiffusionsschicht ein Metallgewebe und/oder ein Polymergewebe aufweisen oder daraus gebildet sein (auf welcher mittels der Feststoffpartikelemission beispielsweise eine Rußpartikelschicht gebildet sein oder werden kann). In dem Fall kann das Beschichten des Substrats mittels der Feststoffpartikel (d.h. das Abscheiden der Feststoffpartikel auf dem Substrat) die elektrischen und hydrophoben Eigenschaften des Substrats erhöhen, d.h. dessen wasserabweisende Eigenschaft.

Im Rahmen dieser Beschreibung kann als Gaspermeabilität (auch als Gaspermeation oder Gasdurchlässigkeit bezeichnet) ein Maß verstanden werden, welches die Durchlässigkeit des Körpers oder eines Teils des Körpers für ein Gas beschreibt, mit anderen Worten in welcher Menge pro Zeiteinheit ein Gas den Körper oder einen Teil des Körpers durchdringt oder durchwandert. Die Gaspermeabilität kann auf ein bestimmtes Gas bei einem bestimmten Druckunterschied und einer bestimmten Temperatur bezogen sein. Die Gaspermeabilität entspricht dem auf die Dicke eines Körpers, entlang welcher dieser von dem Gas durchdrungen wird, normierten Permeationskoeffizienten, welcher beschreibt wieviel Volumen eines Gases bezogen auf 0°C (Gastemperatur) und 1 bar (101325 Pa) pro Zeiteinheit durch einen Körper mit einer Dicke und einer Oberfläche quer zur Dicke bei einer Partialdruckdifferenz des Gases bei der Temperatur T permeieren (hindurchdringen) kann, z.B. entlang der Dicke. Die Gaspermeabilität der Gasdiffusionsschicht kann größer sein als ungefähr 150·10⁻¹⁸ m² s⁻¹ Pascal.

Gemäß verschiedenen Ausführungsformen kann das Substrat ein Elektrolyt (z.B. eine Elektrolytplatte, eine Elektrolytmembran oder eine Elektrolytfolie) eines Akkumulators oder einer Brennstoffzelle aufweisen oder daraus gebildet sein.

Gemäß verschiedenen Ausführungsformen kann das Substrat ein Separator eines Akkumulators oder einer Brennstoffzelle aufweisen oder daraus gebildet sein (z.B. bei einer Flüssig-Elektrolyt-Zelle, wie einer Direktmethanolbrennstoffzelle). Der Separator kann eingerichtet sein, die Elektroden des Akkumulators oder der Brennstoffzelle (d.h. die negative und positive Elektrode, z.B. Kathode und Anode) räumlich und elektrisch voneinander zu trennen. Der Separator kann ionendurchlässig eingerichtet sein. Somit können Ionen, welche z.B. die Umwandlung der gespeicherten chemischen Energie in elektrische Energie bewirken oder andersherum, durch den Separator hindurch dringen. Der Separator kann mikroporös sein, wobei der Separator ein Polymer (z.B. einen Kunststoff, wie z.B. PTFE) und/oder Glas aufweisen oder daraus gebildet sein kann. Alternativ oder zusätzlich kann der Separator Fasern aufweisen, z.B. in Form eines Vlieses, z.B. Glasfaser oder Polyethylenfasern.

Gemäß verschiedenen Ausführungsformen kann das Substrat eine Elektrode, ein Elektrolyt (z.B. eine Elektrolytplatte, eine Elektrolytmembran oder eine Elektrolytfolie) oder eine Gasdiffusionsschicht einer Brennstoffzelle aufweisen oder daraus gebildet sein. In dem Fall können die Feststoffpartikel beispielsweise ein Katalysatormaterial aufweisen. Das Katalysatormaterial kann in dem Fall zwischen einer Elektrode (z.B. der Anode) der Brennstoffzelle und dem Elektrolyt der Brennstoffzelle angeordnet sein oder werden.

Gemäß verschiedenen Ausführungsformen können die Feststoffpartikel derart eingerichtet sein, dass eine von den Feststoffpartikeln gebildete Schicht eine hydrophobe (wasserabweisende), lipophobe (fettabweisende) und/oder amphiphobe (flüssigkeitsabweisende) Oberfläche aufweist. Mit anderen Worten kann die Schicht eine abweisende Oberfläche aufweisen. Die Eigenschaft der Oberfläche der Schicht kann von deren Rauheit und/oder von einem Material der Feststoffpartikel definiert sein oder werden. Beispielsweise kann eine hydrophobe Oberfläche erreicht werden, wenn die Oberfläche eine Rauheit (mittlere Rauheit) in einem Bereich von ungefähr 10 nm bis ungefähr 100 µm aufweist, z.B. in einem Bereich von ungefähr 10 µm bis ungefähr 20 µm. Die Rauheit der Oberfläche kann von der Ausdehnung der Feststoffpartikel definiert sein oder werden. Alternativ oder zusätzlich kann die Rauheit von einer Menge an abgeschiedenen gasförmigen Beschichtungsmaterial definiert sein oder werden. Beispielsweise kann die Rauheit der Oberfläche verringert werden (d.h. die Schicht kann geglättet werden), wenn auf die Schicht zusätzlich Beschichtungsmaterial aus dessen gasförmigen Phase abgeschieden wird. Alternativ kann die Rauheit der Oberfläche vergrößert werden, indem Feststoffpartikel mit einer größeren Ausdehnung verwendet werden.

Gemäß verschiedenen Ausführungsformen kann die Ausdehnung der Feststoffpartikel, z.B. deren mittlere Ausdehnung (gemittelte Ausdehnung) größer sein als eine vordefinierte Rauheit der Schicht.

Eine Oberfläche mit einem Kontaktwinkel von mehr als 90° gegenüber Wasser kann gemäß verschiedenen Ausführungsformen als hydrophob verstanden werden. Eine Oberfläche mit einem Kontaktwinkel von mehr als 90° gegenüber Fett kann gemäß verschiedenen Ausführungsformen als lipophob verstanden werden. Eine Oberfläche mit einem Kontaktwinkel von mehr als 90° gegenüber einer Flüssigkeit kann gemäß verschiedenen Ausführungsformen als amphiphob verstanden werden. Der Kontaktwinkel kann als (zu der Flüssigkeit hin gerichteter) Winkel verstanden werden, den ein Oberflächenbereich eines Flüssigkeitstropfens und ein an diesen Oberflächenbereich angrenzenden Bereich der Oberfläche miteinander einschließen.

Gemäß verschiedenen Ausführungsformen kann eine Beschichtungsvorrichtung zur Beschichtung eines Substrats Folgendes aufweisen: einen Behälter (anschaulich einen Partikelbehälter, auch als erster Behälter bezeichnet), welcher einen Bereich zum Aufnehmen von Feststoffpartikeln aufweist; eine Positionierungsvorrichtung zum Positionieren eines Substrats mit einer Substratoberfläche des Substrats in Richtung des Bereichs; zumindest eine Elektronenquelle (z.B. eine Primärelektronenquelle und/oder eine Sekundärelektronenquelle) zum Einbringen von Elektronen in die Feststoffpartikel; eine Steuerung, eingerichtet zum Steuern einer elektrostatischen Aufladung der Feststoffpartikel derart, dass eine durch die elektrostatische Aufladung bewirkte Kraft die Feststoffpartikel voneinander trennt und in Richtung der Substratoberfläche des Substrats beschleunigt zum Beschichten der Substratoberfläche mit zumindest einem Teil der voneinander getrennten Feststoffpartikel; und einen weiteren Behälter, wobei die Steuerung eingerichtet ist, ein in dem weiteren Behälter angeordnetes Beschichtungsmaterial zu verdampfen.

Die Elektronenquelle kann eine Emissionsfläche (z.B. mittels einer Kathode bereitgestellt, z.B. mittels einer Glühkathode und/oder einer Feldemissionskathode) aufweisen zum Emittieren von Elektronen in einen Emissionsbereich. Optional kann die Elektronenquelle (z.B. die Primärelektronenquelle) Teil einer Elektronenstrahlquelle sein.

Die Sekundärelektronenquelle kann einen Festkörper (auch als Bestrahlungsziel-Festkörper oder Elektronenbeaufschlagungskörper bezeichnet) aufweisen oder daraus gebildet sein. Die Emissionsfläche der Sekundärelektronenquelle kann mittels der Primärelektronen bestrahlt werden, um die Sekundärelektronen zu bilden (anschaulich um diese freizusetzen).

Die Elektronenstrahlquelle kann die Elektronenquelle und eine Strahlformeinheit aufweisen. Die Strahlformeinheit kann zumindest eine Elektrode oder mehrere Elektroden und/oder eine Spule oder mehrere Spulen aufweisen. Die Strahlformeinheit kann zum Bilden eines Strahls (Elektronenstrahl) aus den in den Emissionsbereich emittierten Elektronen eingerichtet sein. Die Elektronenstrahlquelle kann Teil einer Elektronenstrahlkanone sein. Die Elektronenstrahlkanone kann die Elektronenstrahlquelle und eine Ablenkanordnung aufweisen. Die Ablenkanordnung kann zum Ablenken des Elektronenstrahls gemäß einem oder mehrerer Ablenkparameter eingerichtet sein, z.B. um den Bereich und/oder den Behälter, bzw. den weiteren Bereich und/oder den weiteren Behälter (auch als zusätzlicher Behälter bezeichnet) zu überstreichen. Die Ablenkanordnung kann zumindest eine Elektrode oder mehrere Elektroden und/oder eine Spule oder mehrere Spulen aufweisen.

Gemäß verschiedenen Ausführungsformen kann eine Beschichtungsvorrichtung Folgendes aufweisen: eine Vakuumkammer (auch als Vakuumprozesskammer bezeichnet), in welcher mehrere Auftreffbereiche angeordnet sind; mindestens eine Elektronenstrahlquelle; eine Ablenkanordnung zum Ablenken des mindestens einen Elektronenstrahls in die mehreren Auftreffbereiche (Elektronen-Auftreffbereiche). Zumindest ein Auftreffbereich der mehreren Auftreffbereiche kann in dem Bereich und/oder dem weiteren Bereich angeordnet sein oder werden. Alternativ oder zusätzlich kann zumindest ein Auftreffbereich der mehreren Auftreffbereiche auf dem Behälter oder außerhalb des Behälters angeordnet sein oder werden. Beispielsweise kann der zumindest eine Auftreffbereich eine Sekundärelektronenquelle (z.B. eine Ronde) aufweisen, welche beispielsweise außerhalb des Behälters angeordnet ist. Die Sekundärelektronenquelle kann beispielsweise den Bestrahlungsziel-Festkörper aufweisen oder daraus gebildet sein.

Die Verwendung der Sekundärelektronenquelle und/oder eines außerhalb des Behälters liegenden Auftreffbereichs kann den Eintrag von thermischer Energie in die Feststoffpartikel und/oder den Behälter verringern. Beispielsweise kann damit der Wärmeeintrag in das Pulvermaterial verringert werden. Dies kann es ermöglichen Feststoffpartikel mit geringerer Temperaturstabilität zu emittieren.

Die Sekundärelektronenquelle, z.B. der Bestrahlungsziel-Festkörper, und/oder der Behälter kann beispielsweise stabil gegenüber dem Einwirken des Elektronenstrahls sein, z.B. temperaturstabil (d.h. chemisch stabil, z.B. in fester Form verbleibend) bis zu ungefähr 1500°C sein oder mehr, z.B. ungefähr 2000°C oder mehr, z.B. ungefähr 2500°C oder mehr. Alternativ oder zusätzlich kann eine in die Sekundärelektronenquelle eingebrachte Leistungsdichte und/oder die Verweildauer des Elektronenstrahls in dem zumindest einen Auftreffbereich (z.B. auf der Sekundärelektronenquelle) derart gesteuert und/oder geregelt werden, dass die Temperatur der Sekundärelektronenquelle unterhalb ihrer Aggregatzustand-Übergangstemperatur bleibt (d.h. dass deren Verdampfung verhindert wird).

Beispielsweise kann die Sekundärelektronenquelle, z.B. der Bestrahlungsziel-Festkörper, ein Metall (z.B. Molybdän) aufweisen oder daraus gebildet sein und/oder eine Schmelztemperatur aufweisen, welche größer ist als die der Feststoffpartikel und/oder größer ist als die des Behälters, z.B. ungefähr 1500°C oder mehr, z.B. ungefähr 2000°C oder mehr, z.B. ungefähr 2500°C oder mehr.

Anschaulich kann die Sekundärelektronenquelle zur Sekundäremission verwendet werden, d.h. zur Erzeugung von Sekundärelektronen, welche in die Feststoffpartikel eingebracht werden können, indem die Sekundärelektronenquelle bestrahlt wird, z.B. mittels Primärelektronen. Anschaulich können die Sekundärelektronen in Form eines Elektronenregens auf die Partikeloberfläche rieseln. Alternativ oder zusätzlich kann die Sekundärelektronenquelle das Beschichtungsmaterial (Co-Verdampfungsmaterial) aufweisen oder daraus gebildet sein. Beispielsweise kann das Beschichtungsmaterial Titan, Aluminium und/oder Kohlenstoff aufweisen oder daraus gebildet sein. Dann kann beispielsweise der zusätzliche Behälter als Sekundärelektronenquelle dienen.

Die durch die elektrostatische Aufladung bewirkte Kraft, welche die Feststoffpartikel voneinander trennt und in Richtung der Substratoberfläche des Substrats beschleunigt (z.B. eine kollektiven Emission von Feststoffpartikeln), kann gemäß verschiedenen Ausführungsformen bei einer mittels der Elektronen eingebrachten Leistung von weniger als ungefähr 5 Kilowatt (kW) bereitgestellt sein oder werden, z.B. weniger als ungefähr 1 kW, z.B. weniger als ungefähr 0,5 kW, z.B. ungefähr 0,1 kW. Alternativ oder zusätzlich kann das Einbringen der Elektronen in die Feststoffpartikel mittels einer Beschleunigungsspannung in einem Bereich von ungefähr 10 Kilovolt (kV) bis ungefähr 60 kV erfolgen. Beispielsweise kann der Primärelektronenstrahl (z.B. zwischen 10 kV und 60 kV) bereits bei einer Leistung von 0,1 kW zur kollektiven Emission von Partikeln führen. Je geringer die in die Feststoffpartikel eingebrachte elektrische Leistung (d.h. die Leistung der Elektronen) ist, desto geringer kann die in die Feststoffpartikel eingebracht thermische Leistung sein, so dass diese anschaulich weniger erwärmt werden.

Je größer der Strahlstrom ist, also die Anzahl der Ladungen pro Zeit, welche die Oberfläche der Feststoffpartikel erreichen, desto mehr Feststoffpartikel können emittiert werden. Ein größerer Strahlstrom kann beispielsweise mittels einer größeren Leistung bereitgestellt sein oder werden. Dies ermöglicht ein schnelleres Beschichten. Das Einbringen der Elektronen (z.B. der Elektronenstrahl in die Feststoffpartikel kann beispielsweise mit einer Leistung von mehr als ungefähr 5 kW bereitzustellen, z.B. mehr als ungefähr 10 kW, z.B. mehr als ungefähr 30 kW, z.B. mehr als ungefähr 40 kW, z.B. mehr als ungefähr 50 kW erfolgen.

Die Elektronenstrahlquelle kann beispielsweise eingerichtet sein einen Elektronenstrahl mit weniger als 5 kW oder mehr als ungefähr 5 kW bereitzustellen, z.B. mehr als ungefähr 10 kW, z.B. mehr als ungefähr 30 kW, z.B. mehr als ungefähr 40 kW, z.B. mehr als ungefähr 50 kW. Die Beschleunigungsspannung der Elektronenstrahlquelle kann beispielsweise in einem Bereich von ungefähr 10 Kilovolt (kV) bis ungefähr 60 kV sein.

Gemäß verschiedenen Ausführungsformen kann eine elektrische Spannung (z.B. die Beschleunigungsspannung) als elektrische Potentialdifferenz (Differenz zweier elektrischer Potentiale) verstanden werden, z.B. der Differenz eines der Spannung zugeordneten elektrischen Potentials zu einem Referenzpotential (z.B. zu elektrischer Masse). Angaben über mehrere Spannungen können sich auf dasselbe Referenzpotential beziehen. Ist die Spannung positiv, ist das zugeordnete elektrische Potential größer als das Referenzpotential. Ist die Spannung negativ, ist das zugeordnete elektrische Potential kleiner als das Referenzpotential. Je größer die elektrische Spannung ist, desto größer kann das zugeordnete elektrische Potential sein. Eine Spannungsdifferenz (z.B. zwischen zwei Elementen) kann verstanden werden als die Differenz zweier Spannungen, welche, wenn die zwei Spannungen auf dasselbe Referenzpotential bezogen sind, der Differenz der zugeordneten elektrischen Potentiale (z.B. zwischen den zwei Elementen) entspricht (d.h. unabhängig vom Referenzpotential angegeben).

Als Referenzpotential kann beispielsweise elektrische Masse dienen oder ein anderes elektrisches Potential, beispielsweise das elektrische Potential des Substrats. Gegenüber dem Referenzpotential (z.B. dem Substrat) können die Feststoffpartikel (in dem Behälter) bzw. der Behälter beispielsweise mittels des Einbringens der Elektronen negativ aufgeladen werden, so dass die Feststoffpartikel in Richtung des Substrats beschleunigt werden. Beispielsweise kann die elektrische Spannung zwischen dem Substrat und den Feststoffpartikeln (in dem Behälter) bzw. dem Behälter kleiner sein als die Beschleunigungsspannung oder nahezu gleich dazu. Je größer die elektrische Spannung zwischen dem Substrat und den Feststoffpartikeln (in dem Behälter) bzw. dem Behälter ist, desto mehr und/oder schneller können Feststoffpartikel in Richtung des Substrats strömen (Feststoffpartikelstrom).

Die Ablenkparameter können z.B. mittels der Steuerung bereitgestellt sein oder werden. Die Ablenkparameter können z.B. eine Strahlfigur (Bestrahlungsfigur) definieren, entlang welcher ein Ablenken des Elektronenstrahls erfolgt.

Die Positionierungsvorrichtung kann zum Positionieren, z.B. zum Transportieren in eine Position, eines bandförmigen Substrats (z.B. einer Folie) und/oder eines plattenförmigen Substrats (z.B. ein Blech oder eine Platte) eingerichtet sein. Dazu kann die Positionierungsvorrichtung beispielsweise mehrere Transportrollen aufweisen, über welche das Substrat bewegt wird. Das Substrat kann beispielsweise auf den Transportrollen aufliegen (z.B. bei einem plattenförmigen Substrat) und/oder mittels der Transportrollen umgelenkt werden (z.B. bei einem bandförmigen Substrat).

Alternativ oder zusätzlich kann die Positionierungsvorrichtung eine Substrathalterung (z.B. einen Greifer) aufweisen, welche das Substrat entgegen einer auf das Substrat wirkenden Gewichtskraft hält, z.B. in einer definierten Lage relativ zu der Substrathalterung, z.B. hängend.

Der Bereich (Aufnahmebereich) kann beispielsweise eine Vertiefung in dem Behälter aufweisen oder daraus gebildet sein. Der weitere Bereich (weitere Aufnahmebereich) kann beispielsweise eine Vertiefung in dem weiteren Behälter aufweisen oder daraus gebildet sein.

Gemäß verschiedenen Ausführungsformen kann die Elektronenquelle eine Primärelektronenquelle und/oder eine Sekundärelektronenquelle aufweisen oder daraus gebildet sein. Die Primärelektronenquelle kann beispielsweise mittels einer Elektronenstrahlkanone bereitgestellt sein oder werden. Die Sekundärelektronenquelle kann beispielsweise mittels eines Bestrahlungsziel-Festkörpers, mittels des zusätzlichen Behälters und/oder mittels des Beschichtungsmaterials bereitgestellt sein oder werden. Gemäß verschiedenen Ausführungsformen kann die Steuerung eingerichtet sein, zum Steuern einer Menge von Elektronen, welche in die Feststoffpartikel eingebracht wird; zum Steuern einer Menge von Elektronen, welche von den Feststoffpartikeln abgeführt wird; zum Steuern eines elektrischen Potentialunterschieds zwischen dem Substrat und dem Behälter; und/oder zum Steuern des Beschichtens auf Grundlage einer Menge von Elektronen, welche in die Feststoffpartikel eingebracht wird und/oder welche von den Feststoffpartikeln abgeführt wird.

Die Steuerung kann eingerichtet sein, eine Menge an Elektronen (d.h. eine elektrische Ladung), welche in die Feststoffpartikel eingebracht wird, z.B. pro Zeit, zu steuern oder zu regeln. Mit anderen Worten kann die Steuerung eingerichtet sein, einen Elektronenstrom (d.h. eine elektrische Stromstärke, z.B. einen Elektronenstrahlstrom) zu steuern oder zu regeln, welche den Feststoffpartikeln zugeführt wird. Beispielsweise kann die Steuerung eingerichtet sein, eine Leistung eines Elektronenstrahls zu steuern und/oder zu regeln, mit dem beispielsweise die Feststoffpartikel, der Behälter, die Sekundärelektronenquelle und/oder das Beschichtungsmaterial bestrahlt werden kann.

Die Steuerung kann eingerichtet sein, eine Menge an Elektronen, welche von den Feststoffpartikeln abgeführt wird, z.B. pro Zeit, zu steuern oder zu regeln. Mit anderen Worten kann die Steuerung eingerichtet sein, einen Elektronenstrom (d.h. eine elektrische Stromstärke) zu steuern oder zu regeln, welche von den Feststoffpartikeln abgeführt wird, z.B. über ein Potentiometer.

Die Steuerung kann eingerichtet sein, eine an dem Substrat angelegte elektrische Spannung (d.h. einen elektrischen Potentialunterschied zu einem elektrischen Bezugspotential) zu steuern oder zu regeln, z.B. auf Grundlage eines elektrischen Potentials der Feststoffpartikel und/oder auf Grundlage eines vorgegebenen elektrischen Potentialunterschieds. Alternativ oder zusätzlich kann die Steuerung eingerichtet sein, eine an den Feststoffpartikeln angelegte elektrische Spannung (d.h. einen elektrischen Potentialunterschied zu einem elektrischen Bezugspotential) zu steuern oder zu regeln, z.B. auf Grundlage eines elektrischen Potentials des Substrats und/oder auf Grundlage des vorgegebenen elektrischen Potentialunterschieds. Beispielsweise kann der vorgegebene elektrische Potentialunterschied als Führungsgröße verwendet werden. Gestellt oder geregelt werden kann beispielsweise eine Menge an Elektronen, welche den Feststoffpartikeln zugeführt und/oder von diesen abgeführt wird.

Gemäß verschiedenen Ausführungsformen kann der Behälter einen Wärmetauscher aufweisen zum Kühlen der Feststoffpartikel und/oder des Behälters. Der Wärmetauscher kann zum Aufnehmen eines Kühlmediums eingerichtet sein, z.B. einer Kühlflüssigkeit oder eines Kühlgases. Der Wärmetauscher kann eingerichtet sein thermische Energie von dem Behälter und/oder von den Feststoffpartikeln auf das Kühlmedium zu übertragen, so dass die thermische Energie mittels des Kühlmediums abgeführt werden kann. Mittels des Wärmetauschers lässt sich die thermische Verlustleistung der Feststoffpartikel und/oder des Behälters erhöhen.

Gemäß verschiedenen Ausführungsformen können in dem Bereich Feststoffpartikel angeordnet sein.

Die Steuerung kann eingerichtet sein, eine Temperatur der Feststoffpartikel während des Einbringens der Elektronen in die Feststoffpartikel und/oder während des Beschichtens unterhalb einer Verdampfungstemperatur (z.B. eine Schmelztemperatur und/oder eine Sublimationstemperatur) der Feststoffpartikel zu halten, z.B. zu regeln und/oder zu steuern.

Gemäß verschiedenen Ausführungsformen kann die Elektronenquelle eine Sekundärelektronenquelle aufweisen oder daraus gebildet sein, wobei die Steuerung eingerichtet ist zum Steuern einer Sekundäremission der Sekundärelektronenquelle, welche z.B. mittels des Elektronenstrahls bewirkt wird.

Wie vorstehend beschrieben weist die Beschichtungsvorrichtung auf: einen weiteren Behälter (auch als zweiter Behälter bezeichnet), wobei die Steuerung eingerichtet ist, ein in dem weiteren Behälter angeordnetes Beschichtungsmaterial (auch als Verdampfungsgut bezeichnet) zu verdampfen. Der weitere Behälter kann einen weiteren Bereich zum Aufnehmen des Beschichtungsmaterials aufweisen. Alternativ oder zusätzlich kann der weitere Behälter beispielsweise eine Knudsen-Zelle (kann auch als Effusivquelle bezeichnet werden) aufweisen oder daraus gebildet sein.

Gemäß verschiedenen Ausführungsformen kann die Beschichtungsvorrichtung ferner eine Anode zum Bereitstellen eines elektrischen Feldes zwischen dem weiteren Behälter und der Positionierungsvorrichtung aufweisen, wobei die Steuerung ferner eingerichtet ist, zum Zünden eines Plasmas mittels des elektrischen Feldes. Das Plasma kann beispielsweise aus dem Beschichtungsmaterial gebildet werden, welches aus dem weiteren Behälter verdampft wird (d.h. aus dem gasförmigen Beschichtungsmaterial). Beispielsweise kann die Anode eine plasmaunterstützte Verdampfung ermöglichen. Die Anode kann auf einem elektrischen Potential liegen, welches einen elektrischen Potentialunterschied zu dem elektrischen Bezugspotential in einem Bereich von ungefähr 50 Volt bis ungefähr 100 Volt aufweist. Beispielsweise kann zwischen der Anode und dem weiteren Behälter und/oder zwischen der Anode und einer Kammerwand eine elektrische Spannung in einem Bereich von ungefähr 50 Volt bis ungefähr 100 Volt angelegt werden.

Mit anderen Worten kann zwischen dem weiteren Behälter und der Positionierungsvorrichtung (bzw. einem davon positioniertem Substrat) und/oder zwischen dem Behälter und der Positionierungsvorrichtung (bzw. einem davon positioniertem Substrat) ein Plasma bereitgestellt sein oder werden, z.B. in einem Ausbreitungsbereich, in den sich von dem Behälter weg beschleunigte Feststoffpartikel ausbreiten. Der Ausbreitungsbereich kann zwischen der Positionierungsvorrichtung (bzw. einem davon positioniertem Substrat) und dem Behälter angeordnet sein. Damit kann erreicht werden, dass durch das Plasma hindurch bewegte (anschaulich fliegende) Feststoffpartikel chemisch aktiviert werden, d.h. deren chemische Reaktivität kann vergrößert werden. Das erleichtert ein chemisches Reagieren, der Feststoffpartikel untereinander, mit dem Beschichtungsmaterial und/oder mit dem Substrat, z.B. zum Verbinden dieser miteinander. Anschaulich kann die Oberfläche der Feststoffpartikel chemisch aktiviert werden (Oberflächenaktivierung).

Die Steuerung kann eingerichtet sein, eine Temperatur des Beschichtungsmaterials während des Einbringens von Elektronen in das Beschichtungsmaterial und/oder während des Beschichtens oberhalb einer Aggregatzustand-Übergangstemperatur (z.B. einer Verdampfungstemperatur, einer Schmelztemperatur und/oder einer Sublimationstemperatur) des Beschichtungsmaterials zu halten, z.B. zu regeln und/oder zu steuern.

Gemäß verschiedenen Ausführungsformen kann in dem weiteren Bereich ein Beschichtungsmaterial angeordnet sein, z.B. ein zusammenhängendes Beschichtungsmaterial (z.B. in Form eines Blocks, eines Stabs oder ähnliches). Alternativ oder zusätzlich kann in dem weiteren Bereich auch ein granulares Beschichtungsmaterial angeordnet sein, z.B. eine Schüttung.

Gemäß verschiedenen Ausführungsformen kann der weitere Behälter und/oder die Sekundärelektronenquelle in dem Behälter angeordnet sein oder an diese(n) angrenzen. Alternativ kann der Behälter in dem weiteren Behälter und/oder der Sekundärelektronenquelle angeordnet sein oder an diese(n) angrenzen. Damit kann beispielsweise erreicht werden, dass verdampftes Beschichtungsmaterial und/oder Sekundärelektronen und in Richtung des Substrats beschleunigte Feststoffpartikel einander durchdringen.

Gemäß verschiedenen Ausführungsformen kann die Positionierungsvorrichtung eine Transportrichtung definieren; wobei der weitere Behälter und der Behälter in einem entlang der Transportrichtung verlaufenden Abstand voneinander angeordnet sind. Damit kann erreicht werden, dass ein zeitlich und/oder räumlich getrenntes Beschichten des Substrats mit dem Feststoffpartikel und dem Beschichtungsmaterial erfolgt. Alternativ oder zusätzlich können der weitere Behälter und der Behälter einen Abstand entlang einer Richtung quer zur Transportrichtung aufweisen.

Gemäß verschiedenen Ausführungsformen kann die Beschichtungsvorrichtung eine Verdampfungsvorrichtung zum Verdampfen eines Beschichtungsmaterials aufweisen, z.B. eine thermisch-Verdampfungsvorrichtung (z.B. eine Elektronenstrahlverdampfung-Vorrichtung, eine Laserstrahlverdampfung-Vorrichtung, eine Lichtbogenverdampfung-Vorrichtung, und/oder eine Molekularstrahlepitaxie-Vorrichtung) und/oder eine Sputter-Vorrichtung.

Gemäß verschiedenen Ausführungsformen kann eine Schicht auf dem Substrat gebildet werden, welche die Feststoffpartikel aufweist oder daraus gebildet ist. Optional kann eine weitere Schicht auf der Schicht gebildet werden, wobei die weitere Schicht das Beschichtungsmaterial aufweist oder daraus gebildet ist.

Gemäß verschiedenen Ausführungsformen kann ein Metall eine thermische Leitfähigkeit größer als 10 W/(m·K) aufweisen, z.B. größer als 50 W/(m·K).

Gemäß verschiedenen Ausführungsformen kann das Beschichtungsmaterial zumindest ein Metall (z.B. Nickel, Titan, Aluminium, Kupfer und/oder Chrom) aufweisen oder daraus gebildet sein. Ein Material des Beschichtungsmaterials kann verschieden von einem Material der Feststoffpartikel sein.

Im Rahmen dieser Beschreibung kann ein Metall (auch als metallischer Werkstoff bezeichnet) zumindest ein metallisches Element (d.h. ein oder mehrere metallische Elemente) aufweisen (oder daraus gebildet sein), z.B. zumindest ein Element aus der Folgenden Gruppe von Elementen: Kupfer (Cu), Eisen (Fe), Titan (Ti), Nickel (Ni), Silber (Ag), Chrom (Cr), Platin (Pt), Gold (Au), Magnesium (Mg), Aluminium (AI), Zirkonium (Zr), Tantal (Ta), Molybdän (Mo), Wolfram (W), Vanadium (V), Barium (Ba), Indium (In), Calcium (Ca), Hafnium (Hf), Samarium (Sm), Silber (Ag), und/oder Lithium (Li). Ferner kann ein Metall eine metallische Verbindung (z.B. eine intermetallische Verbindung oder eine Legierung) aufweisen oder daraus gebildet sein, z.B. eine Verbindung aus zumindest zwei metallischen Elementen (z.B. aus der Gruppe von Elementen), wie z.B. Bronze oder Messing, oder z.B. eine Verbindung aus zumindest einem metallischen Element (z.B. aus der Gruppe von Elementen) und mindestens einem nichtmetallischen Element (z.B. Kohlenstoff), wie z.B. Stahl.

Im Rahmen dieser Beschreibung kann ein Kunststoff verstanden werden als ein organischer Stoff in Polymerform (d.h. ein organisches Polymer), z.B. Polyamid, Polyethylenterephthalat (PET), Polytetrafluorethylen (PTFE), Polyvinylidenflurid (PVDF), Carboxymethylcellulose (CMC) oder Hydroxypropylmethylcellusose (HPMC) oder elektrisch leitfähiges Polymer (d.h. eine elektrische Leitfähigkeit von mehr als 10⁶ Siemens/Meter aufweisend). Beispielsweise können die Feststoffpartikel ein Polymer (z.B. Fluor basierende Polymermaterial, z.B. Polytetrafluorethylen) aufweisen oder daraus gebildet sein.

Beispielsweise kann das Beschichtungsmaterial ein Metall (z.B. Titan) aufweisen oder daraus gebildet sein und die Feststoffpartikel können ein Übergangsmetall (z.B. Kohlenstoff) aufweisen oder daraus gebildet sein. Das Metall kann sich an die Feststoffpartikel anlagern, z.B. unter einer chemischen Reaktion (z.B. ein Metallkarbid bilden), welche eine Verbindung der Feststoffpartikel in der Schicht bewirkt. Gemäß verschiedenen Ausführungsformen kann die Schicht ein Metall und Halbmetall aufweisen.

Gemäß verschiedenen Ausführungsformen kann das Beschichten derart eingerichtet sein, dass die Schicht einen Gradienten in deren chemischer Zusammensetzung (ein Zusammensetzung-Gradient) aufweist, z.B. in dem Metallanteil und/oder in dem Übergangsmetallanteil.

Weitere Details gemäß verschiedenen Ausführungsformen sind im Folgenden beschrieben.

Gemäß verschiedenen Ausführungsformen kann ein Verfahren zur Beschichtung eines Substrats mit Partikeln (Feststoffpartikeln) unter Vakuum erfolgen und folgende Verfahrensschritte umfassen: Positionieren des Substrats über einem Vorrat eines partikelförmigen Beschichtungsmaterials (welches mit anderen Worten mehrere Feststoffpartikel aufweist oder daraus gebildet ist), nachfolgend als Partikellage bezeichnet, mit der zu beschichtenden Substratoberfläche der freien Oberfläche der Partikellage gegenüberliegend; Induzieren von Elektronen (d.h. Einbringen von Elektronen) in die Partikellage zur elektrostatischen Aufladung der Partikellage, wobei die elektrische Aufladung in dem Umfang erfolgt, dass für die in der Oberfläche der Partikellage liegenden Partikel (Feststoffpartikel) Coulomb-Kräfte erzeugt werden, welche die jeweilige Gewichtskraft der Partikel übersteigt, so dass diese in Richtung Substrat emittiert (Partikelemission) werden und sich in einem Beschichtungsbereich niederschlagen. Unter Emission bzw. Partikelemission soll verstanden werden, dass die Feststoffpartikel voneinander getrennt werden, ohne selbst zerstäubt zu werden, und voneinander weg beschleunigt werden.

Gemäß verschiedenen Ausführungsformen kann die Partikellage (z.B. ein geschichtetes Agglomerat) in einem Partikelbehälter mit zumindest teilweise elektrisch leitfähiger Wandung (d.h. mehr als 10⁶ Siemens/Meter aufweisend) angeordnet werden und die elektrische Aufladung der Partikellage indirekt über diese Behälterwandung erfolgen. Beispielsweise kann das Einbringen von Elektronen in die Feststoffpartikel indirekt über die Behälterwandung erfolgen. Alternativ oder zusätzlich kann das Einbringen von Elektronen in die Feststoffpartikel mittels Primär- und/oder Sekundärelektronen erfolgen. Beispielsweise kann das Einbringen von Elektronen in die Feststoffpartikel aus einem Direktbeschuss, dem Saumenstrahl und/oder der Behälterwandung erfolgen. Das Einbringen mittels des Saumenstrahls kann beispielsweise erfolgen, indem nur ein Teil des Elektronenstrahls die Behälterwandung und/oder die Sekundärelektronenstrahlquelle trifft und der restliche (d.h. der abgezweigte bzw. verbleibende) Elektronenstrahl diese passiert.

Gemäß verschiedenen Ausführungsformen kann während der elektrischen Aufladung ein Teil der induzierten Elektronen (d.h. ein Teil der mittels der Elektronen eingebrachten elektrischen Ladung, nicht zwangsweise dieselben Elektronen) über einen niederohmigen Leiter, z.B. ein Potentiometer, abgeführt werden.

Gemäß verschiedenen Ausführungsformen kann der Teil der elektrischen Ladung steuer- oder regelbar abgeführt werden.

Gemäß verschiedenen Ausführungsformen kann eine ergänzende Verdampfung (Co-Verdampfung) eines weiteren, zweiten Beschichtungsmaterials derart erfolgen, dass sich das zweite Beschichtungsmaterial im selben Beschichtungsbereich wie das erste, partikelförmige Beschichtungsmaterial (d.h. die Feststoffpartikel) niederschlägt, z.B. auf dem Substrat.

Gemäß verschiedenen Ausführungsformen kann eine ergänzende Verdampfung eines weiteren, zweiten Beschichtungsmaterials derart erfolgen, dass sich das zweite Beschichtungsmaterial in einem zweiten Beschichtungsbereich niederschlägt, welcher an den ersten Beschichtungsbereich des partikelförmigen Beschichtungsmaterials angrenzt oder sich mit diesem teilweise überdeckt und das Substrat kann zur Beschichtung von einem in den anderen Beschichtungsbereich transportiert werden.

Gemäß verschiedenen Ausführungsformen kann die Abscheidung eines partikelförmigen Übergangsmetalls oder von partikelförmigem Graphit erfolgen.

Gemäß verschiedenen Ausführungsformen kann die aus der Partikellage emittierte Materialmenge bestimmt werden, z.B. aus der Menge der induzierten Elektronen.

Gemäß verschiedenen Ausführungsformen kann die Beschichtung im Durchlaufverfahren erfolgen.

Gemäß verschiedenen Ausführungsformen kann eine Beschichtungsvorrichtung ausgebildet zur Ausführung des Verfahrens gemäß verschiedenen Ausführungsformen Folgendes umfassen: einen Partikelbehälter zum Vorhalten eines Vorrats eines partikelförmigen Beschichtungsmaterials, nachfolgend als Partikellage bezeichnet, eine Substrathalterung zur Positionierung eines Substrats der freien Oberfläche der Partikellage gegenüberliegend, eine Glühkathode als Elektronenquelle zur Induzierung der Elektronen in die Partikellage. Die Substrathalterung kann Teil der Positionierungsvorrichtung sein.

Gemäß verschiedenen Ausführungsformen kann eine Beschichtungsvorrichtung ausgebildet zur Ausführung des Verfahrens gemäß verschiedenen Ausführungsformen Folgendes umfassen (aufweisen): einen Partikelbehälter zum Vorhalten eines Vorrats eines ersten, partikelförmigen Beschichtungsmaterials, nachfolgend als Partikellage bezeichnet, eine Substrathalterung zur Positionierung eines Substrats der freien Oberfläche der Partikellage gegenüberliegend, eine Elektronenquelle zur Induzierung der Elektronen in die Partikellage, eine Verdampfungsvorrichtung zur Verdampfung eines weiteren, zweiten Beschichtungsmaterials mit einem weiteren, zweiten Behälter zum Vorhalten des zweiten Beschichtungsmaterials und einer Verdampfungseinheit zu dessen Verdampfung, wobei die Verdampfungsvorrichtung derart angeordnet ist, dass sich das zweite Beschichtungsmaterial im selben Beschichtungsbereich wie das erste, partikelförmige Beschichtungsmaterial niederschlägt oder in einem daran angrenzenden zweiten Beschichtungsbereich.

Mit anderen Worten kann die Beschichtungsvorrichtung zwei Behälter (den ersten Behälter und den zweiten Behälter) aufweisen. Alternativ kann die Beschichtungsvorrichtung weitere Behälter aufweisen.

Gemäß verschiedenen Ausführungsformen kann im Partikelbehälter ein partikelförmiges Beschichtungsmaterial angeordnet sein (d.h. mehrere Feststoffpartikel), nachfolgend als Partikellage bezeichnet.

Gemäß verschiedenen Ausführungsformen kann die Beschichtungsvorrichtung eine Transportvorrichtung zum Transport des Substrats aufweisen.

Gemäß verschiedenen Ausführungsformen kann einer der Behälter (d.h. einer der zwei Behälter) im anderen Behälter (der zwei Behälter) angeordnet sein.

Gemäß verschiedenen Ausführungsformen kann der Partikelbehälter und der zweite Behälter nebeneinander, in Richtung des Transportwegs des Substrats betrachtet, angeordnet sein.

Es wird vorgeschlagen, in einen Vorrat eines partikelförmigen Beschichtungsmaterials (welches die Feststoffpartikel aufweist, auch als Partikel bezeichnet), nachfolgend als Partikellage bezeichnet, Elektronen zu deren elektrostatischen Aufladung der Partikellage zu induzieren. Die elektrische Aufladung erfolgt dabei in einem solchen Umfang, dass für die in der Oberfläche der Partikellage liegenden Partikel eine Coulomb-Kraft bzw. ein elektrisches Feld erzeugt wird, welche andere auf die Partikel wirkende Kräfte (z.B. die Gewichtskraft der Feststoffpartikel und/oder eine diese untereinander verbindende Kraft) übersteigt, so dass diese in Richtung eines über der Partikellage angeordneten Substrats emittiert werden und sich in einem Beschichtungsbereich auf der freien Oberfläche der Partikellage gegenüberliegenden und zu beschichtenden Substratoberfläche niederschlagen (abscheiden).

Gemäß verschiedenen Ausführungsformen wird eine elektrische Oberflächenladung der Partikellage derart erzeugt, dass die elektrostatische Coulombabstoßung zwischen den Partikeln die anderen auf die Partikeln wirkenden Kräfte überwiegt, wodurch es zu einer im Vakuum ablaufenden kollektiven Emission der Feststoffpartikel (Partikelemission) kommt. Unter einer stark vereinfachten Annahme, in der die Gewichtskraft der Partikel dominiert, kann davon ausgegangen werden, dass zur Partikelemission bzw. zum Deplatzieren eines Partikels, die Coulombsche Abstoßung die treibende Kraft darstellt. Dann gilt für zwei benachbarte Partikel gleicher Größe:
F_{C} ≥ F_{G},
wobei F_{C} die Coulomb-Kraft und F_{G} die Gewichtskraft eines Partikels bezeichnet. Bei vereinfachender Annahme einer kugelförmigen Gestalt eines Partikels kann mithilfe der Werte des Partikeldurchmessers, der Dichte der Partikel, der Anzahl der elektrischen Ladungen in zwei benachbarten Partikeln und physikalischer Basiswerte, wie der elektrischen Elementarladung des Elektrons, der elektrischen Feldkonstante und der Fallbeschleunigung, unter Berücksichtigung von elektrischen Ladungsverlusten, wie z.B. durch Sekundärelektronenstreuung, eine grobe Schätzung der erforderlichen Elektronen pro Partikel als Basis für die Leistungsparameter der verwendeten Elektronenquelle vorgenommen werden. Bei Überschreitung dieser Zahl erfolgt eine kollektive, impulsartige Partikelemission aus der oberflächlichen Schicht der Partikellage in jenem gesamten Bereich, in welchem die Elektroneninduzierung erfolgt ist. Je nach Umfang und Verteilung der elektrischen Oberflächenladungen kann die gleichzeitig emittierte Partikelmenge variieren.

Der ausreichende Grad der elektrischen Aufladung ist durch rechnerische Ermittlung oder Versuchsreihen anhand des Einsetzens der kollektiven Partikelemission gut handhabbar. Sofern es sich um unterschiedliche Partikelgrößen eines Materials handelt, ist deren Einfluss auf die Partikelemission unerheblich, da verbleibende, über der durchschnittlichen Partikelgröße liegende größere Partikel eines Vorrats durch Anpassung der Elektronenmenge gegebenenfalls nachträglich emittierbar sind. Bei der Partikelemission eines Materialgemisches in der Partikellage kann, je nach Unterschied in der Partikelgröße, beispielsweise durch eine für die größeren Partikel gewählte Elektroneninduzierung oder durch eine Kombination unterschiedlicher Elektronenemissionen eine ausreichende Mischung der Partikelemission erzielt werden.

Als Elektronenquelle können die bekannten Vorrichtungen verwendet werden, sofern sie die für die Partikelemission des jeweiligen Materials erforderliche Elektronenemission bereitstellen. Beispielsweise sind Glühkathoden, Feldemissionskathoden oder Elektronenstrahlkanonen verwendbar. Letztere ist aus der Elektronenstrahlverdampfung bekannt. Mit Elektronenstrahlkanonen sind gezielte Strahlfiguren (Bestrahlungsfiguren) zu überstreichen, so dass die gleichzeitig in eine Partikelwolke gebrachte Fläche der Partikellage gut einstellbar und folglich auf das Substrat abstimmbar ist. Es können mit einer Elektronenquelle quasi-simultan (d.h. innerhalb einer Zeit kleiner als ungefähr 1 Sekunde, z.B. ungefähr 0,1 Sekunde) auch mehrere Vorratsbehälter überstrichen werden und zudem ist die Elektronenemission über die Fokussierung, die Geometrie und Größe der Elektronenstrahlfigur (Bestrahlungsfigur) und die elektrische Leistung sowie die Applikationszeit (Bestrahlungsdauer) reproduzierbar und sehr präzise einstellbar. Glühkathoden als kostensparende Variante, können beispielsweise als linienförmige Elektronenquellen ausgebildet sein, so dass sie für ein Durchlaufverfahren von Vorteil sind, wenn sie sich über die gesamte Substratbreite quer zur Transportrichtung des Substrats erstrecken.

Bei fortgesetzter Elektroneninduzierung entweder im selben oder in einem anderen Bereich der Oberfläche der Partikellage kann fortlaufend Partikelmaterial emittiert (Partikelemission) werden. Bei ausreichendem Partikelvorrat oder geeigneter Nachführung von Partikelmaterial, z.B. durch Bewegung des Vorratsbehälters, kann so in einem kontinuierlichen Prozess Substrat bestäubt werden. Damit ist das Verfahren zur Ausführung im Durchlaufprinzip mit einer dafür konzipierten Durchlaufanlage nutzbar.

Mit dem erfindungsgemäßen Verfahren können Zusätze in der Partikelmischung vermieden werden, welche die Verarbeitbarkeit ermöglichen oder verbessern, wie Trägermittel, Bindemittel, Zusätze zur Vermeidung von Verklumpungen o. ä. So kann verklumptes Material meist ohne weitere Aufbereitung homogen emittiert werden.

Das Verfahren ist für Partikelgrößen im Nanometerbereich bis zum Mikrometerbereich und auch für Partikelgrößen bis zu einem Millimeter und effektiv auch zur Herstellung größerer Schichtdicken anwendbar. Es gestattet Schichtdicken von einigen Hundert Mikrometern im industriellen Maßstab und ist auch auf große und Endlos-Substrate (bandförmige Substrate) skalierbar.

Zur Ausführung des Verfahrens können die in der thermischen und Elektronenstrahlverdampfung verwendeten Beschichtungsvorrichtungen Verwendung finden. Die Partikellage ist in den für das Beschichtungsmaterial allgemein verwendeten nach oben offenen Behälter oder Tiegel anzuordnen und das Substrat mittels einer Substrathalterung oder gegebenenfalls einer Substrattransportvorrichtung der Partikellage gegenüberliegend zu halten oder an diesem vorbei zu transportieren.

Die in der Elektronenstrahlverdampfung verwendeten Elektronenstrahlkanonen sind für das erfindungsgemäße Verfahren als Elektronenquelle verwendbar, um die Oberfläche der Partikellage im Tiegel vollständig oder abschnittsweise zu überstreichen und aufzuladen. Auch die aus den genannten Verdampfungsverfahren bekannte Nachführung von Material kann auf Partikel angepasst auch für das beschriebene Verfahren zur Anwendung kommen. So sind Nachführungen von unten durch den Tiegelboden oder das Füllen des Tiegels von oben, abseits des aktuell zur Beschichtung genutzten Bereichs der Oberfläche. Alternativ ist eine Glühkathode als Elektronenquelle verwendbar. Es hat sich herausgestellt, dass deren Elektronenemission für das erfindungsgemäße Verfahren verwendbar und hinsichtlich möglicher Homogenisierungsprozesse der elektrischen Aufladung von Vorteil ist.

Die elektrische Aufladung kann in Abhängigkeit vom Partikelmaterial und der gleichzeitig zu emittierenden Oberfläche direkt oder indirekt erfolgen, z.B. mittels eines Elektronenstrahls. Bei der direkten elektrischen Aufladung werden die Elektronen unmittelbar in die Partikellage induziert. Eine flächige Verteilung der elektrischen Ladungen auf der Oberfläche der Partikellage erfolgt gegebenenfalls durch immanente Verteilungsprozesse und/oder durch die mit der Elektronenquelle erzielbaren Figuren (Bestrahlungsfigur), wie oben beschrieben. Je nach Geometrie der Elektronenquelle kann es zu unterschiedlichen Geometrien der emittierten Bereiche in der Oberfläche der Partikellage und zu Ausbildung von Kratern kommen. Diese können durch eine Relativbewegung von Elektronenquelle, bzw. Elektronenstrahl, und Partikellage ausgeglichen oder vermieden werden oder durch eine Rüttelbewegung des Partikelbehälters beseitigt werden.

Aufgrund der, z.B. mit einer Elektronenstrahlkanone, im Partikelvorrat lokal eingebrachten Energiedichte, besteht die Gefahr des lokalen Verschmelzens benachbarter Partikel. Aus diesem Grund ist diese Ausführungsform insbesondere zur Partikelemission von sublimierenden Materialien, wie beispielsweise Graphit, sofern eine Verschmelzung vermieden oder ausreichend vermindert werden kann, auch für andere Materialen, verwendbar.

Zur indirekten elektrischen Aufladung wird in einer Ausgestaltung des Verfahrens die Partikellage in einem Vorratsbehälter (Behälter) mit zumindest teilweise elektrisch leitfähiger Wandung (d.h. eine elektrische Leitfähigkeit von mehr als ungefähr 10⁶ Siemens/Meter aufweisend) angeordnet und die Elektronen zur elektrischen Aufladung der Partikellage über diese Behälterwandung induziert. Die Wandung des Vorratsbehälters kann vollständig aus elektrisch leitfähigem Material (d.h. eine elektrische Leitfähigkeit von mehr als ungefähr 10⁶ Siemens/Meter aufweisend) bestehen oder Einlagen davon haben. Auch eine lediglich elektrisch leitfähige Oberfläche (d.h. eine elektrische Leitfähigkeit von mehr als ungefähr 10⁶ Siemens/Meter aufweisend) des Vorratsbehälters ist möglich. Alternativ oder zusätzlich kann die elektrische Aufladung der Partikellage mittels Sekundärelektronen und/oder nur mittels des Saumenstrahls erfolgen. Mit dieser Ausführungsform des Verfahrens können Partikelmaterialien ohne Beschränkung auf bestimmte elektrische oder thermische Eigenschaften mit Partikelgrößen im Mikrometerbereich bis zu einem Millimeter emittiert werden, wobei mit zunehmender Größe der Aufwand für die elektrische Aufladung und deren Homogenisierung zunimmt.

Es ist selbstverständlich, dass der elektrisch leitfähige Teil (d.h. eine elektrische Leitfähigkeit von mehr als ungefähr 10⁶ Siemens/Meter aufweisend) des Vorratsbehälters eine, zumindest Sicht-, Verbindung zur Elektronenquelle und eine elektrische Verbindung zur Oberfläche der Partikellage aufweist. Mittels der indirekten elektrischen Aufladung sind infolge der relativ großflächigen Induzierung geringerer Elektronendichte Ausgleichsprozesse möglich, die eine homogenere Emission unterstützen. Zu diesem Zweck ist eine die Oberfläche der Partikellage umfassende elektrisch leitfähige Fläche (d.h. eine elektrische Leitfähigkeit von mehr als ungefähr 10⁶ Siemens/Meter aufweisend) des Vorratsbehälters von Vorteil.

Zur indirekten elektrischen Aufladung kann z.B. bei der Verwendung einer Elektronenstrahlkanone der Elektronenstrahl Figuren (Bestrahlungsfigur) auf der elektrisch leitfähigen Fläche (d.h. eine elektrische Leitfähigkeit von mehr als 10⁶ Siemens/Meter aufweisend) des Vorratsbehälters und/oder der Sekundärelektronenstrahlquelle zeichnen, die eine optimale Verteilung der Elektronen gestatten (z.B. mittels der Steuerung). Beispielsweise kann der Rand eines elektrisch leitfähigen Vorratsbehälters und/oder der Sekundärelektronenstrahlquelle durch den Elektronenstrahl zumindest teilweise (d.h. vollständig oder teilweise) überstrichen werden, so dass die Elektronen vom Behälterrand großflächig in die Partikellage eingebracht werden.

Mögliche Ausgleichsprozesse zur elektrischen Ladungsverteilung in der Oberfläche der Partikellage und damit eine homogene Emission können entsprechend einer weiteren Ausgestaltung des Verfahrens dadurch unterstützt werden, dass während der elektrischen Aufladung ein Teil der induzierten negativen elektrischen Ladung über einen niederohmigen Leiter steuerbar abgeführt wird (z.B. mittels der Steuerung), wobei der Begriff des Leiters hier umfassender zu verstehen ist und gegebenenfalls mehrere Leiter und/oder Mess- und Steuereinheiten (z.B. Sensoren und Steuerung) umfassen kann. Der besagte Leiter steht mit der Oberfläche der Partikellage in elektrischem Kontakt. Alternativ oder zusätzlich kann der Leiter mit dem weiteren Behälter in elektrischem Kontakt stehen. Optional kann der durch die zumindest teilweise elektrisch leitfähige Wandung des Vorratsbehälters gebildet werden. Durch Verwendung eines Potentiometers ist die elektrische Ladungsableitung steuer- oder regelbar möglich. Dies ist von Vorteil, da die elektrische Ladungsableitung Einfluss hat auf die elektrischen Leistungsparameter der Elektronenquelle und somit diese anzupassen und eine Optimierung zwischen Elektronenzufuhr und Ableitung für ein optimales Beschichtungsergebnis möglich ist.

Das durch den Partikelemission-Prozess auf dem Substrat niedergeschlagene Partikelmaterial haftet durch Van-der-Waals-Kräfte auf dem Substrat und untereinander. Sofern durch die Applikation der Schicht unterstützt und/oder bedingt, wird die Emission von Feststoffpartikeln aus der Partikellage (Partikelmission) entsprechend verschiedener Ausgestaltungen des Verfahrens mit einer Verdampfung kombiniert.

Als Verdampfungsverfahren werden allgemein Verfahren aus dem Bereich der physikalischen Gasphasenabscheidung verstanden, bei denen das Beschichtungsmaterial durch Energiezufuhr verdampft wird und auf einem Substrat kondensiert. Dazu zählen die thermische Verdampfung, das Elektronen- und das Laserstrahlverdampfen, das Lichtbogenverdampfen, das Sputtern und die Molekularstrahlepitaxie.

Die Kombination beider Verfahren führt zu einer Mischschicht, die aus der Verdampfung bekannte Haftfestigkeit mit den Eigenschaften der aus den Feststoffpartikeln einer Partikellage gebildeten Schicht verknüpft. Für den ergänzenden Verdampfungsschritt sind die damit bekanntermaßen abscheidbaren metallischen, halbleitenden und anderen Materialien verwendbar, so dass im Ergebnis durch die große Auswahl des zu verdampfenden Materials und des zu emittierenden Partikelmaterials vielfache Möglichkeiten zur Verfügung stehen, Partikel zu funktionalisieren, insbesondere auch für verschiedene Ausgestaltungsformen von Lithium-Ionen-Batterien. Beispielsweise kann ein Metall, wie Titan, Kupfer, Aluminium, Mangan, Nickel, Kobalt, Eisen und/oder Lithium, mittels Verdampfung ergänzend abgeschieden werden. Alternativ oder zusätzlich kann mittels der Verdampfung auch Kohlenstoff, ein Halbleitermaterial (z.B. Silizium und/oder Gallium) und/oder ein Polymer (z.B. CMC, HPMC und/oder PVDF) abgeschieden werden.

Die ergänzende Verdampfung wird so ausgeführt, dass sich die beiden Materialien entweder bereits zwischen Behälter und Substrat, d. h. in Partikel- und Dampfwolke oder alternativ auf dem Substrat, mischen und/oder miteinander chemisch reagieren. Im ersten Fall werden Partikel- und Dampfstrom auf denselben Beschichtungsbereich gerichtet, so dass sich das zweite, ergänzende Beschichtungsmaterial im selben Beschichtungsbereich wie das erste, partikelförmige Beschichtungsmaterial niederschlägt. Als Beschichtungsbereich wird allgemein jener Bereich des Substrats bezeichnet, auf dem sich, gegebenenfalls begrenzt durch Blenden, schichtbildendes Material niederschlägt. Diese Ausgestaltung des Verfahrens ist für beliebige Verfahrensmodifikationen hinsichtlich Substratgeometrie und Substrattransport anwendbar.

Im Fall der Mischung und/oder chemischen Reaktion auf dem Substrat werden Partikel- und Dampfwolke nebeneinander erzeugt, so dass sich das zweite Beschichtungsmaterial in einem zweiten Beschichtungsbereich niederschlägt, welcher an den ersten Beschichtungsbereich des partikelförmigen Beschichtungsmaterial angrenzt oder sich mit diesem teilweise überdeckt. Damit sind alle Verfahrensausgestaltungen zwischen vollständig und teilweise überlappenden sowie getrennten Beschichtungsbereichen eingeschlossen. Zur Vermischung beider Materialien kommt es infolge des Transports des Substrats während der Beschichtung von einem in den anderen Beschichtungsbereich.

Gemäß verschiedenen Ausführungsformen kann eine Nachbehandlung der auf dem Substrat gebildeten Beschichtung (z.B. der darauf abgeschiedenen Feststoffpartikel, d.h. der applizierten Partikelschicht) erfolgen, z.B. bei einem Druck größer als ungefähr 300 mbar (Millibar) und/oder indem die auf dem Substrat gebildete Beschichtung mit einem Material (auch als Nachbehandlungsmaterial bezeichnet) beschichtet wird (z.B. aus der Lösung), z.B. mit einem haftverstärkendem Nachbehandlungsmaterial und/oder mit einem verkapselndem Nachbehandlungsmaterial. Das Nachbehandlungsmaterial kann beispielsweise ionenleitfähige Eigenschaften aufweisen.

Das Nachbehandlungsmaterial kann ein Polymer aufweisen oder daraus gebildet sein, z.B. wenn das Nachbehandlungsmaterial die Haftung der Feststoffpartikel an dem Substrat erhöhen soll (auch als Haftverstärkung bezeichnet) oder wenn das Nachbehandlungsmaterial die Feststoffpartikel verkapseln soll. Beispielsweise kann das Nachbehandlungsmaterial PVDF aufweisen oder daraus gebildet sein. Alternativ (z.B. wenn auf Fluor verzichtet werden soll) oder zusätzlich kann das Nachbehandlungsmaterial einen Zucker aufweisen oder daraus gebildet sein (z.B. wenn das Nachbehandlungsmaterial wasserlöslich sein soll), z.B. einen Vielfachzucker, z.B. Cellulose.

Optional kann das Nachbehandlungsmaterial aus der Lösung auf das Substrat aufgebracht werden (auch als Flüssigphasendeposition bezeichnet), z.B. wenn das Nachbehandlungsmaterial wasserlöslich ist. Ein wasserlösliches (z.B. fluorfreies) Nachbehandlungsmaterial kann ein ökologisches und/oder vereinfachtes Nachbehandeln ermöglichen. Die Flüssigphasendeposition kann ein kostengünstiges Nachbehandeln ermöglichen. Beispielsweise kann die Flüssigphasendeposition eine Sprühbeschichtung (auch bezeichnet als Aufsprühen Spray Coating), eine Vorhangbeschichtung (auch bezeichnet als Curtain Coating) und/oder eine Breitschlitzdüsen-Beschichtung (auch bezeichnet als Slot-Die-Coating) aufweisen oder daraus gebildet sein, z.B. unter Verwendung einer optionalen Schattenmaske.

Optional kann das Nachbehandeln aufweisen, das Substrat und/oder Nachbehandlungsmaterial zu erwärmen, z.B. auf oder über eine Schmelztemperatur und/oder Glasübergangstemperatur des Nachbehandlungsmaterials. Beispielsweise kann Zucker, z.B. HPMC, in einen flüssigen oder viskosen (fließfähigen) Zustand überführt werden, mit den Feststoffpartikeln in Kontakt gebracht sein oder werden und danach aushärten. Das Erwärmen kann beispielsweise aufweisen, das Substrat und/oder Nachbehandlungsmaterial auf eine Temperatur von mehr als ungefähr 100°C zu erwärmen, z.B. von mehr als ungefähr 150°C, z.B. in einem Bereich von ungefähr 180°C bis ungefähr 250°C. Anschaulich kann beispielsweise Zucker in einer klebrige Masse überführt werden, welche in einem ausgehärteten Zustand die Feststoffpartikel auf dem Substrat fixiert (z.B. damit verklebt).

Das Nachbehandeln der Beschichtung kann optional in einer Reaktivatmosphäre (z.B. aufweisend Sauerstoff und/oder Stickstoff oder daraus gebildet) oder in einer chemisch inerten Atmosphäre erfolgen. Die Reaktivatmosphäre kann beispielsweise ermöglichen, das Nachbehandlungsmaterial und/oder die Feststoffpartikel chemisch zu verändern, z.B. indem deren chemische Zusammensetzung verändert wird (z.B. indem ein chemisches Element der Reaktivatmosphäre in diese eingebaut wird).

Beispielsweise kann anschaulich eine Nachbehandlung der applizierten Partikelschicht außerhalb des Vakuums zur Erreichung höchherer Kohäsions- und Adhäsionsansprüche erfolgen. Beispielsweise können Materialien wie CMC (Carboxymethylcellulose) oder HPMC (Hydroxypropylmethylcellusose), optional in Form einer wässrigen Lösung, an Atmosphäre fein-dispers aufgesprüht werden. Optional kann zur weiteren Erhöhung bzw. Modifizierung der Schichtdichte des abgeschiedenen Aktivmaterials eine Trocknung und/oder Kalandrierung erfolgen.

Mit den bereitgestellten Ausgestaltungsvarianten des Verfahrens sind neben den homogenen chemischen Schichtzusammensetzungen auch Gradientenschichten herstellbar, bei denen sich die Schichtzusammensetzung mit der Schichtdicke ändert. Zu diesem Zweck sind Beschichtungsparameter zumindest einer Beschichtungskomponente zu variieren, um das Mischungsverhältnis mit zunehmender Schichtdicke auf einem begrenzten Substratabschnitt zu modifizieren.

Für die beschriebenen Verfahrensvarianten wird in Ausgestaltungen des Verfahrens die aus der Partikellage emittierte Materialmenge bestimmt aus der Menge der induzierten (d.h. in die Feststoffpartikel eingebrachten) Elektronen. Da sich, wie oben beschrieben, die Wirkung der die Partikelemission verursachenden Kräfte auf einzelne Partikel bezieht, existiert eine Korrelation der emittierten Materialmenge und der induzierten elektrischen Ladungen. Diese Korrelation kann messtechnisch und/oder zum Steuern bzw. Regeln verwendet werden, um die Schichtdicke der aufgestäubten Schicht oder bei einer Mischschicht des Anteils des emittierten Materials an der gesamten Schicht zu ermitteln. Abhängig von den verwendeten Materialien kann, gegebenenfalls unter Berücksichtigung der in derselben Zeit mit dem verdampften Material erzielbaren Schichtdicke, mit einer geeigneten Kennfeldbestimmung die Schichtdicke bestimmt werden und dies auch für poröse Materialien und z.B. darauf basierend das Beschichten gesteuert und/oder geregelt werden.

Gemäß verschiedenen Ausführungsformen kann eine elektrische Ladung pro Zeit (d.h. eine erste elektrische Stromstärke) auf Grundlage der Menge an Elektronen ermittelt werden, welche in die Feststoffpartikel eingebracht wird (diese kann z.B. bei der Elektronenstrahlverdampfung vorgegeben sein oder werden). Ferner kann eine zweite elektrische Stromstärke gemessen werden, welche durch den Behälter (z.B. einen Tiegel) hindurch und/oder von diesem zu einem elektrischen Bezugspotential fließt. Eine Differenz der ersten elektrischen Stromstärke und der zweiten elektrischen Stromstärke repräsentiert eine Menge an elektrischen Ladungen (z.B. pro Zeit), welche von den Feststoffpartikeln, die von dem Behälter weg beschleunigt werden (d.h. welche in den Ausbreitungsbereich emittiert werden), transportiert werden. Anschaulich kann somit ermittelt werden, wie groß der Anteil an Elektronen ist, welche mit den Feststoffpartikeln mit reisen. Unter Berücksichtigung der mittleren Abweichung von der Haupt-Ausbreitungsrichtung (z.B. des Raumwinkels) und/oder eines experimentellen Kalibrierungsfaktor (welcher z.B. anhand einer Untersuchung der Feststoffpartikel-Wolke ermittelt wird), kann eine Bestimmung der Schichtdicke erfolgen (eine Dicke der Partikelschicht) und diese darauf basierend gesteuert werden.

Alternativ oder zusätzlich kann eine Schichtdicke mittels eines Sensors (Schichtdicken-Sensor) gemessen werden. Der Schichtdicken-Sensor kann beispielsweise einen Schwingquarz aufweisen. Der Schichtdicken-Sensor kann an einer geeigneten Stelle angeordnet sein oder werden, z.B. in einem Bereich in den bei erfolgender Co-Verdampfung, kein oder nur sehr wenig Streudampf des Beschichtungsmaterials hingelangt. Ferner kann der Schichtdicken-Sensor eingerichtet sein, sich periodisch zu reinigen, z.B. indem die Feststoffpartikel in, zeitlichen, z.B. regelmäßigen, Abständen vom Schwingquarz entfernt werden, z.B. abgestrichen werden.

Eine Ausgestaltung der Vorrichtung zur Ausführung dieser Verfahrensvarianten weist zusätzlich zu den oben beschriebenen Komponenten zur Partikelmission der Partikellage eine Verdampfungsvorrichtung auf, welche der Verdampfung des Weiteren, zweiten Beschichtungsmaterials dient. Auch diese Vorrichtungskomponente umfasst einen Behälter zum Vorhalten des zweiten Beschichtungsmaterials sowie eine Verdampfungseinheit zu dessen Verdampfung. Sofern es die Art der Elektronenquelle gestattet, kann eine Elektronenquelle für beide Verfahrensteile verwendet werden. Separate Elektronenquellen, auch unterschiedlichen Typs, sind alternativ ebenfalls möglich.

Zur zeitlichen oder räumlichen Verknüpfung beider Beschichtungsprozesse ist die Verdampfungsvorrichtung (Materialdampfquelle) relativ zur Partikelemission-Vorrichtung (Partikelwolkenquelle) derart angeordnet, dass sich das zweite Beschichtungsmaterial im selben Beschichtungsbereich wie das erste, partikelförmige Beschichtungsmaterial niederschlägt oder in einem daran angrenzenden zweiten Beschichtungsbereich. Dies kann durch eine gezielte Ausrichtung der Ausbreitungscharakteristik beider Materialwolken relativ zueinander erfolgen, beispielsweise durch winklige Anordnung, bezogen auf die Substratoberfläche (beispielsweise bei einem sublimierenden Beschichtungsmaterial), gegebenenfalls auch unter Verwendung von Blenden und/oder durch die räumliche Anordnung zueinander.

Die Bezeichnung der beiden Komponenten der Beschichtungsvorrichtung als Partikelemission- bzw. Verdampfungsvorrichtung dient lediglich der Unterscheidung anhand des Verfahrens zur Überführung in die jeweilige Materialwolke. Bei beiden handelt es sich dennoch um einen Beschichtungsvorgang.

Sofern die beiden Varianten der Verbindung beider Beschichtungsvorgänge durch eine räumliche Anordnung erfolgt, stehen verschiedene Ausführungsformen der Beschichtungsvorrichtungen zur Verfügung. So sind dieselben Beschichtungsbereiche erzielbar, indem einer der Behälter im anderen angeordnet ist. Eine zentrale Anordnung des einen im anderen Behälter ist für eine vollständige Überdeckung beider Wolken bevorzugt. Indem der innen liegende Behälter an den Rand des äußeren gesetzt wird, kann eine teilweise Überlappung erzielt werden.

Beispielsweise kann der weitere Behälter in dem Behälter angeordnet sein oder an diesen angrenzen oder der Behälter kann in dem weiteren Behälter angeordnet sein oder an diesen angrenzen. Die Anordnung der zwei Behälter (Behälter und weiterer Behälter) zueinander kann an die Anforderungen des Beschichtungsprozesses und des Materials der Feststoffpartikel bzw. des Beschichtungsmaterials (Verdampfungsguts) erfolgen. Beispielsweise kann die benötigte Verdampfungsfläche (d.h. die Querschnittsfläche des weiteren Bereichs) größer sein, als die Partikelemission-Fläche (d.h. die Querschnittsfläche des Bereichs). Beispielsweise können gemäß verschiedenen Ausführungsformen mehrere Verdampfungspunkte mittels einer Elektronenstrahlkanone bereitgestellt sein oder werden, oder sogar mehr als eine Elektronenstrahlkanone auf das Verdampfungsgut gerichtet sein.

Die beiden Wolken können auseinander gerückt sein oder werden, wenn in einer alternativen Ausführungsform der Partikelbehälter und der zweite Behälter nebeneinander, in Richtung des Transportwegs des Substrats betrachtet, angeordnet sind, so dass während des Transports erst der eine, dann der andere Beschichtungsbereich durchfahren wird.

Die Erfindung soll anhand verschiedener Ausgestaltungen näher erläutert werden. Die zugehörigen Zeichnungen zeigen in
Fig. 1A und Fig. 1B eine Vorrichtung in Seitenansicht und Draufsicht zur indirekten elektrischen Ladungsinduzierung;
Fig. 2A und Fig. 2B eine Vorrichtung in Seitenansicht und Draufsicht zur direkten elektrischen Ladungsinduzierung;
Fig. 3A und Fig. 3B eine Ausführungsform der erfindungsgemäßen Vorrichtung in Seitenansicht und Draufsicht zur gleichzeitigen Partikelemission und Verdampfung bei indirekter elektrischer Ladungsinduzierung in die Partikellage;
Fig. 4A und Fig. 4B eine alternative Ausführungsform der erfindungsgemäßen Vorrichtung in Seitenansicht und Draufsicht zur gleichzeitigen Partikelemission und Verdampfung bei indirekter elektrischer Ladungsinduzierung in die Partikellage;
Fig. 5A und Fig. 5B jeweils ein Substrat gemäß verschiedenen Ausführungsformen in Draufsicht auf die zu beschichtende Oberfläche;
Fig. 6A und Fig. 6B jeweils eine Stapeleinheit einer Brennstoffzelle in einem Verfahren gemäß verschiedenen Ausführungsformen in Seitenansicht oder Querschnittsansicht;
Fig. 7A und Fig. 7B jeweils eine Akkumulatorzelle eines Akkumulators in einem Verfahren gemäß verschiedenen Ausführungsformen in Seitenansicht oder Querschnittsansicht;
Fig. 8A einen Kondensator in einem Verfahren gemäß verschiedenen Ausführungsformen in Seitenansicht oder Querschnittsansicht;
Fig. 8B eine Beschichtungsvorrichtung in einem Verfahren gemäß verschiedenen Ausführungsformen in Seitenansicht oder Querschnittsansicht;
Fig. 9 eine Beschichtungsvorrichtung in einem Verfahren gemäß verschiedenen Ausführungsformen in Seitenansicht oder Querschnittsansicht;
Fig. 10 eine Beschichtungsvorrichtung in einem Verfahren gemäß verschiedenen Ausführungsformen in Seitenansicht oder Querschnittsansicht;
Fig. 11A und Fig. 11B jeweils eine Beschichtungsvorrichtung in einem Verfahren gemäß verschiedenen Ausführungsformen in Seitenansicht oder Querschnittsansicht;
Fig. 12A und Fig. 12B jeweils eine Schichtanordnung in einem Verfahren gemäß verschiedenen Ausführungsformen in Seitenansicht oder Querschnittsansicht;
Fig. 13 ein Verfahren gemäß verschiedenen Ausführungsformen in einem schematischen Ablaufdiagram;
Fig. 14 eine alternative Ausführungsform der erfindungsgemäßen Vorrichtung in Draufsicht zur gleichzeitigen Partikelemission und Verdampfung bei direkter elektrischer Ladungsinduzierung in die Partikellage;
Fig. 15 ein Verfahren gemäß verschiedenen Ausführungsformen zu Erzeugung des Sekundärelektronenstrahls zur indirekten Einkopplung der Elektronen ins Pulvermaterial über den Behälterrand;
Fig. 16 ein Verfahren gemäß verschiedenen Ausführungsformen zu Erzeugung des Sekundärelektronenstrahls zur indirekten Einkopplung der Elektronen ins Pulvermaterial über einen separaten Elektronenbeaufschlagungskörper;
Fig. 17 Feststoffpartikel in einem Behälter gemäß verschiedenen Ausführungsformen zur Verdeutlichung der Deagglomeration durch Keramikbehältnisse; und
Fig. 18 eine Feststoffpartikelschicht (z.B. eine dichte MCMB-G15-Partikelschicht) gemäß verschiedenen Ausführungsformen in einer Laser-Scanning-Mikroskopie-Aufnahme (LSM).

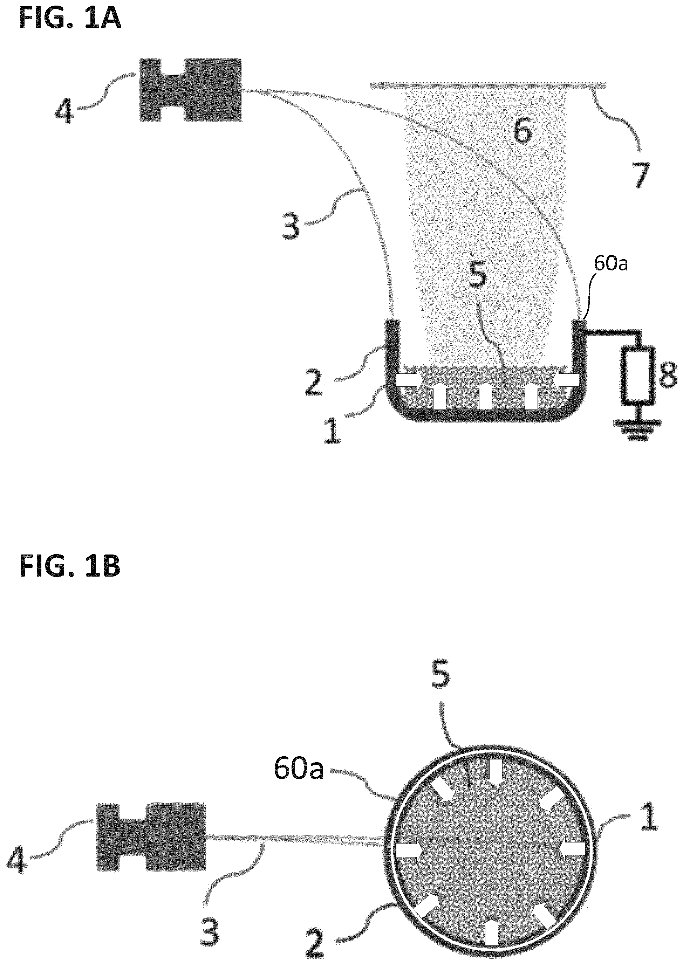

Die Vorrichtung gemäß Fig. 1A zeigt einen Partikelbehälter 2 (auch als Behälter 2 bezeichnet), beispielsweise aus Graphit oder einem Metall, beispielsweise gekühlt oder ungekühlt, bewegend oder statisch, mit einem Vorrat an partikelförmigem Beschichtungsmaterial 5, der Partikellage 5. Mittels einer Elektronenstrahlkanone 4 wird ein Elektronenstrahl 3 erzeugt, der eine Bestrahlungsfigur 60a überstreicht, die genau den oberen Rand des Partikelbehälters 2 zumindest teilweise überstreicht. Infolge der Elektronenstrahlfigur (Bestrahlungsfigur 60a) werden auf den Partikelbehälter 2 Elektronen übertragen, die einen Elektronenfluss 1 in die Partikellage 5 verursachen (durch Pfeile dargestellt). Dieser Elektronenfluss 1 führt zu einer elektrischen Oberflächenladung der Partikellage 5 und infolge dessen zur elektrostatischen Partikelemission aus der oberflächlichen Schicht der Partikellage 5, dargestellt durch eine Partikelwolke 6. Aufgrund der energiereichen Partikelemission, die in allen Verfahrensausgestaltungen durch die Zahl der Elektronen pro Partikel beeinflusst werden kann, erstreckt sich die Partikelwolke 6 bis zum Substrat 7, wo sich das Partikelmaterial niederschlägt.

Die Darstellung in den Figuren stellt nur schematisch die wesentlichen Komponenten der Vorrichtungen dar und erhebt keinen Anspruch auf Vollständigkeit oder Maßstäblichkeit. So kann beispielsweise der Abstand zwischen Substrat 7 und Partikelbehälter 2 von der Darstellung deutlich abweichen.

Der Partikelbehälter ist über ein Potentiometer 8 geerdet, so dass ein Teil der induzierten Elektronen abfließen kann. Der damit verknüpfte Ausgleichsprozess der in die Partikellage 5 induzierten Elektronen führt zu einer Homogenisierung der elektrischen Oberflächenladung und damit zu einer gleichmäßigeren Beschichtung auch größerer Flächen.

Fig. 1B stellt diesen Vorgang in der Draufsicht dar.

Mit der dargestellten Vorrichtung ist bei einer elektrischen Elektronenstrahlleistung von nur 10 kW, einer Applikationszeit von 12, 5 ms und einem Stromteilerverhältnis von 100 eine Partikelmenge von 1,6 cm3 Graphit mit einem einzelnen Partikelemission-Impuls, vergleichbar einer begrenzten Explosion an der Oberfläche der Partikellage, Partikel-emittierbar. Die angegebenen Parameter sind für das erfindungsgemäße Verfahren Stellgrößen, um insbesondere mittels einer kontinuierlichen Partikelemission eine homogene Substratbeschichtung zu erzielen.

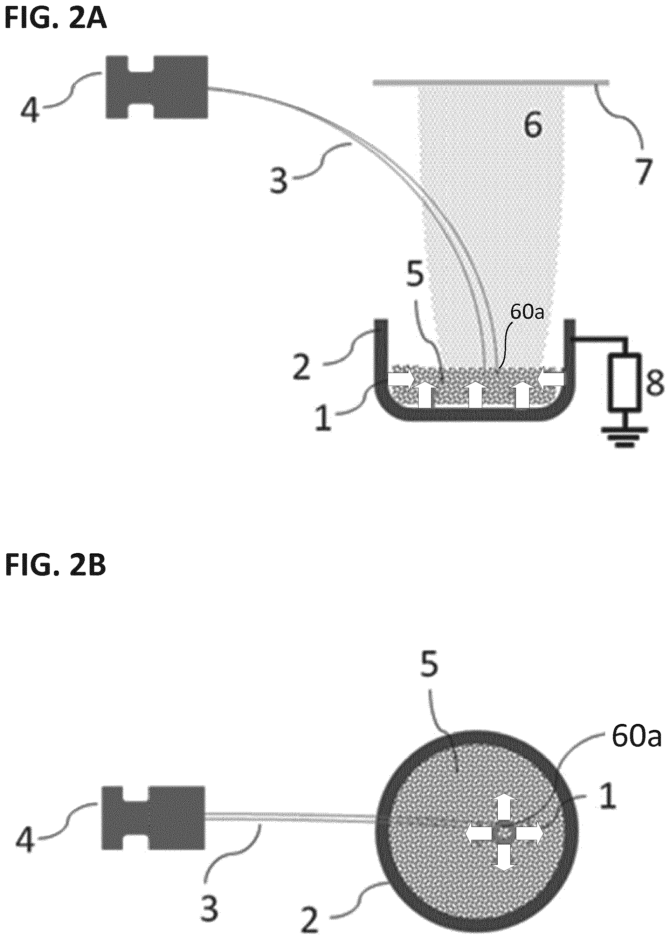

In den Fig. 2A und 2B ist die gleiche Vorrichtung, jedoch mit einer direkten Elektroneninduzierung, indem der Elektronenstrahl 3 direkt auf die Partikellage 5 gerichtet wird. Der Elektronenfluss 1 ist in diesem Fall auf die Behälterwandung gerichtet, so dass auch hier elektrische Ladung über den Potentiometer 8 abfließen und Ausgleichsprozesse, wie oben beschrieben, stattfinden können. In Fig. 2B ist der im Vergleich zur indirekten elektrischen Ladungsinduzierung abweichende Elektronenfluss 1 in der Partikellage 5 sichtbar.

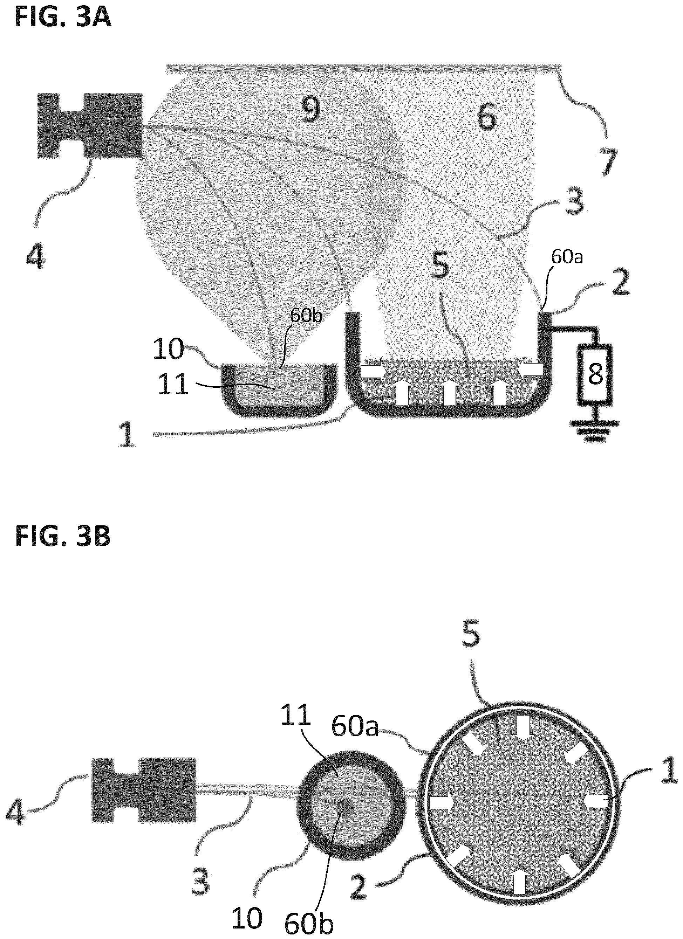

Die erfindungsgemäße Ausgestaltung gemäß der Fig. 3A und Fig. 3B unterscheidet sich von der Fig. 1A und Fig. 1B durch eine ergänzende Verdampfungsvorrichtung. Soweit beide Vorrichtungen übereinstimmen, wird auf die obigen Darlegungen verwiesen. Die Verdampfungsvorrichtung umfasst einen zweiten Behälter 10, einen Tiegel, in welchem das zweite Beschichtungsmaterial, z.B. Titan, vorgehalten wird. Zur Partikelemission aus der Partikellage und Verdampfung des zweiten Beschichtungsmaterials 11 wird dieselbe Elektronenstrahlkanone 4 verwendet. Alternativ können mehrere Elektronenstrahlkanonen 4 verwendet werden, z.B. für jeden Behälter eine Elektronenstrahlkanone 4 oder mehrere Elektronenstrahlkanonen 4.

Deren Elektronenstrahl 3 wird abwechselnd auf beide auf den Rand des Partikelbehälters 2 und die Oberfläche des zweiten Beschichtungsmaterials 11 gerichtet, so dass sich über diesem eine Dampfwolke 9 ausbildet und das zweite Beschichtungsmaterial 11 auf dem Substrat 7 kondensiert. Der Elektronenstrahl 4 bildet im zweiten Beschichtungsmaterial 11 an seinem Auftreffpunkt 60 eine kleinflächige Dampfquelle aus (in Fig. 3B durch einen Punkt dargestellt).

Beide Wolken 6, 9 bilden nebeneinander liegende Beschichtungsbereiche aus, die an der Schnittlinie zwischen der jeweiligen Wolke 6, 9 und dem Substrat 7 erkennbar sind. Das mittels einer Substrattransportvorrichtung (nicht dargestellt) in Richtung (durch einen Pfeil dargestellt) der Partikelwolke 6 weiter transportierte Substrat 7 wird unmittelbar darauffolgend der Partikelwolke 6 ausgesetzt, so dass sich eine Mischschicht (nicht dargestellt) aus beiden Beschichtungsmaterialen ausbildet.

Im Unterschied zur Ausgestaltung der **Fig. 3A** und **3B** ist der zweite Behälter 10 in der Auszentral im Partikelbehälter 2 angeordnet. Infolge dessen bildet sich die Dampfwolke 9 in der Partikelwolke 6 aus und beide Beschichtungsmaterialien 5 und 11 scheiden sich im selben Beschichtungsbereich ab.

Gemäß verschiedenen Ausführungsformen kann mittels des Einbringens von Elektronen in die Feststoffpartikel 5 eine Übertragung der Feststoffpartikel 5 auf das Substrat 7, z.B. auf eine Gasdiffusionsschicht, bewirkt werden. Die auf das Substrat 7 übertragenen Feststoffpartikel 5 können eine Schicht (anschaulich Beschichtung, auch als Partikelschicht bezeichnet) bilden.

Die Partikelschicht kann anschaulich eine Funktionsbeschichtung bereitstellen, welche die physikalischen und/oder chemischen Eigenschaften des Substrats 7 verändert.

Gemäß verschiedenen Ausführungsformen kann eine Schicht 7 auf dem Substrat 7 bereitgestellt werden, wobei die Schicht mehrere Feststoffpartikel 5 aufweist. Die Feststoffpartikel 5 können eine gasdurchlässige Schicht, z.B. eine poröse Schicht bilden. Gemäß verschiedenen Ausführungsformen kann die Schicht eine elektrische Leitfähigkeit aufweisen, welche größer ist als eine elektrische Leitfähigkeit des Substrats 7, z.B. der Gasdiffusionsschicht, z.B. größer als 10⁶ Siemens/Meter. Alternativ oder zusätzlich kann die Schicht 7 eine chemische Reaktivität (d.h. eine Geschwindigkeit, mit der eine Reaktion abläuft) aufweisen, welche kleiner ist als eine chemische Reaktivität des Substrats 7, z.B. der Gasdiffusionsschicht. Die chemische Reaktivität kann beispielsweise bezüglich eines Gases und/oder einer Flüssigkeit definiert sein, z.B. bezüglich Sauerstoff, Wasserstoff und/oder Wasser. Anschaulich kann die Schicht einen Korrosionsschutz bereitstellen.

Gemäß verschiedenen Ausführungsformen kann die Schicht hydrophob (z.B. superhydrophob) und/oder lipophob (z.B. superlipophob) sein, d.h. eine hydrophobe und/oder lipophobe Oberfläche aufweisen. Beispielsweise kann die Schicht amphiphob (z.B. superamphiphob), d.h. flüssigkeitsabweisend (z.B. hydrophob und lipophob) sein, d.h. eine amphiphobe Oberfläche aufweisen.

Beispielsweise kann die Schicht ein unpolares Material aufweisen oder daraus gebildet sein. Alternativ oder zusätzlich kann die Schicht eine hohe mikroskopische Rauhigkeiten bzw. eine große spezifische Oberfläche aufweisen, welche die Hydrophobie und/oder Lipophobie bewirkt. Die Hydrophobie und/oder Lipophobie der Schicht kann größer sein als eine Hydrophobie und/oder Lipophobie des Substrats 7, z.B. der Gasdiffusionsschicht.

Gemäß verschiedenen Ausführungsformen kann eine Elektronenstrahl-induzierte (indirekte) Trennung der Feststoffpartikel bereitgestellt sein oder werden. Anschaulich können Feststoffpartikel 5 der Partikellage beim Trennen der Feststoffpartikel 5 voneinander emittiert werden.

Es wird eine gleichzeitige Co-Verdampfung bereitgestellt, welche ein gasförmiges Beschichtungsmaterial 9 bereitstellt.

Gemäß verschiedenen Ausführungsformen kann die Schicht eine hohe spezifische Oberfläche mit bestimmten (vordefinierten) chemischen/physikalischen Eigenschaften aufweisen.

Gemäß verschiedenen Ausführungsformen können die Feststoffpartikel 5 ein hydrophobes (z.B. superhydrophobes) und/oder lipophobes (z.B. superlipophobes) Material aufweisen oder daraus gebildet sein. Alternativ oder zusätzlich kann die Schicht eine Rauheit aufweisen. Anschaulich kann mittels einer Rauheit eine hohe spezifische Oberfläche bereitgestellt sein oder werden.

Gemäß verschiedenen Ausführungsformen können die Feststoffpartikel 5 ein Polymer (z.B. Fluor basierende Polymermaterialien, z.B. Polytetrafluorethylen) aufweisen oder daraus gebildet sein. Alternativ oder zusätzlich können die Feststoffpartikel 5 Kohlenstoff aufweisen oder daraus gebildet sein, z.B. in Form von Graphit, einem Graphitkomposit, amorphem Kohlenstoff, und/oder einem Kohlenstoffkomposit.

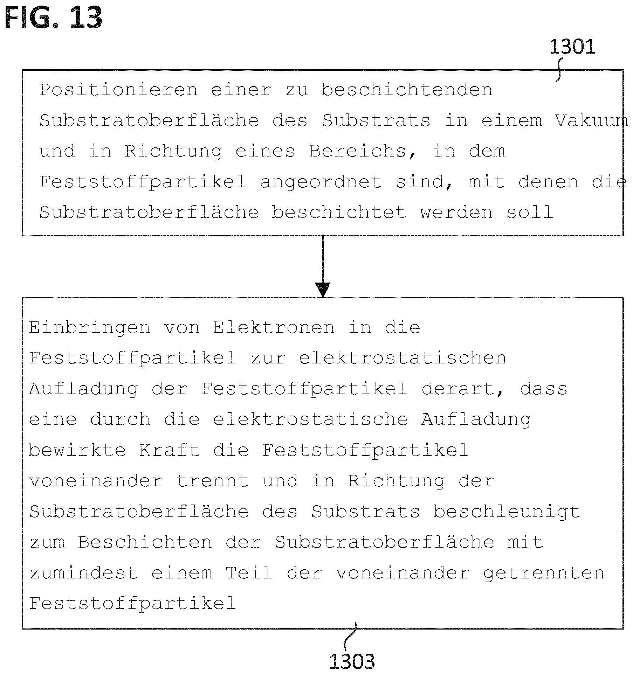

Gemäß verschiedenen Ausführungsformen kann die Schicht porös sein, d.h. Hohlräume aufweisen (vergleiche Fig.13). Beispielsweise kann die Schicht ein Netzwerk aus miteinander verbundenen Poren aufweisen, so dass diese gasdurchlässig ist. Beispielsweise kann die Schicht eine Porosität in einem Bereich von ungefähr 10% bis ungefähr 95% aufweisen, z.B. in einem Bereich von ungefähr 25% bis ungefähr 75%, z.B. von größer als ungefähr 40%, z.B. von größer als ungefähr 50%, z.B. von größer als ungefähr 60%, z.B. von größer als ungefähr 70%. Die Porosität kann als Verhältnis von Hohlraumvolumen zu Gesamtvolumen der Schicht verstanden werden.

Gemäß verschiedenen Ausführungsformen kann die Schicht eine Härte aufweisen, welche größer ist als eine Härte des Substrats 7, z.B. der Gasdiffusionsschicht.

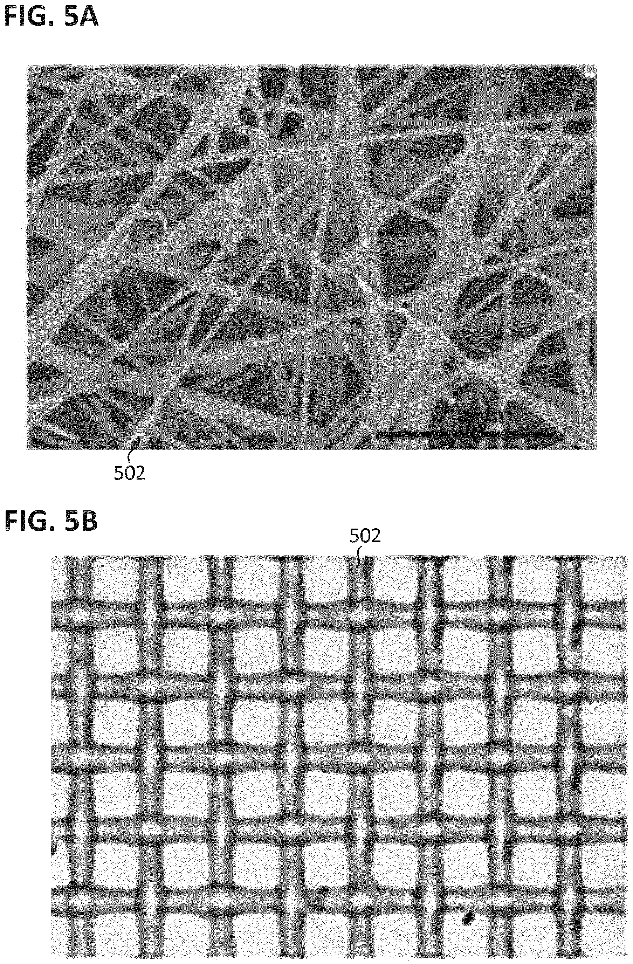

**Fig.5A** veranschaulicht eine Gasdiffusionsschicht (mit anderen Worten eine gasdurchlässige Schicht), aus mehreren Fasern 502, welche ungeordnet und miteinander verbunden sind (ein so genanntes Papier oder Filz, z.B. so genanntes Carbon Paper) und **Fig.5B** eine Gasdiffusionsschicht, aus mehreren Fasern, welche geordnet und miteinander verbunden sind (ein so genanntes Gewebe), z.B. in einem regelmäßigen Gitter (ein so genanntes mesh).

Eine Gasdiffusionsschicht kann zum Herstellen einer Brennstoffzelle verwendet werden. Eine Gasdiffusionsschicht stellt ausgehend von den Bipolarplatten eine gleichmäßige Verteilung der Reaktionsgase, wie Brennstoff (z.B. Wasserstoff oder Methan) auf der Anodenseite und Sauerstoff oder Luft auf der Kathodenseite bereit. Anschaulich kann eine Gasdiffusionsschicht eine hohe Gaspermeabilität aufweisen, z.B. gegenüber Reaktionsgasen, wie z.B. Wasserstoff und/oder Sauerstoff.

Gemäß verschiedenen Ausführungsformen können die Feststoffpartikel derart eingerichtet sein, dass die Partikelschicht, welche aus den Feststoffpartikeln gebildet wird, eine hydrophobe, lipophobe und/oder amphiphobe Oberfläche aufweist.

Gemäß verschiedenen Ausführungsformen kann eine Gasdiffusionsschicht derart mit Feststoffpartikeln beschichtet werden, dass diese eine ausreichend hohe elektrische Leitfähigkeit (z.B. von mehr als ungefähr 10⁶ Siemens/Meter) und/oder hohe Hydrophobie (Wasserabweisung) aufweist. Beispielsweise können intrinsisch nicht hydrophobe Polymergewebe oder intrinsisch nicht hydrophobe Metallgewebe mittels der Feststoffpartikel beschichtet werden. Die auf dem Polymergewebe und/oder Metallgewebe abgeschiedenen Feststoffpartikel können eine Oberflächenfunktionalisierung bzw. Oberflächenstrukturierung bereitstellen, welche anschaulich eine gute elektrische Leitfähigkeit (z.B. von mehr als 10⁶ ungefähr Siemens/Meter) und einen hohen Korrosionsschutz ermöglicht. Dazu können die Feststoffpartikel elektrisch leitfähig sein (d.h. eine elektrische Leitfähigkeit von mehr als 10⁶ Siemens/Meter aufweisen).

Anschaulich kann die Partikelschicht wasserabweisend (hydrophob) sein, wobei das von der Partikelschicht abperlende Wasser mögliche Korrosionsareale minimiert und im Gewebe nicht stagniert, so dass der Gasfluss bzw. die Gasflussversorgung störungsfrei und/oder effektiv ablaufen kann. Anschaulich kann dadurch vermieden werden, dass vom Wasser benetzte Oberflächen den Gasfluss stören, z.B. behindern, und damit die elektrische Zellspannung reduzieren.

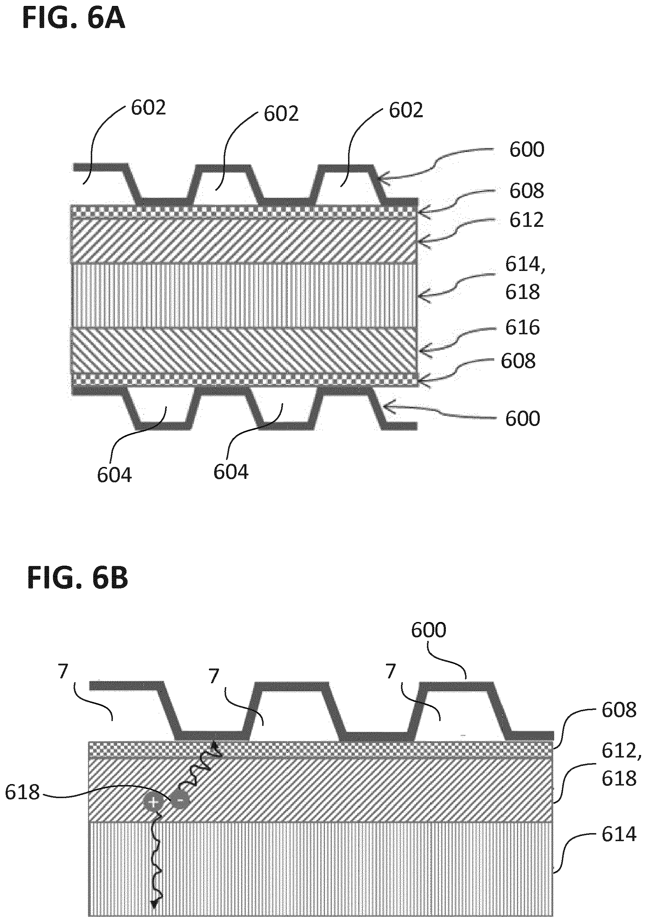

**Fig.6A** veranschaulicht eine Stapeleinheit einer Brennstoffzelle und verdeutlicht den schematischen Aufbau einer Brennstoffzelle, und **Fig.6B** eine Detailansicht der Stapeleinheit, wobei eine Brennstoffzelle eine oder mehrere der in Fig.6A veranschaulichten Stapeleinheiten aufweisen kann. Der gasförmige Brennstoff 602 (z.B. Wasserstoff) kann durch eine Gasdiffusionsschicht 608 (Gas-Diffusions-Layer, GDL), z.B. durch graphithaltiges elektrisch leitfähiges Papier (d.h. eine elektrische Leitfähigkeit von mehr als ungefähr 10⁶ Siemens/Meter aufweisend), auf der Oxidationsseite hindurch an die Anode 612 geführt werden, wohingegen der Sauerstoff 604 mittels eines weiteren GDL 608 feinverteilt an die Kathode 616 gelangen kann.

Dazu können Bipolarplatten 600, z.B. Edelstahlplatten 600, zur Verwendung in Brennstoffzellen vor dem Beschichtungsprozess mechanisch geprägt werden, wodurch die typischen Gaskanäle der Bipolarplatten entstehen können, wie in Fig.6A veranschaulicht ist.

Gemäß verschiedenen Ausführungsformen kann eine in der Brennstoffzelle erfolgte elektrische Ladungstrennung 618 durch die Elektrolyt-Membran 614 (Membran-Elektronen-Einheit: MEA), die Anode 612 (oder die Kathode 616) und die GDL 608 hindurch mittels der Bipolarplatten 600 abgegriffen oder kontaktiert werden, so dass eine Stapeleinheit einer Brennstoffzelle einen geringen Innerwiderstand und eine hohe elektrische Leistungsausbeute aufweisen kann.

Gemäß verschiedenen Ausführungsformen können verschiedene Teile der Stapeleinheit mit Feststoffpartikeln beschichtet sein oder werden, was eine Verbesserung der Zelleffizienz bewirken kann.

Gemäß verschiedenen Ausführungsformen können die Feststoffpartikel ein Katalysatormaterial aufweisen oder daraus gebildet sein. Dann kann das Substrat eine Elektrode 612, 616 (z.B. Anode 612 und/oder Kathode 616), ein Elektrolyt 614 (z.B. in Form einer Platte, einer Membran oder einer Folie), und/oder die Gasdiffusionsschicht 608 aufweisen oder daraus gebildet sein. Aus den Feststoffpartikeln kann dann eine Katalysatorschicht auf dem Substrat abgeschieden werden, welche die Feststoffpartikel aufweist. Die Katalysatorschicht kann eine chemische Reaktion der Reaktionsgase begünstigen und/oder eine Aufspaltung eines Reaktionsgases bewirken.

Alternativ oder zusätzlich können die Feststoffpartikel das Elektrolyt 614 (z.B. ein Feststoffelektrolyt) aufweisen oder daraus gebildet sein. Dann kann das Substrat eine Elektrode 612, 616 (z.B. Anode 612 und/oder Kathode 616) und/oder die Gasdiffusionsschicht 608 aufweisen oder daraus gebildet sein. Aus den Feststoffpartikeln kann dann eine Elektrolytschicht auf dem Substrat abgeschieden werden, welche die Feststoffpartikel aufweist.

Alternativ oder zusätzlich können die Feststoffpartikel und das Beschichten derart eingerichtet sein, dass eine hydrophobe, lipophobe und/oder amphiphobe Schicht gebildet werden kann. Dann kann das Substrat eine Elektrode 612, 616 (z.B. Anode 612 und/oder Kathode 616), ein Elektrolyt 614 (z.B. in Form einer Platte, einer Membran oder einer Folie), und/oder die Gasdiffusionsschicht 608 aufweisen oder daraus gebildet sein. Aus den Feststoffpartikeln kann dann eine hydrophobe, lipophobe und/oder amphiphobe Schicht auf dem Substrat abgeschieden werden, welche die Feststoffpartikel aufweist.

Alternativ oder zusätzlich zu dem Elektrolyt 614 kann die Brennstoffzelle zwischen Anode 612 und Kathode 616 einen Separator 618 aufweisen. Dann kann das Substrat, alternativ oder zusätzlich zu dem Elektrolyt, den Separator 618 aufweisen, z.B. in Form einer Platte, einer Folie oder eines Vlieses.

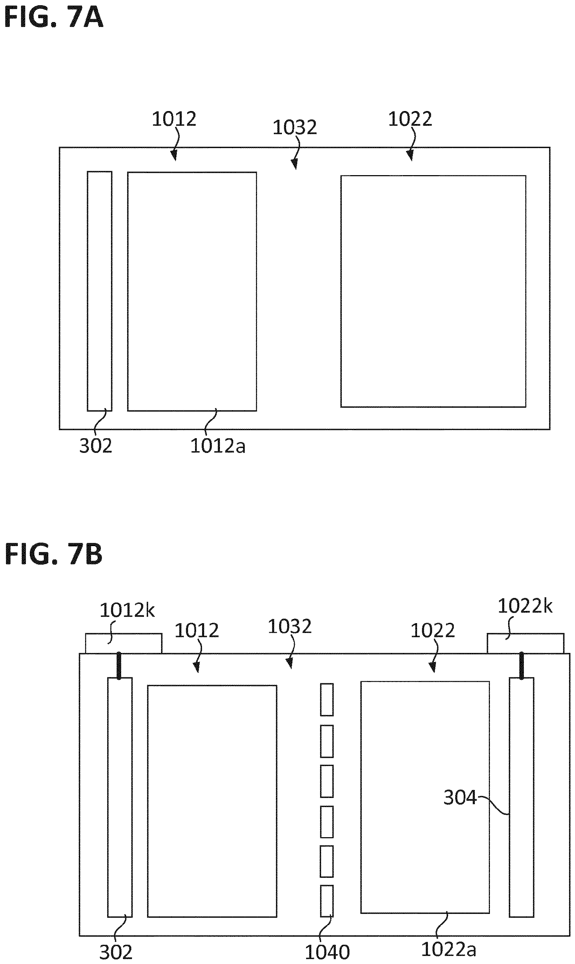

**Fig.7A** veranschaulicht eine Akkumulatorzelle eines Akkumulators gemäß verschiedenen Ausführungsformen in einer schematischen Seitenansicht oder einer schematischen Querschnittsansicht. Ein Akkumulator kann eine Akkumulatorzelle oder mehrere Akkumulatorzellen aufweisen oder daraus gebildet sein.

Die Akkumulatorzelle kann gemäß verschiedenen Ausführungsformen eine erste Elektrode 1012 aufweisen, welche ein erstes chemisches Potential aufweist.

Die erste Elektrode 1012 kann je nach Herstellungsschritt verschiedene Komponenten und/oder Materialien aufweisen. Die erste Elektrode 1012 kann eine elektrische Stromsammlerstruktur 302 aufweisen, z.B. eine elektrisch leitende Folie (d.h. eine elektrisch Leitfähigkeit von mehr als ungefähr 10⁶ Siemens/Meter aufweisend), Folienstruktur oder Platte. Die elektrische Stromsammlerstruktur 302 kann eine Dicke aufweisen von weniger als 100 µm, z.B. weniger als ungefähr 50 µm, z.B. weniger als ungefähr 20 µm, z.B. weniger als ungefähr 10 µm, z.B. weniger als ungefähr 5 µm, z.B. in einem Bereich von ungefähr 10 µm bis ungefähr 30 µm.

Alternativ oder zusätzlich kann die erste Elektrode 1012 ein Aktivmaterial 1012a aufweisen, welches z.B. Feststoffpartikel gemäß verschiedenen Ausführungsformen aufweist oder daraus gebildet ist. Das Aktivmaterial 1012a der ersten Elektrode 1012 kann elektrisch leitend (d.h. eine elektrisch Leitfähigkeit von mehr als ungefähr 10⁶ Siemens/Meter aufweisend) mit der elektrischen Stromsammlerstruktur 302 verbunden sein oder werden, wobei das Aktivmaterial 1012a der ersten Elektrode 1012 das erste chemische Potential der ersten Elektrode 1012 bereitstellt (z.B. definiert).

Das Aktivmaterial 1012a der ersten Elektrode 1012, bzw. dessen Feststoffpartikel, kann (z.B. zum Bilden einer Kathode) beispielsweise Lithium-Eisen-Phosphat (LFPO) aufweisen oder daraus gebildet sein (z.B. in einer Lithium-Eisen-Phosphat-Akkumulatorzelle), Lithium-Mangan-Oxid (LMO) aufweisen oder daraus gebildet sein (z.B. in einer Lithium-Mangan-Oxid-Akkumulatorzelle) oder Vanadiumpentoxid (Vanadium(V)-oxid bzw. V₂O₅) aufweisen oder daraus gebildet sein oder Lithiumborat (z.B. LiBO₂) aufweisen oder daraus gebildet sein oder (z.B. zum Bilden einer Anode) Lithium-Titanat (LTO) aufweisen oder daraus gebildet sein (z.B. in einer Lithium-Titanat-Akkumulatorzelle). Für Lithium-Ionen-Akkumulator kann das Aktivmaterial 1012a auch als Lithiumverbindung-Aktivmaterial 1012a bezeichnet werden.

Zum Bilden einer Anode kann das Aktivmaterial 1012a der ersten Elektrode 1012, bzw. dessen Feststoffpartikel, beispielsweise ein Halbleitermaterial (z.B. Silizium), z.B. mit einer Partikelgröße von weniger als ungefähr 500 nm, z.B. weniger als ungefähr 150 nm, aufweisen oder daraus gebildet sein oder ein Kohlenstoff-Silizium-Komposit.

Zum Bilden einer Anode (z.B. einer Lithiumanode) kann das Aktivmaterial 1012a der ersten Elektrode 1012, bzw. dessen Feststoffpartikel, beispielsweise reines metallisches Lithium aufweisen oder daraus gebildet sein.

Ferner kann die Akkumulatorzelle eine zweite Elektrode 1022 aufweisen, welche ein zweites chemisches Potential aufweist.

Ferner kann die Akkumulatorzelle eine Verkapselung 1030 aufweisen, welche die erste Elektrode 1012 und die zweite Elektrode 1022 umgibt.

Zwischen der ersten Elektrode 1012 und der zweiten Elektrode 1022 kann sich eine elektrische Spannung ausbilden, z.B. wenn die Akkumulatorzelle geladen ist oder wird, welche ungefähr der Differenz zwischen dem ersten chemischen Potential und dem zweiten chemischen Potential entspricht.

Die elektrische Stromsammlerstruktur 302 kann anschaulich als elektrischer Stromsammler oder elektrischer Stromleiter fungieren zum Abgreifen der elektrischen Ladungen, welche durch einen lonenaustausch zwischen der ersten Elektrode 1012 und der zweiten Elektrode 1022 erfolgt, z.B. wenn sich die Akkumulatorzelle entlädt. Die Ionen, welche sich zwischen der ersten Elektrode 1012 und der zweiten Elektrode 1022 bewegen (lonenaustausch), können eine Umwandlung von gespeicherter chemischer Energie (z.B. wenn die Akkumulatorzelle geladen ist) in elektrische Energie bewirken, wobei die elektrische Energie eine elektrische Spannung an den Kontakten 1012k, 1022k bereitstellt.

Gemäß verschiedenen Ausführungsformen kann eine elektrische Spannung von mehr als ungefähr 1,2 Volt (V) bereitgestellt werden, z.B. von mehr als ungefähr 4 V. Elektrische Spannungen von mehr als ungefähr 4 V werden beispielsweise mittels Elektroden erreicht, welche Lithium-Titanat (beispielsweise als Teil der Anode) aufweisen.

Gemäß verschiedenen Ausführungsformen kann die elektrische Stromsammlerstruktur 302 der ersten Elektrode 1012 eine Metallfolie aufweisen, welche beidseitig beschichtet ist, z.B. mit Feststoffpartikeln, welche Kohlenstoff aufweisen oder daraus gebildet sind.

Alternativ oder zusätzlich kann das Aktivmaterial in Form von Feststoffpartikeln auf die Stromsammlerstruktur 302 aufgebracht sein oder werden, z.B. wie vorangehend beschrieben ist.

**Fig.7B** veranschaulicht eine Akkumulatorzelle in einem Verfahren gemäß verschiedenen Ausführungsformen in einer schematischen Seitenansicht oder einer schematischen Querschnittsansicht.

Gemäß verschiedenen Ausführungsformen kann die zweite Elektrode 1022 analog zu der ersten Elektrode 1012 eingerichtet sein oder werden mit einem von dem Aktivmaterial 1012a der ersten Elektrode 1012 verschiedenen Aktivmaterial 1012b.

Die zweite Elektrode 1022 kann je nach Herstellungsschritt verschiedene Komponenten und/oder Materialien aufweisen. Die zweite Elektrode 1022 kann eine elektrische Stromsammlerstruktur 304 aufweisen, z.B. eine elektrisch leitende Folie, Folienstruktur oder Platte. Die elektrische Stromsammlerstruktur 304 kann eine Dicke aufweisen von weniger als 100 µm, z.B. weniger als ungefähr 50 µm, z.B. weniger als ungefähr 20 µm, z.B. weniger als ungefähr 10 µm, z.B. weniger als ungefähr 5 µm, z.B. in einem Bereich von ungefähr 10 µm bis ungefähr 30 µm.

Alternativ oder zusätzlich kann die erste Elektrode 1012 ein Aktivmaterial 1022a aufweisen, welches z.B. Feststoffpartikel gemäß verschiedenen Ausführungsformen aufweist oder daraus gebildet ist. Das Aktivmaterial 1022a der zweiten Elektrode 1022 kann elektrisch leitend (d.h. eine elektrische Leitfähigkeit von mehr als 10⁶ Siemens/Meter aufweisend) mit der elektrischen Stromsammlerstruktur 304 verbunden sein oder werden, wobei das Aktivmaterial 1022a der zweiten Elektrode 1022 das zweite chemische Potential der zweiten Elektrode 1022 bereitstellt (z.B. definiert).

Das Aktivmaterial 1022a der zweiten Elektrode 1022 (z.B. die Anode), bzw. die Feststoffpartikel, kann bzw. können sich von dem Aktivmaterial 1012a der ersten Elektrode 1012 unterscheiden. Das Aktivmaterial 1022a der zweiten Elektrode 1022 kann beispielsweise Graphit (oder Kohlenstoff in einer anderen Konfiguration) aufweisen oder daraus gebildet sein, nanokristallines und/oder amorphes Silicium aufweisen oder daraus gebildet sein, Lithium-Titanat (Li₄Ti₅O₁₂) aufweisen oder daraus gebildet sein oder Zinndioxid (SnO₂) aufweisen oder daraus gebildet sein.

Gemäß verschiedenen Ausführungsformen kann die elektrische Stromsammlerstruktur 304 der zweiten Elektrode 1022 eine Metallfolie aufweisen, welche beidseitig beschichtet ist, z.B. mit Feststoffpartikeln, welche Kohlenstoff aufweisen oder daraus gebildet sind.

Ferner kann die Akkumulatorzelle einen ersten Kontakt 1012k aufweisen, welcher die erste Elektrode 1012 kontaktiert, und z.B. mit der Stromsammlerstruktur 302 der ersten Elektrode 1012 elektrisch leitend verbunden ist. Der erste Kontakt 1012k kann eine freiliegende Oberfläche aufweisen.

Ferner kann die Akkumulatorzelle einen zweiten Kontakt 1022k aufweisen, welcher die zweite Elektrode 1022 kontaktiert, und z.B. mit der Stromsammlerstruktur 302 der zweiten Elektrode 1022 elektrisch leitend verbunden ist. Der zweite Kontakt 1022k kann eine freiliegende Oberfläche aufweisen.

Zwischen dem ersten Kontakt 1012k und dem zweiten Kontakt 1022k kann sich eine elektrische Spannung ausbilden, z.B. wenn die Akkumulatorzelle geladen ist, welche ungefähr der Differenz zwischen dem ersten chemischen Potential und dem zweiten chemischen Potential entspricht.

Optional kann die Akkumulatorzelle einen Separator 1040 aufweisen. Der Separator 1040 kann die erste Elektrode 1012 und die zweite Elektrode 1022, mit anderen Worten die negative und positive Elektrode (d.h. Kathode und Anode), räumlich und elektrisch voneinander trennen. Der Separator 1040 kann jedoch für Ionen, welche sich zwischen der ersten Elektrode 1012 und der zweiten Elektrode 1022 bewegen, durchlässig sein. Die Ionen, welche sich zwischen der ersten Elektrode 1012 und der zweiten Elektrode 1022 bewegen, können eine Umwandlung von gespeicherter chemischer Energie (z.B. wenn die Akkumulatorzelle geladen ist) in elektrische Energie bewirken, wobei die elektrische Energie eine elektrische Spannung an den Kontakten 1012k, 1022k bereitstellt. Der Separator 1040 kann einen mikroporösen Kunststoff aufweisen oder daraus gebildet sein und/oder der Separator 1040 kann ein Vlies aus Glasfaser oder Polyethylen aufweisen oder daraus gebildet sein.

Gemäß verschiedenen Ausführungsformen kann der Separator 1040 eine Schicht aus Feststoffpartikeln aufweisen oder daraus gebildet sein, wie hierin beschrieben ist.

Gemäß verschiedenen Ausführungsformen kann die Folienstruktur ein Laminat aus zumindest einem Kunststoff und zumindest einem Metall aufweisen. Beispielsweise kann die Folienstruktur eine (z.B. einseitig oder zweiseitig) mit Feststoffpartikeln (welche ein Metall aufweisen oder daraus gebildet sind) beschichtete Kunststofffolie aufweisen oder daraus gebildet sein (metallbeschichtete Kunststofffolie).

Gemäß verschiedenen Ausführungsformen kann ein Verfahren Folgendes aufweisen: Aufbringen von Feststoffpartikeln, welche ein Aktivmaterial aufweisen oder daraus gebildet sind (kann auch als Elektrodenmaterial bezeichnet werden), von Feststoffpartikeln, welche ein Metall aufweisen oder daraus gebildet sind und/oder von Feststoffpartikeln, welche Kohlenstoff aufweisen oder daraus gebildet sind, auf ein Substrat (z.B. die elektrische Stromsammlerstruktur 302, 304) zum Bilden einer ersten Elektrode, welche ein erstes chemisches Potential aufweist; Zusammenfügen der ersten Elektrode mit einer zweiten Elektrode, wobei die zweite Elektrode ein zweites chemisches Potential aufweist; Verkapseln der ersten Elektrode und der zweiten Elektrode.

Gemäß verschiedenen Ausführungsformen kann das Verfahren ferner aufweisen: Bilden eines Kontakts 1012k zum Kontaktieren der elektrischen Stromsammlerstruktur 302 der ersten Elektrode 1012. Mit anderen Worten kann der Kontakt 1012k die elektrische Stromsammlerstruktur 302 der ersten Elektrode 1012 kontaktieren. Optional kann das Verfahren ferner aufweisen: Bilden eines weiteren Kontakts 1022k zum Kontaktieren der zweiten Elektrode 1022.

Gemäß verschiedenen Ausführungsformen kann das Verfahren ferner aufweisen: Bilden eines Elektrolyten 1032 zwischen der ersten Elektrode und der zweiten Elektrode zum Bereitstellen einer lonenaustausch-Verbindung zwischen der ersten Elektrode und der zweiten Elektrode. Ein Elektrolyt 1032 kann zumindest eines von Folgendem aufweisen: Salz (wie LiPF6 (Lithiumhexafluorophosphat), LiBF4 (Lithiumtetrafluorborat)), wasserfreies aprotisches Lösungsmittel (z. B. Ethylencarbonat, Diethylcarbonat, usw.), LiBOB (Lithium bis(oxalato)borat), Polyvinylidenfluorid (PVDF), Polyvinylidenfluorid-Hexafluorpropen (PVDF-HFP), Li3PO4N Lithiumphosphatnitrid.

Alternativ oder zusätzlich kann das Elektrolyt 1032 ein Festelektrolyt in Form der Feststoffpartikel aufweisen oder daraus gebildet sein. Das Festelektrolyt kann, bzw. die Feststoffpartikel können, ein organisches Polymer, z.B. Poly-3,4-ethylendioxythiophen (PEDOT) und/oder Polypyrrol (PPy), ein organisches Salz des Tetracyanochinodimethans (TCNQ), und/oder ein anorganisches Oxid, z.B. Mangandioxid MnO2, aufweisen oder daraus gebildet sein.

Die zweite Elektrode 1022 kann analog zu der ersten Elektrode 1012 gebildet sein oder werden. In dem Fall kann der weitere Kontakt die elektrische Stromsammlerstruktur 304 der zweiten Elektrode 1022 kontaktieren.

Gemäß verschiedenen Ausführungsformen können die Feststoffpartikel ein Katalysatormaterial aufweisen oder daraus gebildet sein. Dann kann das Substrat 7 eine Elektrode 1012, 1022 (z.B. deren elektrische Stromsammlerstruktur 302, 304), ein Elektrolyt 1032 (z.B. in Form einer Platte, einer Membran oder einer Folie), und/oder den Separator 1040 aufweisen oder daraus gebildet sein. Aus den Feststoffpartikeln kann dann eine Katalysatorschicht auf dem Substrat abgeschieden werden, welche die Feststoffpartikel aufweist.

Alternativ oder zusätzlich können die Feststoffpartikel ein Elektrolyt 1032 (z.B. ein Feststoffelektrolyt 1032) aufweisen oder daraus gebildet sein. Dann kann das Substrat 7 eine Elektrode 1012, 1222 (z.B. deren elektrische Stromsammlerstruktur 302, 304) und/oder den Separator 1040 aufweisen oder daraus gebildet sein. Aus den Feststoffpartikeln kann dann eine Elektrolytschicht auf dem Substrat abgeschieden werden, welche die Feststoffpartikel aufweist.

Gemäß verschiedenen Ausführungsformen können die Feststoffpartikel ein Aktivmaterial (Akkumulator-Aktivmaterial) aufweisen oder daraus gebildet sein. Dann kann das Substrat eine Elektrode 1012, 1222 (z.B. deren elektrische Stromsammlerstruktur 302, 304), ein Elektrolyt 1032 (z.B. in Form einer Platte, einer Membran oder einer Folie), und/oder den Separator 1040 aufweisen oder daraus gebildet sein. Aus den Feststoffpartikeln kann dann eine Aktivmaterialschicht auf dem Substrat abgeschieden werden, welche die Feststoffpartikel aufweist.

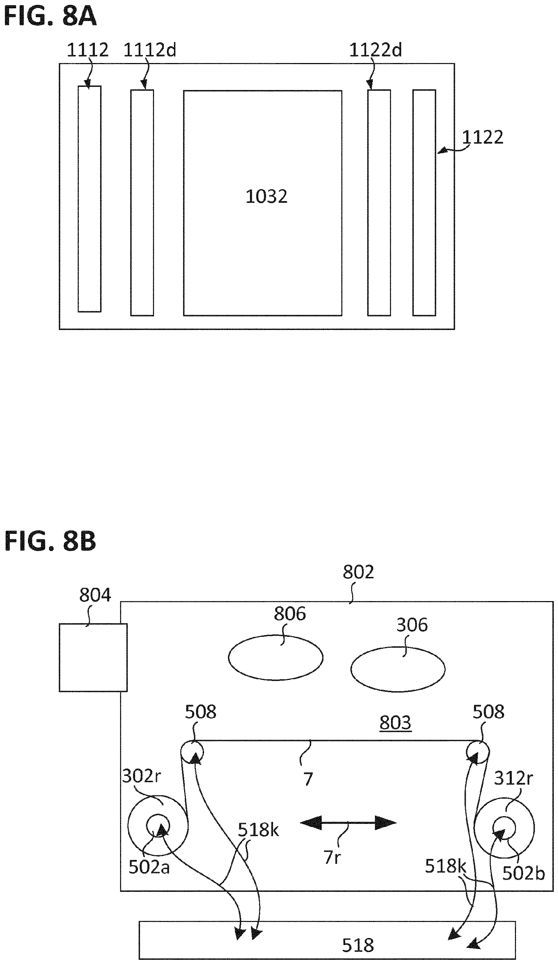

**Fig.8A** veranschaulicht einen Kondensator gemäß verschiedenen Ausführungsformen in einer schematischen Seitenansicht.

Der Kondensator kann eine erste Elektrode 1112 und eine zweite Elektrode 1122 aufweisen. Ferner kann der Kondensator ein Elektrolyt 1032 aufweisen, welches zwischen der ersten Elektrode 1112 und der zweiten Elektrode 1122 angeordnet ist. Ferner kann der Kondensator ein erstes Dielektrikum 1112d aufweisen, welches zwischen der ersten Elektrode 1112 und dem Elektrolyt 1032 angeordnet ist. Ferner kann der Kondensator ein zweites Dielektrikum 1122d aufweisen, welches zwischen der zweiten Elektrode 1122 und dem Elektrolyt 1032 angeordnet ist.

Gemäß verschiedenen Ausführungsformen können die Feststoffpartikel das Dielektrikum aufweisen oder daraus gebildet sein. Dann kann das Substrat 7 eine Elektrode 1112, 1122 oder das Elektrolyt 1032 (z.B. in Form einer Platte, einer Membran oder einer Folie) aufweisen oder daraus gebildet sein. Aus den Feststoffpartikeln kann dann eine Dielektrikumsschicht auf dem Substrat 7 abgeschieden werden, welche die Feststoffpartikel aufweist, z.B. zum Bilden des ersten Dielektrikums 1112d und/oder des zweiten Dielektrikums 1122d.

Alternativ oder zusätzlich können die Feststoffpartikel das Elektrolyt (ein Feststoffelektrolyt) aufweisen oder daraus gebildet sein. Dann kann das Substrat 7 eine Elektrode 1112, 1122 oder ein Dielektrikum 1112d, 1122d (z.B. in Form einer Platte, einer Membran oder einer Folie) aufweisen oder daraus gebildet sein. Aus den Feststoffpartikeln kann dann eine Elektrolytschicht auf dem Substrat 7 abgeschieden werden, welche die Feststoffpartikel aufweist, z.B. zum Bilden des Elektrolyten 1032.

Alternativ oder zusätzlich können die Feststoffpartikel ein Metall aufweisen oder daraus gebildet sein. Dann kann das Substrat 7 eine Elektrode 1112, 1122 oder ein Dielektrikum 1112d, 1122d (z.B. in Form einer Platte, einer Membran oder einer Folie) aufweisen oder daraus gebildet sein. Aus den Feststoffpartikeln kann dann eine poröse Metallschicht auf dem Substrat 7 abgeschieden werden, welche die Feststoffpartikel aufweist, z.B. zum Vergrößern der Oberfläche der Elektrode 1112, 1122. Beispielsweise kann die Oberfläche der Elektrode 1112, 1122 mittels der Feststoffpartikel derart vergrößert sein oder werden, dass der Kondensator ein Superkondensator ist. Beispielsweise kann der Superkondensator eine Elektrode 1112, 1122 aufweisen, deren Oberfläche mehr als ungefähr das 10000-fache, z.B. mehr als ungefähr das 100000-fache, der Oberfläche einer planaren Ebene ist, welche die Ausdehnung der Elektrode 1112, 1122 aufweist.

**Fig.8B** veranschaulicht eine Beschichtungsanordnung gemäß verschiedenen Ausführungsformen in einer schematischen Seitenansicht.

Gemäß verschiedenen Ausführungsformen kann die Beschichtungsanordnung eine Vakuumkammer 802 aufweisen, welche zum Erzeugen eines Vakuums eingerichtet sein kann.

Dazu kann die Vakuumkammer 802 mit einem Pumpensystem 804 (aufweisend zumindest eine Hochvakuumpumpe) gekoppelt sein, so dass innerhalb der Vakuumkammer 802 ein Vakuum (d.h. ein Druck kleiner als 0,3 bar) und/oder ein Druck in einem Bereich von ungefähr 10⁻³ mbar bis ungefähr 10⁻⁷ mbar (mit anderen Worten Hochvakuum) oder ein Druck von kleiner als Hochvakuum, z.B. kleiner als ungefähr 10⁻⁷ mbar (mit anderen Worten Ultrahochvakuum) bereitgestellt sein oder werden kann.

Ferner kann die Vakuumkammer 802 derart eingerichtet sein, dass die Umgebungsbedingungen (die Prozessbedingungen) innerhalb der Vakuumkammer 802 (z.B. Druck, Temperatur, Gaszusammensetzung, usw.) eingestellt oder geregelt werden können, z.B. während des Beschichtens. Die Vakuumkammer 802 kann dazu beispielsweise luftdicht, staubdicht und/oder vakuumdicht eingerichtet sein oder werden. Beispielsweise kann der Vakuumkammer 802 ein Gas mittels einer Gaszuführung zugeführt werden zum Bilden einer Prozessatmosphäre in der Vakuumkammer 802.

In der Vakuumkammer 802 kann ein Beschichtungsbereich 803 angeordnet sein. Ferner kann in der Vakuumkammer 802 eine Beschichtungsvorrichtung 306 zum Erzeugen eines materiellen Stroms (z.B. Massestrom oder Volumenstrom) an Feststoffpartikeln in den Beschichtungsbereich 803 hinein angeordnet sein, d.h. diese kann Feststoffpartikel in den Beschichtungsbereich 803 hinein emittieren. Die Beschichtungsvorrichtung 306 kann den materiellen Strom an Feststoffpartikeln derart erzeugen, dass sich dieser in den Beschichtungsbereich 803 hinein ausbreiten kann. Mit anderen Worten können die von der Beschichtungsvorrichtung 306 bereitgestellten Feststoffpartikel in den Beschichtungsbereich 803 strömen.

Ferner kann die Beschichtungsanordnung eine Abwickelwalze 502a zum Abwickeln eines Substrats 7, z.B. der Folienstruktur, welches in den Beschichtungsbereich 803 hineingebracht wird (z.B. in die Vakuumkammer 802 hinein), aufweisen. Ferner kann die Beschichtungsanordnung eine Aufwickelwalze 502b zum Aufwickeln des Substrats 7 aufweisen, welches aus dem Beschichtungsbereich 803 herausgebracht wird.

Ferner kann die Beschichtungsanordnung eine Vielzahl von Transportwalzen 508 aufweisen, welche einen Transportpfad definieren, entlang dessen das Substrat 7 zwischen der Abwickelwalze 502a und der Aufwickelwalze 502b durch den Beschichtungsbereich 803 hindurch transportiert wird.

Ferner kann die Beschichtungsanordnung ein Antriebssystem 518 aufweisen, welches zumindest mit einem Teil der Vielzahl von Transportwalzen 508 (Transportrollen) der Abwickelwalze 502a und der Aufwickelwalze 502b gekoppelt ist. Beispielsweise kann das Antriebssystem 518 mittels Ketten, Riemen oder Zahnrädern mit den Walzen 508, 502a, 502b (d.h. jeder der Transportwalzen des Großteils der Vielzahl von Transportwalzen 508, der Abwickelwalze 502a und der Aufwickelwalze 502b) gekoppelt sein.

Gemäß verschiedenen Ausführungsformen kann die Vielzahl von Transportwalzen 508 zumindest eine Umlenkwalze zum Umlenken des Transportpfads quer zu einer Rotationsachse der Umlenkwalze aufweisen.

Ferner kann zumindest die Vielzahl von Transportwalzen 508 zumindest eine Breitstreckwalze zum Spannen des Substrats 7 entlang einer Rotationsachse der Breitstreckwalze aufweisen. Eine Breistreckwalze kann beispielsweise ein spiralförmiges Profil auf deren Mantelfläche aufweisen oder leicht gekrümmt sein, so dass darüber hinweg laufendes Substrat 7 nach außen gespannt wird. Somit kann eine Faltenbildung in dem Substrat 7 gehemmt werden.

Gemäß verschiedenen Ausführungsformen kann die Beschichtungsanordnung optional eine oder mehrere Ätzvorrichtungen 806 aufweisen, mit der das Entfernen einer Oberflächenschicht des Substrats 7 erfolgt. Anschaulich kann damit die Oberfläche des Substrats 7 geätzt werden. Die eine oder mehreren Ätzgasvorrichtungen 806 können eine oder mehrere lonenstrahlquellen, eine oder mehrere Plasmaquellen und/oder eine oder mehrere Ätzgasquellen aufweisen oder daraus gebildet sein.

Die Vielzahl Transportrollen kann gemäß verschiedenen Ausführungsformen in der Vakuumkammer 802 angeordnet sein. Alternativ können zumindest die Abwickelwalze 502a und/oder die Aufwickelwalze 502b außerhalb der Vakuumkammer 802 angeordnet sein. Beispielsweise kann die Vakuumkammer 802 einen Zugangsbereich und/oder einen Ausgangsbereich aufweisen, durch welchen das Substrat 7 hindurch transportiert werden kann. Beispielsweise können der Zugangsbereich und/oder der Ausgangsbereich mit weiteren Kammern, z.B. Vorvakuumkammern oder Vakuumkammern, gekoppelt (vakuumtechnisch) sein, welche zusammen Teil einer Beschichtungsanordnung sein können.

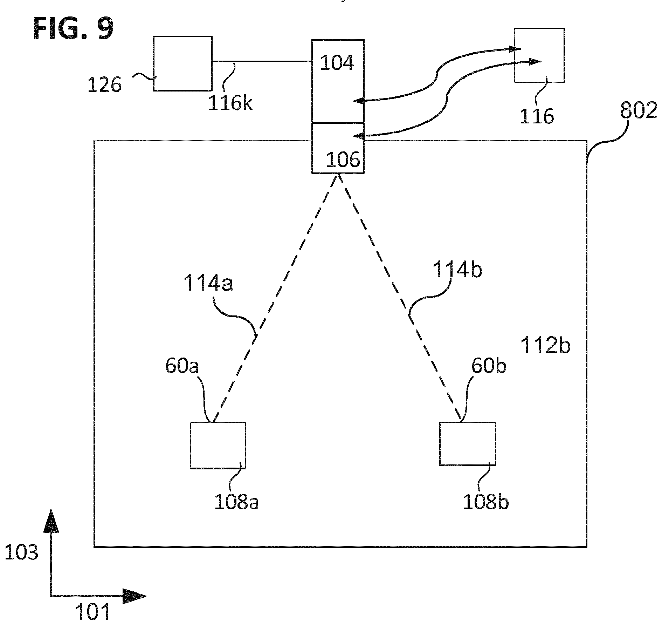

**Fig.9** veranschaulicht eine Beschichtungsanordnung gemäß verschiedenen Ausführungsformen in einer schematischen Seitenansicht.

Gemäß verschiedenen Ausführungsformen kann die Beschichtungsanordnung eine Vakuumkammer 802, bzw. eine Vakuumprozesskammer 802, aufweisen, in welcher mehrere Auftreffbereiche 108a, 108b angeordnet sind. Ferner kann die Beschichtungsanordnung mindestens eine Elektronenstrahlquelle 104 (z.B. eine Elektronenstrahlquelle oder z.B. mehrere Elektronenstrahlquellen) aufweisen. Dafür kann die Elektronenstrahlquelle 104 in einem Hochleistungsmodus betrieben werden, in welchem diese einen Elektronenstrahl 114a, 114b mit mehr als ungefähr 10 kW bereitstellt.

In zumindest einem der Auftreffbereiche 108a, 108b können Feststoffpartikel angeordnet sein.

Ferner kann die Beschichtungsanordnung eine Ablenkanordnung 106 aufweisen, welche mit der Elektronenstrahlquelle 104 gekoppelt sein kann. Die Elektronenstrahlquelle 104 und die Ablenkanordnung 106 können derart eingerichtet sein, dass der Elektronenstrahl 114a, 114b in verschiedene Bereiche 108a, 108b (Auftreffbereiche) in der Vakuumkammer 802 abgelenkt werden kann.

Ferner kann die Beschichtungsanordnung eine Steuerung 116 aufweisen, welche mit der Elektronenstrahlquelle 104 gekoppelt ist. Die Steuerung 116 kann eingerichtet sein, Messwerte (z.B. von einem Sensor) zu ermitteln und zu verarbeiten, z.B. indem die Steuerung 116 Daten (Messdaten) auf Grundlage der Messwerte erzeugt, welche die Messwerte repräsentieren.

Gemäß verschiedenen Ausführungsformen kann in der Vakuumkammer 802 ein Vakuum 112b im Bereich des Hochvakuums oder des Ultrahochvakuums bereitgestellt sein oder werden.

Gemäß verschiedenen Ausführungsformen kann die Elektronenstrahlquelle 104 eine Elektronenquelle (z.B. eine Lanthanhexaborid-Kathode oder Ceriumhexaborid-Kathode, oder eine andere Glühkathode, z.B. eine Wolfram-Kathode, oder eine Feldemissions-Kathode) aufweisen, zum Bereitstellen einer Vielzahl von Elektronen, und eine Strahlformeinheit (z.B. aufweisend eine elektrische und/oder magnetische Linse, Anoden, Gitter und Ähnliches) zum Bündeln und/oder Beschleunigen der erzeugten Elektronen zu einem Elektronenstrahl.

Ferner kann die Ablenkanordnung 106 eine Ablenkanordnung mit einer oder mehreren Spulen zum Erzeugen eines Magnetfeldes aufweisen (zum Ablenken des Elektronenstrahls) und kann zusätzlich ein computergestütztes oder computerbasiertes Strahlführungssystem aufweisen, wobei das computergestützte oder computerbasierte Strahlführungssystem beispielsweise Ablenksignale für die Ablenkanordnung zum Ablenken des Elektronenstrahls bereitstellen kann, so dass mittels der Ablenkanordnung der Elektronenstrahl entsprechend in der Vakuumkammer 802 abgelenkt werden kann. Beispielsweise kann der Elektronenstrahl entlang einer Richtung 101 oder entlang einer Richtung quer zur Richtung 101 senkrecht zur Richtung 103 abgelenkt werden, typischerweise als x-y-Ablenkung bezeichnet, wobei die Richtung 103 die z-Richtung eines kartesischen Koordinatensystems repräsentiert.

Die Ablenksignale können auf Grundlage der Ablenkparameter bereitgestellt sein oder werden. Die Ablenkparameter können von der Steuerung 116 bereitgestellt sein oder werden.

Anschaulich gesehen kann das Ablenken des Elektronenstrahls mittels der Ablenkanordnung 106 elektrisch spannungsbasiert und/oder elektrisch strombasiert erfolgen, wobei die Ablenksignale beispielsweise mit einem Ablenkparametersatz (z.B. mehreren Ablenkparametern) korreliert sein können.

Alternativ oder zusätzlich kann die Steuerung 116 Leistungsparameter bereitstellen, auf deren Grundlage eine elektrische Leistung des Elektronenstrahls geregelt und/oder gesteuert werden kann. Die Leistungsparameter zum Bestrahlen der Feststoffpartikel können derart bereitgestellt sein oder werden, dass die elektrische Leistung des Elektronenstrahls kleiner ist als eine thermische Verlustleistung der Feststoffpartikel. Damit kann verhindert werden, dass sich die Feststoffpartikel zu sehr erwärmen und schmelzen, sublimieren und/oder zusammensintern. Alternativ oder zusätzlich können die Leistungsparameter zum Bestrahlen des Beschichtungsmaterials derart bereitgestellt sein oder werden, dass die elektrische Leistung des Elektronenstrahls größer ist als eine thermische Verlustleistung des Beschichtungsmaterials. Damit kann erreicht werden, dass das Beschichtungsmaterial schmilzt und verdampft werden kann.

Je größer die elektrische Leistung des Elektronenstrahls ist, desto größer kann die Beschichtungsrate sein. Beispielsweise kann für eine niedrige Beschichtungsrate ein Elektronenstrahl mit einer elektrischen Leistung in einem Bereich von ungefähr 5 kW bis ungefähr 10 kW bereitgestellt sein oder werden. Alternativ kann für eine hohe Beschichtungsrate ein Elektronenstrahl mit einer elektrischen Leistung in einem Bereich von ungefähr 100 kW bis ungefähr 1000 kW bereitgestellt sein oder werden.

Dazu kann die Beschichtungsanordnung, bzw. die Elektronenstrahlkanone, eine Energieversorgung 126 aufweisen, welche mit der Elektronenstrahlquelle gekoppelt 116k ist. Die Energieversorgung kann der Elektronenstrahlquelle elektrische Energie zuführen. Beispielsweise kann die Energieversorgung eingerichtet sein einen elektrischen Strom mit mehreren Ampere (A) bereitzustellen und der Elektronenstrahlquelle, bzw. der Elektronenquelle, zuzuführen, z.B. einen elektrischen Strom mit mehr als ungefähr 0,1 A, z.B. mit mehr als ungefähr 0,5 A, z.B. mit mehr als ungefähr 1 A, z.B. mit mehr als ungefähr 2 A, z.B. mit mehr als ungefähr 5 A, z.B. mit mehr als ungefähr 10 A, z.B. mit mehr als ungefähr 20 A, z.B. in einem Bereich von ungefähr 10 A bis ungefähr 25 A.

Alternativ oder zusätzlich kann die Energieversorgung 126 eingerichtet sein eine elektrische Spannung (Beschleunigungsspannung) mit mehreren tausend V (Volt), d.h. im kV-Bereich, bereitzustellen und der Elektronenstrahlquelle, bzw. der Strahlformeinheit, zuzuführen zum Beschleunigen der Elektronen, z.B. eine elektrische Spannung mit mehr als ungefähr 5 kV, z.B. mit mehr als ungefähr 10 kV, z.B. mit mehr als ungefähr 20 kV, z.B. mit mehr als ungefähr 30 kV, z.B. mit mehr als ungefähr 40 kV, z.B. mit mehr als ungefähr 50 kV, z.B. in einem Bereich von ungefähr 25 kV bis ungefähr 60 kV.

Der elektrische Strom und/oder die elektrische Spannung, welche von der Energieversorgung 126 bereitgestellt werden/wird, können eine elektrische Leistung definieren, welche die Energieversorgung 126 der Elektronenstrahlquelle 104 zuführt, bzw. welche die Elektronenstrahlquelle 104 aufnimmt. Beispielsweise kann die Energieversorgung 126 eingerichtet sein, eine elektrische Leistung im kW (Kilowatt) Bereich bereitzustellen und der Elektronenstrahlquelle 104 zuzuführen, z.B. eine elektrische Leistung von mehr als ungefähr 0,1 kW, z.B. von mehr als ungefähr 1 kW, z.B. von mehr als ungefähr 5 kW, z.B. von mehr als ungefähr 10 kW, z.B. von mehr als ungefähr 50 kW, z.B. von mehr als ungefähr 100 kW, z.B. von mehr als ungefähr 200 kW, z.B. von mehr als ungefähr 300 kW, z.B. von mehr als ungefähr 400 kW, z.B. von mehr als ungefähr 500 kW, z.B. von mehr als ungefähr 600 kW, z.B. von mehr als ungefähr 700 kW, z.B. von mehr als ungefähr 800 kW, z.B. in einem Bereich von ungefähr 500 kW bis ungefähr 1000 kW.

Mit anderen Worten kann die Elektronenstrahlquelle 104 die von der Energieversorgung 126 bereitgestellte elektrische Leistung (oder zumindest einen Teil davon) in einen Elektronenstrahl 114a, 114b umwandeln, welcher dann eine entsprechende elektrische Leistung aufweist. Die elektrische Leistung des Elektronenstrahls 114a, 114b kann von der elektrischen Ladung definiert sein, welche der Elektronenstrahl in einer bestimmten Zeit über eine bestimmte Strecke transportiert. Mit anderen Worten kann die elektrische Leistung des Elektronenstrahls von der Menge der Elektronen und deren Geschwindigkeit definiert sein, welche den Elektronenstrahl bilden. Die Menge an Elektronen, welche der Elektronenstrahl pro Zeit transportiert, kann einen elektrischen Strom des Elektronenstrahls 114a, 114b definieren, d.h. einen Elektronenstrahlstrom. Der Elektronenstrahlstrom kann mehr als ungefähr 0,01 A aufweisen, z.B. mit mehr als ungefähr 0,1 A, z.B. mit mehr als ungefähr 0,5 A, z.B. mit mehr als ungefähr 1 A, z.B. mit mehr als ungefähr 2 A, z.B. mit mehr als ungefähr 5 A, z.B. mehr als ungefähr 10 A, z.B. mehr als ungefähr 20 A, z.B. in einem Bereich von ungefähr 10 A bis ungefähr 25 A.

Beispielsweise ergibt sich bei einer elektrischen Leistung von ungefähr 5 kW und einer elektrischen Spannung von 50 kV ein Elektronenstrahlstrom von 0,1 A.

Gemäß verschiedenen Ausführungsformen kann die Elektronenquelle 104 eine Kathodenheizung aufweisen, welche die Kathode erhitzt, z.B. eine resistive Kathodenheizung oder eine Strahlung-Kathodenheizung (z.B. eine Elektronenstrahl-Kathodenheizung). Eine Strahlung-Kathodenheizung kann beispielsweise eingerichtet sein eine Strahlung, z.B. eine Elektronenstrahlung, zu erzeugen, welche der Kathode zugeführt wird und die Kathode erhitzt (d.h. die Kathode wird mittels der Elektronenstrahl-Kathodenheizung bestrahlt). Durch das Erhitzen kann die Kathode Elektronen emittieren, so genannte thermische Elektronen. Je mehr Elektronen die Kathode emittiert, umso größer können der Elektronenstrahlstrom und damit die elektrische Leistung des Elektronenstrahls 114a, 114b sein, welcher aus den Elektronen gebildet wird (z.B. mittels der Strahlformeinheit).

Bei einer Elektronenstrahl-Kathodenheizung kann die Energiezufuhr zur Kathode (z.B. einer Blockkathode) mittels der Energie der auf die Kathode beschleunigten Elektronen erfolgen, d.h. mittels der elektrischen Spannung, mit der die auf die Kathode gerichteten Elektronen beschleunigt werden. Hierzu kann die elektrische Spannung zwischen einem thermisch geheizten Filament (Heizung zur Erzeugung thermischer Elektronen) und der Kathode von etwa 1000 V angelegt werden.

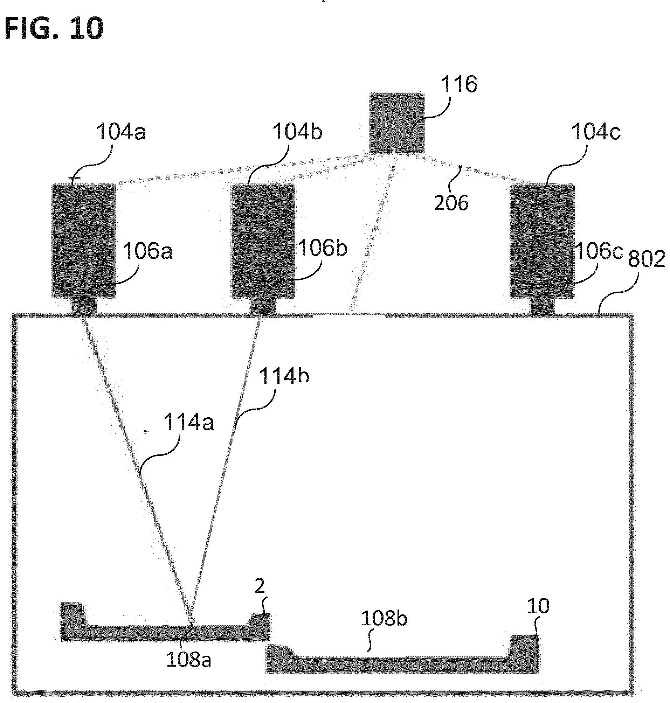

**Fig.10** veranschaulicht eine Beschichtungsanordnung gemäß verschiedenen Ausführungsformen in einer schematischen Querschnittsansicht oder schematischen Seitenansicht.

Gemäß verschiedenen Ausführungsformen kann die Beschichtungsanordnung mehrere Elektronenstrahlquellen 104a, 104b, 104c und mehrere Ablenkanordnungen 106a, 106b, 106c aufweisen, wobei jede Ablenkanordnung der mehreren Ablenkanordnungen 106a, 106b, 106c mit einer Elektronenstrahlquelle der mehreren Elektronenstrahlquellen 104a, 104b, 104c gekoppelt ist.

Gemäß verschiedenen Ausführungsformen kann die Steuerung 116 zum Anpassen der Ablenkparameter eingerichtet sein, mit der jede Ablenkanordnung der mehreren Ablenkanordnungen 106a, 106b, 106c den von der entsprechenden Elektronenstrahlquelle der mehreren Elektronenstrahlquellen 104a, 104b erzeugten Elektronenstrahl ablenkt.

Ferner kann die Beschichtungsanordnung zwei Behälter 2, 10 (mindestens einen ersten Behälter 2 und mindestens einen zweiten Behälter 10) aufweisen, welcher zum Halten eines Targetmaterials in einem Auftreffbereich 108a, 108b der mehreren Auftreffbereiche eingerichtet ist. Beispielsweise kann jeder der zwei Behälter 2, 10 in Form eines Tiegels ausgebildet sein, welcher zum Aufnehmen eines Beschichtungsmaterials (nicht dargestellt) eingerichtet ist. Beispielsweise kann ein erster Behälter 2 in einem ersten Auftreffbereich 108a angeordnet sein und ein zweiter Behälter 10 kann in einem zweiten Auftreffbereich 108b angeordnet sein.

Der zweite Behälter 10 kann alternativ auch als Halter ausgebildet sein zum Halten des Beschichtungsmaterials, z.B. wenn das Beschichtungsmaterial in Form eines Stabs ausgebildet ist.

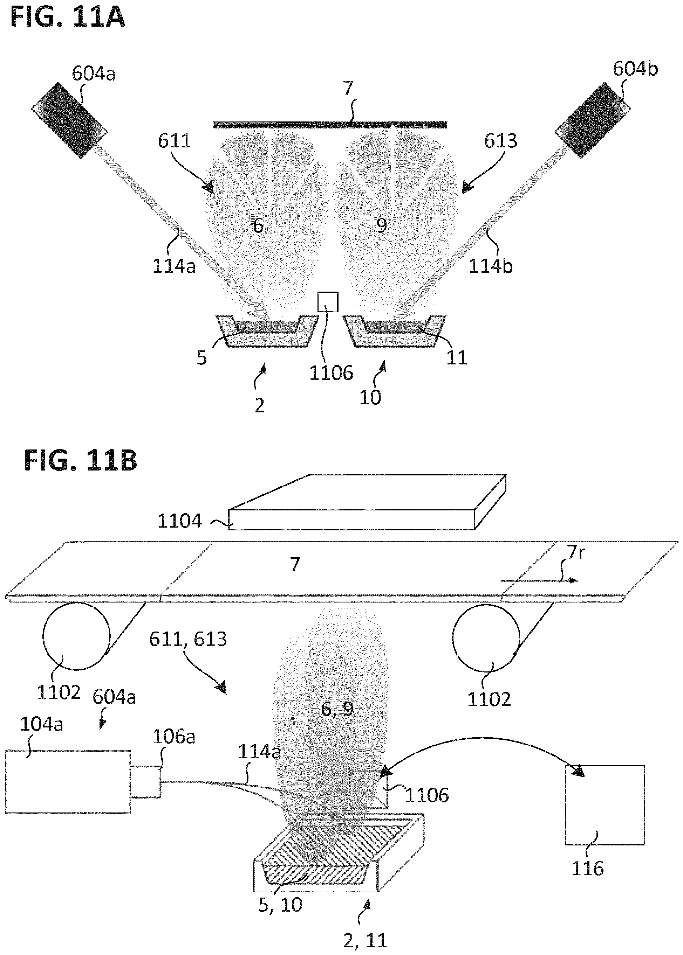

**Fig.11A** veranschaulicht eine Beschichtungsanordnung gemäß verschiedenen Ausführungsformen in einer schematischen Querschnittsansicht oder schematischen Seitenansicht.

Gemäß verschiedenen Ausführungsformen kann ein erster Elektronenstrahl 114a mittels einer ersten Elektronenstrahlkanone 604a (aufweisend eine erste Elektronenstrahlquelle und eine erste Ablenkanordnung) erzeugt werden. Mittels des ersten Elektronenstrahls 114a können mehrere Feststoffpartikel 5 (auch als erstes Beschichtungsmaterial bezeichnet) in einem ersten Behälter 2 bestrahlt werden, welche ein erstes Beschichtungsmaterial aufweisen. Dadurch können die Feststoffpartikel 5 in eine Partikelwolke 6 überführt werden, welche sich von dem ersten Behälter 2 weg in einen ersten Ausbreitungsbereich 611 hinein ausbreitet.

Die Partikelwolke bzw. die Feststoffpartikel kann bzw. können (durch den ersten Ausbreitungsbereich 611 hindurch) zu einem Substrat 7 gebracht werden, an welchem sich die Feststoffpartikel der Partikelwolke anlagern und eine erste Schicht auf dem Substrat 7 bilden können.

Gemäß verschiedenen Ausführungsformen kann ein zweiter Elektronenstrahl 114b mittels einer zweiten Elektronenstrahlkanone 604b (aufweisend eine zweite Elektronenstrahlquelle und eine zweite Ablenkanordnung) erzeugt werden. Alternativ kann der zweite Elektronenstrahl 114b von der ersten Elektronenstrahlkanone 604a erzeugt werden, z.B. gemäß eines entsprechenden Ablenkparameters oder Ablenkparametersatzes.

Mittels des zweiten Elektronenstrahls 114b kann ein Verdampfungsgut 11 (auch als zweites Beschichtungsmaterial bezeichnet) in einem zweiten Behälter 10 bestrahlt werden, wodurch das Verdampfungsgut 11 in einen gasförmigen Zustand überführt werden kann (d.h. verdampft oder sublimiert werden kann). Beispielsweise kann das Verdampfungsgut 11 mittels des zweiten Elektronenstrahls 114b erwärmt werden (und dabei schmelzen). Das in den gasförmigen Zustand überführte Verdampfungsgut 11 kann einen Materialdampf 9 bilden, welcher sich in einen zweiten Ausbreitungsbereich 613 hinein ausbreiten kann.

Der Materialdampf 9 kann (durch den zweiten Ausbreitungsbereich 613 hindurch) zu dem Substrat 7 gebracht werden, an welchem sich der Materialdampf 9 anlagern und eine zweite Schicht auf dem Substrat 7 bilden kann.

Gemäß verschiedenen Ausführungsformen können die Partikelwolke 6 und der Materialdampf 9 gleichzeitig gebildet werden, so dass sich diese miteinander vermischen und/oder miteinander reagieren und gemeinsam eine Schicht auf dem Substrat 7 bilden.

Der Abstand des Substrats 7 zu den zwei Behältern 2, 10 kann gemäß verschiedenen Ausführungsformen in einem Bereich von ungefähr 0,2 m bis ungefähr 2 m liegen, z.B. in einem Bereich von ungefähr 0,2 m bis ungefähr 1,6 m, z.B. in einem Bereich von ungefähr 0,4 m bis ungefähr 0,8 m. Beispielsweise kann der Abstand des Substrats 7 zu den zwei Behältern 2, 10, z.B. für einen linearen (geraden) Einschuss am Substrat 7 vorbei, einen Wert aufweisen in einem Bereich von ungefähr 0,6 m bis ungefähr 1,6 m. Beispielsweise kann der Abstand des Substrats 7 zu den zwei Behältern 2, 10, z.B. für den Einschuss unter dem Substrat (vergleiche Fig.11B), einen Wert aufweisen in einem Bereich von ungefähr 0,5 m bis ungefähr 1,8 m.

Gemäß verschiedenen Ausführungsformen kann eine oder jede Elektronenstrahlkanone 604a, 604b der Beschichtungsanordnung in Form einer so genannten Axialkanone ausgebildet sein.

**Fig.11B** veranschaulicht eine Beschichtungsanordnung gemäß verschiedenen Ausführungsformen in einer schematischen Querschnittsansicht oder schematischen Seitenansicht, z.B. die in Fig.11A veranschaulichte Beschichtungsanordnung in einer Detailansicht oder eine andere der hierin beschriebenen Beschichtungsanordnungen.

Gemäß verschiedenen Ausführungsformen kann der erste Elektronenstrahl 114a, welcher von der ersten Elektronenstrahlquelle 104a erzeugt wird, mittels der ersten Ablenkanordnung 106a abgelenkt werden. Somit kann der erste Elektronenstrahl 114a über ein Targetmaterial 5, 11 (z.B. die Feststoffpartikel 5 und/oder das Verdampfungsgut 11) geführt werden.

Beispielsweise können die Feststoffpartikel 5 mittels des ersten Elektronenstrahls 114a abgerastert werden, z.B. gemäß einer ersten Bestrahlungsfigur 60a (vergleiche Fig.1B und Fig.2B). Die erste Bestrahlungsfigur 60a kann derart bereitgestellt sein oder werden, dass die Feststoffpartikel 5 gleichmäßig aufgeladen werden können, ohne zu schmelzen. Die erste Bestrahlungsfigur 60a kann beispielsweise mehrere Bestrahlungsorte auf den Feststoffpartikeln 5 (vergleiche Fig.2B) und/oder auf dem ersten Behälter 2 (z.B. auf dessen Rand, vergleiche Fig.1B) definieren und/oder kann eine Bestrahlungsdauer für jeden Bestrahlungsort der mehreren Bestrahlungsorte definieren.

Analog dazu kann der erste Elektronenstrahl 114a oder ein optional zeitgleich erzeugter anderer Elektronenstrahl (nicht dargestellt), z.B. ein mittels einer weiteren Elektronenstrahlkanone 604b erzeugter zweiter Elektronenstrahl 114b, über das Verdampfungsgut 11 geführt werden.

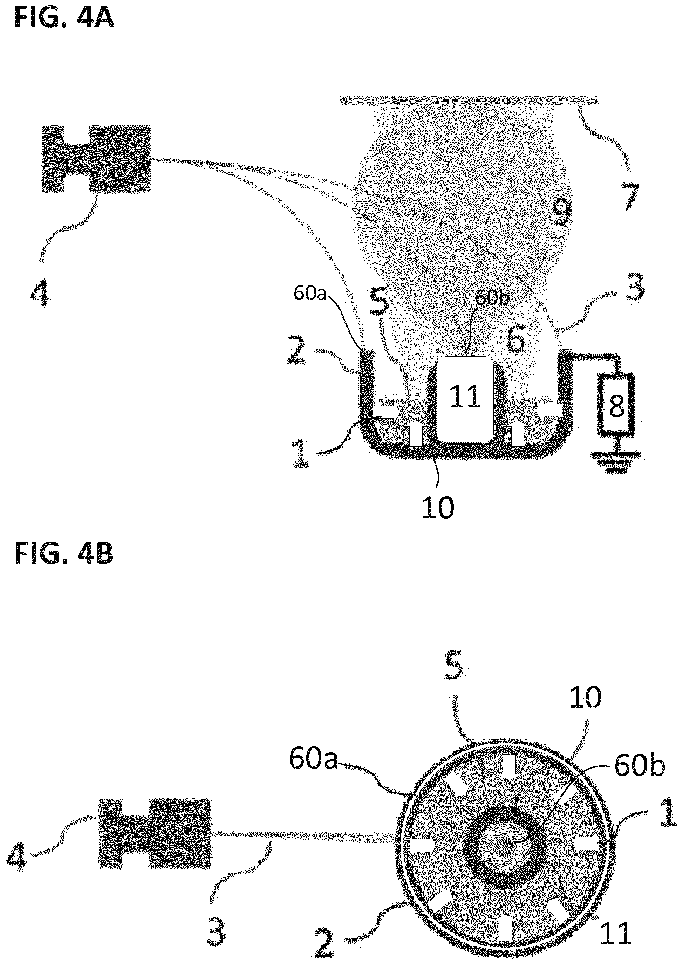

Beispielsweise kann das Verdampfungsgut 11 mittels des Elektronenstrahls 114a, 114b abgerastert werden, z.B. gemäß einer zweiten Bestrahlungsfigur 60b (vergleiche Fig.3B und Fig.4B). Die zweite Bestrahlungsfigur 60b kann derart bereitgestellt sein oder werden, dass das Verdampfungsgut 11 gleichmäßig erwärmt und verdampft werden kann. Die zweite Bestrahlungsfigur 60b kann beispielsweise mehrere Bestrahlungsorte auf dem Verdampfungsgut 11 (vergleiche Fig.3B und Fig.4B) definieren und/oder kann eine Bestrahlungsdauer für jeden Bestrahlungsort der mehreren Bestrahlungsorte definieren.

Die erste Bestrahlungsfigur 60a und die zweite Bestrahlungsfigur 60b können mittels der Steuerung bereitgestellt sein oder werden, z.B. kann jedem Bestrahlungsort (der ersten Bestrahlungsfigur 60a und/oder der zweiten Bestrahlungsfigur 60b) jeweils zumindest ein Ablenkparameter zugeordnet sein. Der Ablenkparameter kann optional eine Zeitkomponente aufweisen, welche die Bestrahlungsdauer für den zugeordneten Bestrahlungsort definiert.

Das Substrat 7 kann während des Bestrahlens des Targetmaterials 5, 11, d.h. während Materialdampf 9 und/oder eine Partikelwolke 6 gebildet wird, transportiert werden, z.B. durch den entsprechenden Ausbreitungsbereich 611, 613 hindurch, beispielsweise entlang einer Transportrichtung 7r, bzw. entlang einer Transportebene.

Im Allgemeinen kann das Substrat 7 z.B. Glas, Kunststoff oder ein Metall aufweisen oder daraus gebildet sein, z.B. in Form einer Folie, einer Platte oder eines Bandes (z.B. eines Metallbandes). Gemäß verschiedenen Ausführungsformen kann die Beschichtungsanordnung eine Positionierungsvorrichtung, z.B. eine Transportvorrichtung, zum Transportieren des Substrats 7 aufweisen. Die Transportrichtung 7r, bzw. die Transportebene, entlang der das Substrat 7 transportiert wird, kann von der Positionierungsvorrichtung definiert sein. Die Positionierungsvorrichtung kann gemäß verschiedenen Ausführungsformen ein oder mehrere Transportrollen 1102 und einen Transportantrieb zum Antreiben der Transportrollen aufweisen.

Gemäß verschiedenen Ausführungsformen kann die Beschichtungsanordnung eine Substrat-Heizvorrichtung 1104 aufweisen, welche zum Vorheizen eines Substrats 7 eingerichtet ist, z.B. eines schnellbewegten Substrats (z.B. eines Metallbandes oder eines Stahlbands). Die Substrat-Heizvorrichtung kann beispielsweise in Form einer Wärmestrahlung-Heizvorrichtung ausgebildet sein. Die Substrat-Heizvorrichtung kann auf der einem Behälter 2,11 gegenüberliegenden Seite des Substrats 7 bzw. der Transportebene angeordnet sein.

Gemäß verschiedenen Ausführungsformen können zum Beschichten eines Substrats 7 ein oder mehrere Behälter 2,11 verwendet werden, z.B. zwei, drei oder vier, oder mehr als vier.

Gemäß verschiedenen Ausführungsformen können pro Behälter 2,11 eine oder mehrere Elektronenstrahlenkanonen verwendet werden, z.B. eine Elektronenstrahlenkanone (auch als Elektronenkanone bezeichnet) oder zwei Elektronenstrahlenkanonen.

Gemäß verschiedenen Ausführungsformen kann die Ablenkanordnung 106a derart eingerichtet sein, dass der Elektronenstrahl 114a gekrümmt verläuft, wie in Fig.11B veranschaulicht ist. Dazu kann die Ablenkanordnung 106a weitere Spulen aufweisen, welche z.B. ein Magnetfeld erzeugen, das einen Bereich in der Vakuumkammer durchdringt, welchen der Elektronenstrahl 114a durchquert.

Gemäß verschiedenen Ausführungsformen kann die Beschichtungsanordnung eine Anode 1106 zum Bereitstellen eines elektrischen Feldes zwischen dem Behälter 2,11 und der Transportebene (bzw. einem Substrat 7) aufweisen. Die Anode kann zum Bereitstellen eines elektrischen Feldes eingerichtet sein, welches den Ausbreitungsbereich 611, 613 durchdringt.

Die Steuerung 116 kann eingerichtet sein, der Anode 1106 ein elektrisches Potential bereitzustellen, d.h. eine elektrische Spannung an die Anode 1106 anzulegen. Das elektrische Potential der Anode 1106 kann das elektrische Feld bewirken.

Die Steuerung 116 kann ferner eingerichtet sein, das elektrische Feld mittels der Anode 1106 derart zu erzeugen, dass ein in dem Ausbreitungsbereich 611, 613 bereitgestelltes gasförmiges Material, z.B. der Materialdampf 9, zum Ionisieren angeregt wird, d.h. dass eine Ionisierung des gasförmigen Materials angeregt wird. Anschaulich können Elektronen, welche sich in dem Ausbreitungsbereich 611, 613 befinden, z.B. welche durch das Bestrahlen des Targetmaterials 5, 10 aus diesem austreten und in den Ausbreitungsbereich 611, 613 gelangen, beschleunigt werden, bis diese mit Atomen des gasförmigen Materials kollidieren und diese ionisieren. Dadurch kann das Zünden eines Plasmas bewirkt werden. Das Plasma kann beispielsweise aus dem Materialdampf 9 (d.h. aus dem gasförmigen Beschichtungsmaterial) gebildet werden.

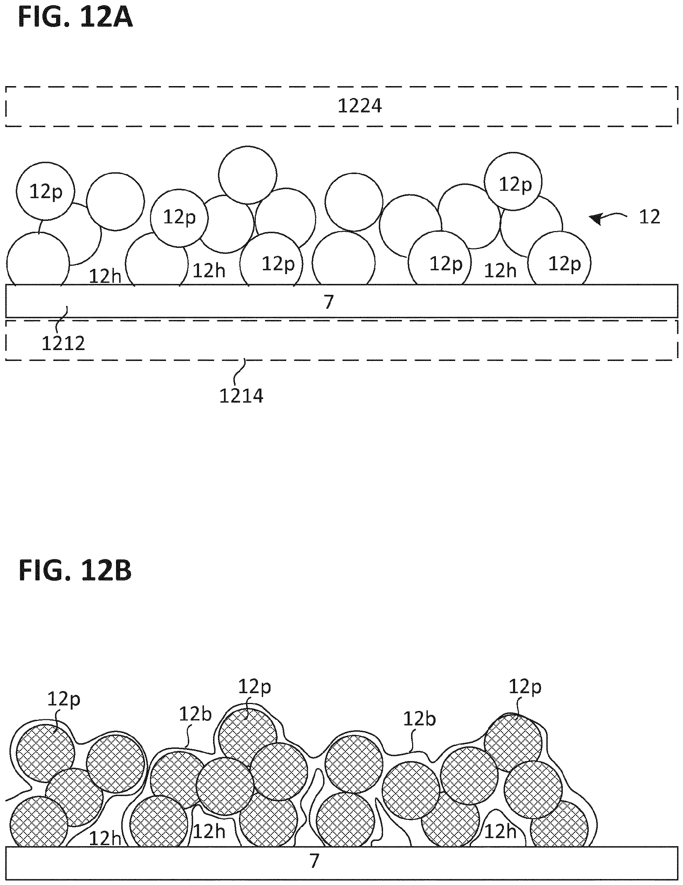

**Fig.12A** veranschaulicht eine Schichtanordnung gemäß verschiedenen Ausführungsformen in einer schematischen Querschnittsansicht oder schematischen Seitenansicht.

Auf dem Substrat 7 kann eine Schicht 12 gebildet sein oder werden, welche Feststoffpartikel 12p aufweist oder daraus gebildet ist. Zwischen den Feststoffpartikeln 12p der Schicht 12 können Hohlräume 12h (Poren) gebildet sein. Mit anderen Worten kann die Schicht 12 mehrere Poren 12h aufweisen. Ein Verhältnis des Volumens der Poren 12h zu den Volumen der Feststoffpartikel 12p kann eine Porosität der Schicht definieren.

Gemäß verschiedenen Ausführungsformen können die Feststoffpartikel 12p ein Akkumulator-Aktivmaterial, ein Katalysatormaterial und/oder ein Feststoffelektrolyt aufweisen oder daraus gebildet sein, wie vorangehend beschrieben ist.

Gemäß verschiedenen Ausführungsformen kann das Substrat 7 transparent sein, wie im Folgenden beschrieben ist.

Gemäß verschiedenen Ausführungsformen können die Feststoffpartikel 12p ein Aktivmaterial (Solarzellen-Aktivmaterial, d.h. ein optisch aktives Material) aufweisen oder daraus gebildet sein, z.B. einen Halbleiter, z.B. einen oxidischen Halbleiter (Oxid), z.B. ein Metalloxidhalbleiter, wie z.B. Titanoxid. Beispielsweise kann das Substrat 7 eine Elektrode 1212 einer Solarzelle (z.B. einer Perowskit-Solarzelle oder einer Farbstoff-Solarzelle) aufweisen oder daraus gebildet sein, z.B. eine transparente elektrisch leitfähige (d.h. eine elektrische Leitfähigkeit von mehr als ungefähr 10⁶ Siemens/Meter aufweisend) Schicht. Optional kann das Substrat 7 einen transparenten Träger 1214, wie z.B. eine Glasplatte oder eine Kunststoffplatte, aufweisen, auf welcher die Elektrode gebildet ist. Alternativ kann die Elektrode auch intransparent (lichtundurchlässig) sein.

Im Fall einer Solarzelle kann auf einer der Elektrode 1212 gegenüberliegenden Seite der Schicht 12 ein weiterer transparenter Träger 1224 angeordnet sein oder werden.

**Fig.12B** veranschaulicht eine Schichtanordnung gemäß verschiedenen Ausführungsformen in einer schematischen Querschnittsansicht oder schematischen Seitenansicht.

Gemäß verschiedenen Ausführungsformen kann mittels der Co-Beschichtung ein Beschichtungsmaterial abgeschieden werden, welches die Feststoffpartikel 12p und/oder das Substrat 7 zumindest teilweise beschichtet.

Gemäß verschiedenen Ausführungsformen kann das Beschichtungsmaterial eingerichtet sein die Feststoffpartikel 12p miteinander zu verbinden (Feststoffpartikel-Feststoffpartikel-Verbindung).

Alternativ oder zusätzlich kann das Beschichtungsmaterial eingerichtet sein die Feststoffpartikel 12p mit dem Substrat zu verbinden (Feststoffpartikel-Substrat-Verbindung).

Im Fall einer Solarzelle kann das Beschichtungsmaterial ferner ein optisch aktives Material aufweisen oder daraus gebildet sein, z.B. einen Halbleiter, z.B. einen metallorganischen Perowskit (halb organischen und halb anorganischen Halbleiter) im Fall einer Perowskit-Solarzelle und/oder einen Farbstoff (Solarzellen-Farbstoff) im Fall einer Farbstoff-Solarzelle (wird auch als Grätzel-Zelle bezeichnet). Der Farbstoff kann ein organischer Farbstoff sein, wie z.B. ein Anthocyan.

**Fig.13** veranschaulicht ein Verfahren gemäß verschiedenen Ausführungsformen in einem schematischen Ablaufdiagram. Das Verfahren kann in 1301 ein Positionieren einer zu beschichtenden Substratoberfläche des Substrats in einem Vakuum und in Richtung eines Bereichs aufweisen, in dem Feststoffpartikel angeordnet sind, mit denen die Substratoberfläche beschichtet werden soll. Das Verfahren kann ferner in 1303 ein Einbringen von Elektronen in die Feststoffpartikel zur elektrostatischen Aufladung der Feststoffpartikel aufweisen derart, dass eine durch die elektrostatische Aufladung bewirkte Kraft die Feststoffpartikel voneinander trennt und in Richtung der Substratoberfläche des Substrats beschleunigt zum Beschichten der Substratoberfläche mit zumindest einem Teil der voneinander getrennten Feststoffpartikel.

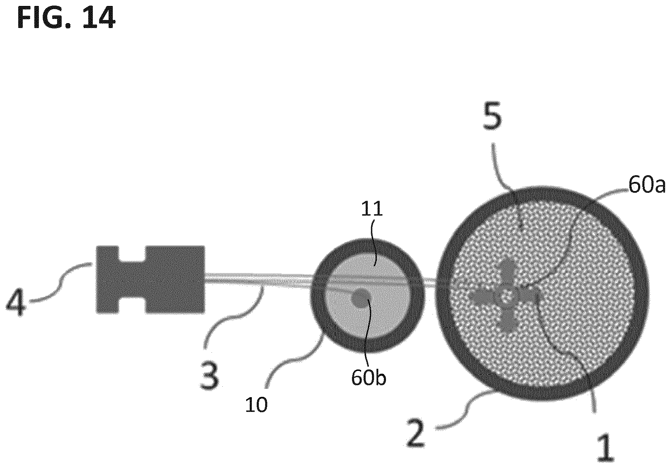

**Fig. 14** veranschaulicht eine Beschichtungsvorrichtung gemäß verschiedenen Ausführungsformen in Draufsicht zur gleichzeitigen Partikelemission und Verdampfung ähnlich zu der in Fig. 3B veranschaulichten Beschichtungsvorrichtung wobei eine direkte elektrische Ladungsinduzierung in die Partikellage 5 erfolgt.

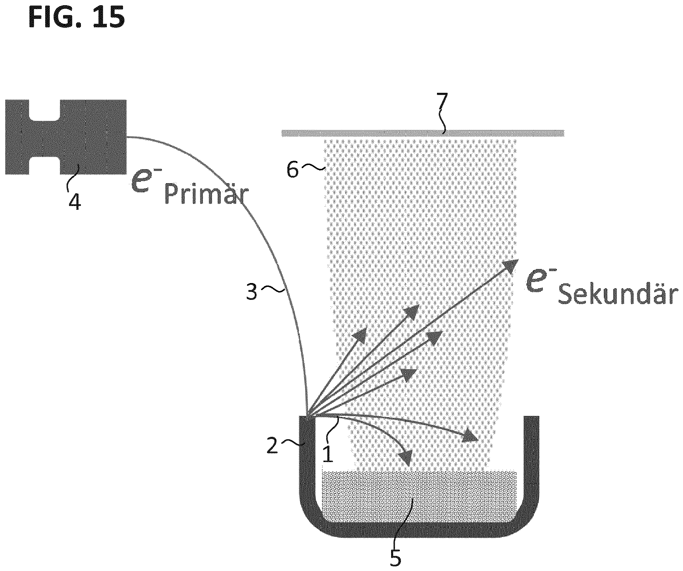

**Fig. 15** veranschaulicht ein Verfahren gemäß verschiedenen Ausführungsformen in einer schematischen Seitenansicht.

Gemäß verschiedenen Ausführungsformen kann das Verfahren aufweisen: Einbringen von Sekundärelektronen 1 (Sekundärelektronenfluss 1) in die Feststoffpartikel 5. Das Erzeugen der Sekundärelektronen 1 kann erfolgen, indem der Behälter 2 mit Primärelektronen 3 bestrahlt wird. Die Primärelektronen können beispielsweise mittels eines Elektronenstrahls 3 bereitgestellt sein oder werden.

Der Elektronenstrahl 3 kann beispielsweise auf die Behälterwandung (Behälterrand) gerichtet sein derart, dass diese Sekundärelektronen 1 emittiert. Mit anderen Worten kann die Sekundärelektronenstrahlquelle zumindest einen Teil des Behälters 2 aufweisen oder aus diesem gebildet sein, z.B. dessen Behälterwandung.

Anschaulich kann das Verfahren beispielsweise aufweisen: anfängliche indirekte elektrische Ladungsinduzierung auf den Behälterrand, dessen Rückstreuelektronen (Sekundärelektronen) final eine direkte elektrische Ladungsinduzierung in die Partikellage 5 bewirken.

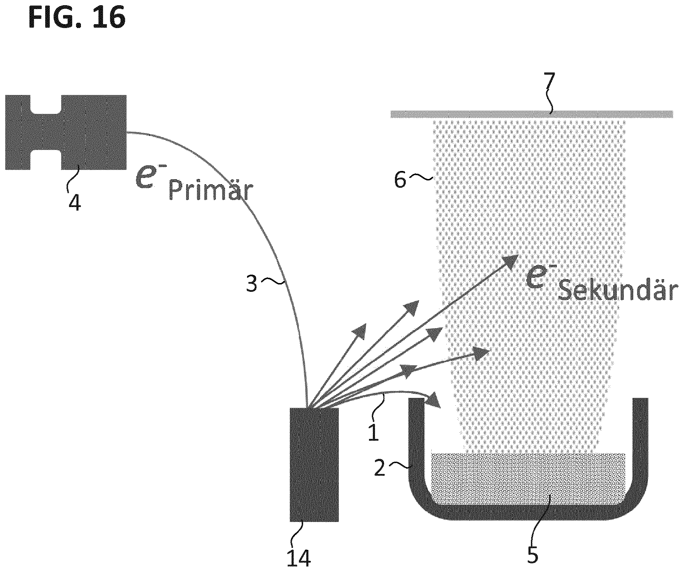

**Fig. 16** veranschaulicht ein Verfahren gemäß verschiedenen Ausführungsformen in einer schematischen Seitenansicht

Gemäß verschiedenen Ausführungsformen kann das Verfahren aufweisen: Einbringen von Sekundärelektronen 1 (Sekundärelektronenfluss 1) in die Feststoffpartikel 5. Das Erzeugen der Sekundärelektronen 1 kann erfolgen, indem ein Bestrahlungsziel-Festkörper 14 (z.B. eine Ronde) mit Primärelektronen 3 bestrahlt wird. Die Primärelektronen können beispielsweise mittels eines Elektronenstrahls 3 bereitgestellt sein oder werden.

Der Bestrahlungsziel-Festkörper 14 kann optional in einem Abstand von dem Behälter 2 angeordnet sein oder werden. Damit kann der Wärmeeintrag in die Feststoffpartikel 5 verringert werden.

Beispielsweise kann der Bestrahlungsziel-Festkörper 14 alternativ oder zusätzlich zu dem zweiten Behälter 10 verwendet werden (vergleiche Fig.3A und Fig.4A), z.B. in dem Behälter 2 angeordnet oder daneben. Optional kann auf das Beschießen des Behälterrandes verzichtet werden, wenn der Bestrahlungsziel-Festkörper 14 verwendet wird.

Alternativ kann der zweite Behälter 10 den Bestrahlungsziel-Festkörper 14 aufweisen oder daraus gebildet sein.

Anschaulich kann das Verfahren beispielsweise aufweisen: indirekte elektrische Ladungsinduzierung auf einer separaten Ronde, deren Rückstreuelektronen (Sekundärelektronen) final eine direkte elektrische Ladungsinduzierung in die Partikellage 5 bewirken.

Ist die Sekundärelektronenstrahlquelle 14 neben dem Behälter 2 angeordnet, kann der Wärmeeintrag anschaulich von den Feststoffpartikeln 5 weg verlagert werden, so dass diese weniger erwärmt werden. Damit kann erreicht werden, dass Feststoffpartikel 5 mit niedriger Schmelztemperatur emittiert werden können.

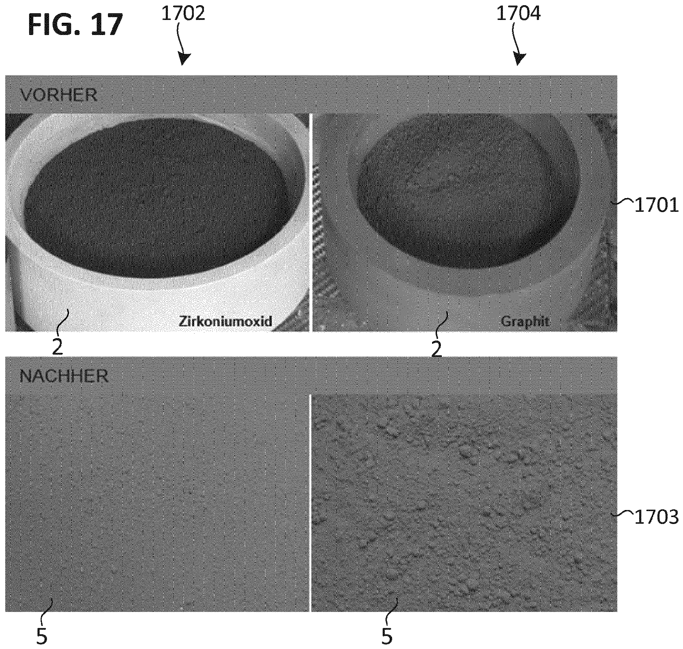

**Fig. 17** veranschaulicht Feststoffpartikel in einem Behälter 5 gemäß verschiedenen Ausführungsformen in einer perspektivischen Ansicht 1701 vor dem Einbringen der Elektronen und in einer Detailansicht 1703 nach dem Einbringen der Elektronen.

Das Verfahren kann in 1702 aufweisen: elektrisch isoliertes Anordnen (z.B. Lagern) der Feststoffpartikeln 5 in einem Behälter 2 (d.h. galvanisch von der Umgebung des Behälters 2 getrennt); und Einbringen von Elektronen in die Feststoffpartikel, welche elektrisch isoliert (d.h. potentialfrei) angeordnet sind. Beispielsweise kann der Behälter 2 einen potentialfreien Bereich zum Aufnehmen der Feststoffpartikel aufweisen oder potentialfrei gelagert sein oder werden. Beispielsweise kann der Behälter 2 ein elektrisch isolierendes Material (d.h. eine elektrische Leitfähigkeit von weniger als ungefähr 10⁻⁶ Siemens/Meter aufweisend) aufweisen oder daraus gebildet sein, z.B. ein Dielektrikum und/oder eine Keramik, z.B. ein Metalloxid, z.B. Zirkoniumoxid. Alternativ oder zusätzlich kann der Behälter 2 elektrisch isoliert (d.h. potentialfrei) gelagert sein oder werden, z.B. von dem Referenzpotential elektrisch isoliert, z.B. von elektrischer Masse elektrisch isoliert.

Das Verfahren kann in 1704 aufweisen: elektrisch leitendes Anordnen (z.B. Lagern) der Feststoffpartikeln 5 in einem Behälter 2 (d.h. galvanisch mit der Umgebung des Behälter 2 gekoppelt); und Einbringen von Elektronen in die Feststoffpartikel, welche elektrisch leitend (d.h. potentialgebunden) angeordnet sind. Beispielsweise kann der Behälter 2 ein elektrisch leitfähiges Material (d.h. eine elektrische Leitfähigkeit von mehr als ungefähr 10⁶ Siemens/Meter aufweisend) aufweisen oder daraus gebildet sein, z.B. ein Metall oder Kohlenstoff in einer Kohlenstoffmodifikation, z.B. Graphit. Alternativ oder zusätzlich kann der Behälter 2 elektrisch leitend gelagert sein oder werden, z.B. mit dem Referenzpotential elektrisch leitend gekoppelt, z.B. mit elektrischer Masse elektrisch leitend gekoppelt (d.h. geerdet). Beispielsweise kann der Behälter 2 einen geerdeten Bereich zum Aufnehmen der Feststoffpartikel aufweisen oder geerdet gelagert sein oder werden.

Mittels des Einbringens von Elektronen in die Feststoffpartikel, welche elektrisch isoliert angeordnet sind, kann die elektrostatische Aufladung der Feststoffpartikel 5 verstärkt werden, was die durch die elektrostatische Aufladung bewirkte Kraft, welche die Feststoffpartikel voneinander trennt und/oder in Richtung der Substratoberfläche des Substrats beschleunigt, vergrößert. Dadurch kann erreicht werden, dass ein Verklumpen der Feststoffpartikel 5 vermindert, aufgehoben und/oder rückgängig gemacht werden kann. Beispielsweise kann ein Zerreißen von Agglomeraten (agglomerierten Feststoffpartikeln) und/oder ein Vereinzeln der Feststoffpartikel begünstigt werden, wenn die Feststoffpartikel potentialfrei angeordnet werden. Beispielsweise kann eine elektrische Spannung, auf welche die potentialfrei gelagerten Feststoffpartikel aufgeladen werden größer sein als ungefähr 1 kV, z.B. in einem Bereich von ungefähr 15 kV bis ungefähr 100 kV, z.B. in einem Bereich von ungefähr 15 kV bis ungefähr der Beschleunigungsspannung der Elektronen.

Mittels des Einbringens von Elektronen in die Feststoffpartikel, welche elektrisch leitend (potentialgebunden) angeordnet sind, kann die elektrostatische Aufladung der Feststoffpartikel 5 verringert werden, was die durch die elektrostatische Aufladung bewirkte Kraft, welche die Feststoffpartikel voneinander trennt und/oder in Richtung der Substratoberfläche des Substrats beschleunigt, verringert. Dadurch kann eine Haftung der Feststoffpartikel an dem Substrat begünstigt werden und/oder ein schonendes Beschichten des Substrats mit den Feststoffpartikeln erfolgen. Beispielsweise kann eine elastische Streuung der Feststoffpartikel an dem Substrat gehemmt werden, je geringer deren kinetische Energie ist. Beispielsweise kann eine elektrisch Spannung, auf welche die potentialgebunden gelagerten Feststoffpartikel aufgeladen werden kleiner sein als ungefähr 1 kV, z.B. in einem Bereich von ungefähr 1 V bis ungefähr 10 V.

Detailansicht 1703 veranschaulicht die Veränderung der Oberflächentopographie eines Pulvermaterials 5 nach indirekter elektrischer Ladungsinduzierung bei einem elektrisch leitfähigen und geerdeten Behälter in 1704 im Vergleich zu einem Keramikbehältnis in 1702. Es zeigen sich feinere und dichtere Rückstände beim Keramikbehälter nach erfolgter Emission der Feststoffpartikel.

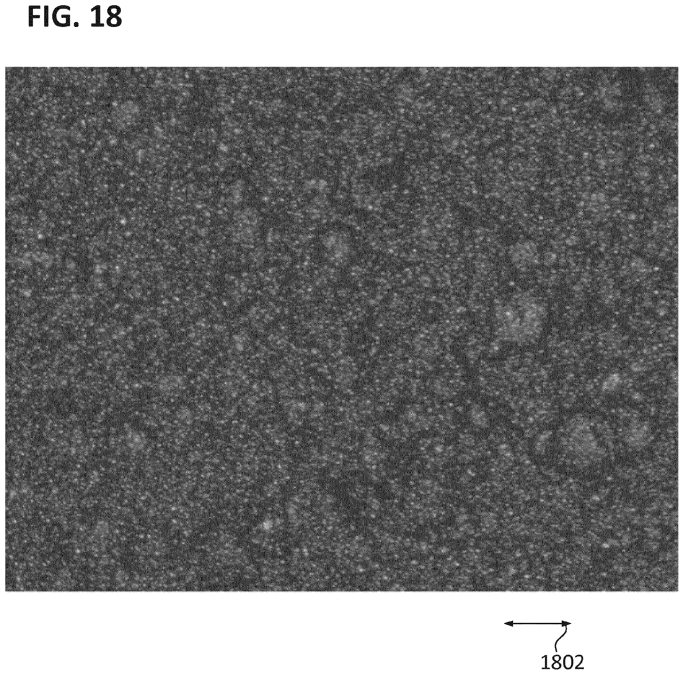

**Fig. 18** veranschaulicht ein Substrat, welches mit den Feststoffpartikeln beschichtet wurde (d.h. die Feststoffpartikelschicht) in einer Laserrastermikroskop-Aufnahme (LSM-Aufnahme). Die Feststoffpartikelschicht kann beispielsweise eine mittlere Schichtdicke von ungefähr 60 µm aufweisen. Die Feststoffpartikel können beispielsweise aus einem Behälter emittiert werden, in dem ein Pulver mit einer mittleren Partikelgröße 1802 von ungefähr 15 µm oder von ungefähr 25 µm angeordnet wurde, z.B. ein Mesokohlenstoff-Mikrokohle Pulver (MCMB).

Beispielsweise kann eine im Mittel 60 µm dicke und dichte Partikelschicht, die mittels elektronenstrahlinduzierter Emission aus einem Behälter mit MCMB-G15-Pulver transferiert wurde, bereitgestellt sein oder werden.

### Verfahren zur Substratbeschichtung mit Partikeln und Vorrichtung zur Ausführung des Verfahrens

### Bezuaszeichenliste

- 1: Elektronenfluss
- 2: Partikelbehälter
- 3: Elektronenstrahl
- 4: Elektronenstrahlkanone
- 5: Feststoffpartikel
- 6: Partikelwolke
- 7: Substrat
- 8: Potentiometer
- 9: Dampfwolke
- 10: zweiter Behälter, Tiegel
- 11: zweites Beschichtungsmaterial
- 101: Richtung
- 1012: Elektrode
- 1012a: Aktivmaterial
- 1012b: Aktivmaterial
- 1012k: Kontakt
- 1022: Elektrode
- 1022a: Aktivmaterial
- 1022k: Kontakt
- 103: Richtung
- 1030: Verkapselung
- 1032: Elektrolyt
- 104: Elektronenquelle
- 1040: Separator
- 104a: erste Elektronenstrahlquelle
- 104b: zweite Elektronenstrahlquelle
- 104c: dritte Elektronenstrahlquelle
- 106: Ablenkanordnung
- 106a: erste Ablenkanordnung
- 106b: zweite Ablenkanordnung
- 106c: dritte Ablenkanordnung
- 108a: erster Auftreffbereich
- 108b: zweiter Auftreffbereich
- 1102: Transportrolle
- 1104: Heizvorrichtung
- 1106: Anode
- 1112: erste Elektrode
- 1112d: erstes Dielektrikum
- 1122: zweite Elektrode
- 1122d: zweites Dielektrikum
- 112b: Vakuum
- 114a: erster Elektronenstrahl
- 114b: zweiter Elektronenstrahl
- 116: Steuerung
- 12: Schicht
- 1212: erste Elektrode
- 1214: erster Träger
- 1222: zweite Elektrode
- 1224: zweiter Träger
- 126: Energieversorgung
- 12h: Hohlraum
- 12p: Feststoffpartikel der Schicht
- 302: erste Stromsammlerstruktur
- 304: zweite Stromsammlerstruktur
- 306: Beschichtungsvorrichtung
- 502: Fasern
- 502a: Abwickelwalze
- 502b: Aufwickelwalze
- 508: Transportwalzen
- 518: Antriebssystem
- 600: Bipolarplatte
- 60a: erste Bestrahlungsfigur
- 60b: zweite Bestrahlungsfigur
- 604: Sauerstoff
- 604a: erste Elektronenstrahlkanone
- 604b: zweite Elektronenstrahlkanone
- 608: Gasdiffusionsschicht
- 611: Ausbreitungsbereich
- 612: erste Elektrode
- 613: Ausbreitungsbereich
- 614: Elektrolyt
- 616: zweite Elektrode
- 618: Separator
- 802: Vakuumkammer
- 803: Beschichtungsbereich
- 804: Pumpensystem
- 806: Ätzvorrichtungen

## Patentansprüche

1. Verfahren zur Beschichtung eines Substrats (7), wobei das Verfahren aufweist:
• Positionieren einer zu beschichtenden Substratoberfläche des Substrats (7) in einem Vakuum und in Richtung eines Bereichs, in dem Feststoffpartikel angeordnet sind, mit denen die Substratoberfläche beschichtet werden soll; und
• Einbringen von Elektronen in die Feststoffpartikel zur elektrostatischen Aufladung der Feststoffpartikel derart, dass eine durch die elektrostatische Aufladung bewirkte Kraft die Feststoffpartikel voneinander trennt und in Richtung der Substratoberfläche des Substrats (7) beschleunigt zum Beschichten der Substratoberfläche mit zumindest einem Teil der voneinander getrennten Feststoffpartikel; und
• Verdampfen eines Beschichtungsmaterials (11) in Richtung der Substratoberfläche zum Beschichten der Substratoberfläche mit zumindest einem Teil des Beschichtungsmaterials (11),
• wobei das Beschichten der Substratoberfläche mit zumindest dem Teil des Beschichtungsmaterials (11) und das Beschichten der Substratoberfläche mit zumindest dem Teil der voneinander getrennten Feststoffpartikel entweder:
einander zeitlich und/oder räumlich überlappen,
oder
zeitlich und/oder räumlich einen Abstand voneinander aufweisen.

2. Verfahren gemäß Anspruch 1,
wobei die Feststoffpartikel in einem Partikelbehälter (2) angeordnet werden, welcher eine zumindest teilweise elektrisch leitfähige Wandung aufweist, und
wobei das Einbringen von Elektronen in die Feststoffpartikel indirekt über die Behälterwandung erfolgt.

3. Verfahren gemäß Anspruch 1 oder 2, ferner aufweisend:
Abführen von Elektronen aus den Feststoffpartikeln während des Einbringens von Elektronen in die Feststoffpartikel, wobei das Abführen gesteuert oder geregelt erfolgt.

4. Verfahren gemäß einem der Ansprüche 1 bis 3,
wobei das Einbringen gesteuert oder geregelt erfolgt.

5. Verfahren gemäß einem der Ansprüche 1 bis 4, ferner aufweisend:
Steuern und/oder Regeln eines elektrischen Potentialunterschieds zwischen dem Substrat und den Feststoffpartikeln.

6. Verfahren gemäß einem der Ansprüche 1 bis 5,
wobei die Feststoffpartikel ein Akkumulator-Aktivmaterial, ein Solarzellen-Aktivmaterial, ein Katalysatormaterial und/oder ein Feststoffelektrolyt aufweisen; und/oder wobei die Feststoffpartikel derart eingerichtet sind, dass eine von den Feststoffpartikeln gebildete Schicht eine hydrophobe, lipophobe und/oder amphiphobe Oberfläche aufweist.

7. Verfahren gemäß einem der Ansprüche 1 bis 6, ferner aufweisend:
Steuern des Beschichtens der Substratoberfläche mit zumindest dem Teil der voneinander getrennten Feststoffpartikel auf Grundlage einer Menge von Elektronen, welche in die Feststoffpartikel eingebracht wird und/oder welche von den Feststoffpartikeln abgeführt wird.

8. Verfahren gemäß einem der Ansprüche 1 bis 7,
wobei das Substrat während des Beschichtens der Substratoberfläche mit zumindest dem Teil der voneinander getrennten Feststoffpartikel bewegt wird.

9. Verfahren gemäß einem der Ansprüche 1 bis 8,
wobei das Substrat eine Elektrode eines Akkumulators, eines Kondensators, einer Solarzelle oder einer Brennstoffzelle aufweist.

10. Verfahren gemäß einem der Ansprüche 1 bis 9,
wobei das Substrat eine Gasdiffusionsschicht einer Brennstoffzelle aufweist; oder
wobei das Substrat ein Elektrolyt eines Akkumulators oder einer Brennstoffzelle aufweist; oder wobei das Substrat ein Separator eines Akkumulators oder einer Brennstoffzelle aufweist; oder wobei das Substrat eine Elektrode, ein Elektrolyt oder eine Gasdiffusionsschicht einer Brennstoffzelle aufweist und die Feststoffpartikel ein Katalysatormaterial aufweisen.

11. Beschichtungsvorrichtung zur Beschichtung eines Substrats, wobei die Beschichtungsvorrichtung aufweist:
• einen Behälter (2), welcher einen Bereich zum Aufnehmen von Feststoffpartikeln aufweist;
• eine Positionierungsvorrichtung zum Positionieren eines Substrats mit einer Substratoberfläche des Substrats (7) in Richtung des Bereichs;
• zumindest eine Elektronenquelle zum Einbringen von Elektronen in die Feststoffpartikel;
• eine Steuerung (116), eingerichtet zum Steuern einer elektrostatischen Aufladung der Feststoffpartikel derart, dass eine durch die elektrostatische Aufladung bewirkte Kraft die Feststoffpartikel voneinander trennt und in Richtung der Substratoberfläche des Substrats (7) beschleunigt zum Beschichten der Substratoberfläche mit zumindest einem Teil der voneinander getrennten Feststoffpartikel; und
• einen weiteren Behälter (10), wobei die Steuerung (116) eingerichtet ist, ein in dem weiteren Behälter angeordnetes Beschichtungsmaterial zu verdampfen.

12. Beschichtungsvorrichtung gemäß Anspruch 11, wobei die Steuerung (116) ferner eingerichtet ist:
• zum Steuern einer Menge von Elektronen, welche in die Feststoffpartikel eingebracht wird;
• zum Steuern einer Menge von Elektronen, welche von den Feststoffpartikeln abgeführt wird;
• zum Steuern eines elektrischen Potentialunterschieds zwischen dem Substrat und dem Behälter (2); und/oder
• zum Steuern des Beschichtens auf Grundlage einer Menge von Elektronen, welche in die Feststoffpartikel eingebracht wird und/oder welche von den Feststoffpartikeln abgeführt wird.

13. Beschichtungsvorrichtung gemäß Anspruch 11 oder 12, ferner aufweisend:
• eine Anode (1106) zum Bereitstellen eines elektrischen Feldes zwischen dem weiteren Behälter (10) und der Positionierungsvorrichtung, wobei die Steuerung ferner eingerichtet ist, zum Zünden eines Plasmas mittels des elektrischen Feldes; und/oder
• eine Verdampfungsvorrichtung zum Verdampfen eines Beschichtungsmaterials (11).

14. Beschichtungsvorrichtung gemäß einem der Ansprüche 11 bis 13,
wobei der weitere Behälter (10) in dem Behälter (2) angeordnet ist und/oder an diesen angrenzt; oder
wobei der Behälter (2) in dem weiteren Behälter (10) angeordnet ist und/oder an diesen angrenzt.

15. Beschichtungsvorrichtung gemäß einem der Ansprüche 11 bis 14,
wobei die Positionierungsvorrichtung eine Transportrichtung definiert; und
wobei der weitere Behälter (10) und der Behälter (2) in einem entlang der Transportrichtung verlaufenden Abstand voneinander angeordnet sind.

## Claims

1. A method of coating a substrate (7), wherein the method comprises:
- positioning a substrate surface to be coated of the substrate (7) in a vacuum and in direction of a region, in which solid particles are disposed, with which the substrate surface shall be coated; and
- introducing electrons into the solid particles for electrostatic charging of the solid particles, such that a force caused by the electrostatic charging separates the solid particles from each other and accelerates them in direction of the substrate surface of the substrate (7) for coating of the substrate surface with at least a portion of the from each other separated solid particles;
- evaporating a coating material (11) in direction of the substrate surface for coating of the substrate surface with at least a portion of the coating material (11),
- wherein the coating of the substrate surface with at least the portion of the coating material (11) and the coating of the substrate surface with at least the portion of the from each other separated solid particles either:
spatially and/or temporally overlap with each other, or
spatially and/or temporally include a distance from each other.

2. The method according to claim 1,
wherein the solid particles are disposed in a particle vessel (2), which includes an at least partly electrically conductive wall, and
wherein the introducing electrons into the solid particles is conducted indirectly via the vessel wall.

3. The method according to claim 1 or 2, further comprising:
dissipating electrons from the solid particles during the introducing electrons into the solid particles, where the dissipating is conducted open-loop controled or closed-loop controled.

4. The method according to one of claims 1 to 3, wherein the introduction is conducted open-loop controled or closed-loop controled.

5. The method according to one of claims 1 to 4, further comprising:
open-loop controlling and/or closed-loop controlling an electrical potetial difference between the substrate and the solid particles.

6. The method according to one of claims 1 to 5,
wherein the solid particles include an accumulator active material, an solar cell active material, a catalyst material and/or a solid electrolyte; and/or wherein the solid particles are configured such that a layer formed by the solid particles includes a hydrophobic, lipophobic and/or an amphiphobic surface.

7. The method according to one of claims 1 to 6, further comprising:
controlling the coating of the substrate surface with at least the portion of the from each other separated solid particles based on an amount of electrons, which is introduced into the solid particles and/or which is dissipated from the solid particles.

8. The method according to one of claims 1 to 7,
wherein the substrate is moved during the coating the substrate surface with at least the portion of the from each other separated solid particles.

9. The method according to one of claims 1 to 8,
wherein the substrate includes an electrode of an accumulator, of a capacitor, of a solar cell or of a fuel cell.

10. The method according to one of claims 1 to 9,
wherein the substrate includes a gas diffusion layer of a fuel cell; or
wherein the substrate includes an electrolyte of an accumulator or of a fuel cell; or
wherein the substrate includes a separator of an accumulator or of a fuel cell; or
wherein the substrate includes an electrode, an electrolyte or a gas diffusion layer of a fuel cell and the solid particles include a catalyst material.

11. A coating apparatus for coating a substrate, wherein the coating apparatus comprises:
- a vessel (2) including a region for receiving solid particles;
- a positioning apparatus for positioning a substrate with a substrate surface of the substrate (7) in direction of the region;
- at least one electron source for introducing electrons into the solid particles;
- a control device (116) configured to control an electrostatic charging of the solid particles such that a force caused by the electrostatic charging separates the solid particles from each another and accelerates them in direction of the substrate surface of the substrate (7) for coating of the substrate surface with at least a portion of the from each other separated solid particles;
- a further vessel (10), wherein the control device (116) is configured to evaporate a coating material disposed in the further vessel.

12. A coating apparatus according to claim 11, wherein the control device (116) is furhter configured:
- for controlling an amount of electrons which is introduced into the solid particles;
- for controlling an amount of electrons which is dissipated from the solid particles;
- for controlling an electrical potential difference between the substrate and the vessel (2); and/or
- for controlling the coating based on an amount of electrons, which is introduced into the solid particles and/or which is dissipated from the solid particles.

13. The coating apparatus according to claim 11 or 12, further comprising:
an anode (1106) for providing an electrical field between the further vessel (10) and the positioning apparatus, wherein the control device is further configured for igniting a plasma by the electrical field; and or
an evaporation apparatus for evaporating a coating material (11).

14. The coating apparatus according to one of claims 11 to 13,
wherein the further vessel (10) is disposed in the vessel (2) and/or adjoins it; or
wherein the vessel (2) is disposed in the further vessel (10) and/or adjoins it.

15. The coating according to one of claims 11 to 14,
wherein the positioning apparatus defines a transport direction; and
wherein the further vessel (10) and the vessel (2) are disposed in an along the transport direction extending distance from each other.

## Revendications

1. Procédé de revêtement d'un substrat (7), le procédé comprenant les étapes suivantes consistant à :
• positionner une surface de substrat à revêtir du substrat (7) dans un vide et en direction d'une zone où sont disposées des particules solides avec lesquelles la surface de substrat doit être revêtue ; et
• introduire des électrons dans les particules solides pour charger électrostatiquement les particules solides de telle sorte qu'une force provoquée par la charge électrostatique sépare les particules solides les unes des autres et les accélère en direction de la surface de substrat du substrat (7) pour revêtir la surface de substrat avec au moins une partie des particules solides séparées les unes des autres ; et
• évaporer un matériau de revêtement (11) en direction de la surface de substrat pour revêtir la surface de substrat avec au moins une partie du matériau de revêtement (11),
• dans lequel l'étape consistant à revêtir la surface de substrat avec au moins la partie du matériau de revêtement (11) et l'étape consistant à revêtir la surface de substrat avec au moins la partie des particules solides séparées les unes des autres soit se chevauchent dans le temps et/ou l'espace,
ou
ont un intervalle les unes par rapport aux autres dans le temps et/ou l'espace.

2. Procédé selon la revendication 1,
dans lequel les particules solides sont disposées dans un récipient pour particules (2) qui a une paroi au moins en partie électriquement conductrice, et
dans lequel l'étape consistant à introduire des électrons dans les particules solides se fait indirectement par la paroi du récipient.

3. Procédé selon la revendication 1 ou 2, comprenant en outre l'étape suivante consistant à :
évacuer des électrons des particules solides lors de l'introduction d'électrons dans les particules solides, l'étape consistant à évacuer étant effectuée de manière contrôlée ou régulée.

4. Procédé selon l'une quelconque des revendications 1 à 3,
dans lequel l'étape consistant à introduire est effectuée de manière contrôlée ou régulée.

5. Procédé selon l'une quelconque des revendications 1 à 4, comprenant en outre l'étape consistant à :
contrôler et/ou réguler une différence de potentiel électrique entre le substrat et les particules solides.

6. Procédé selon l'une quelconque des revendications 1 à 5,
dans lequel les particules solides comprennent un matériau actif d'accumulateur, un matériau actif de cellule solaire, un matériau catalyseur et/ou un électrolyte solide ; et/ou
dans lequel les particules solides sont configurées de telle sorte qu'une couche formée par les particules solides présente une surface hydrophobe, lipophobe et/ou amphiphobe.

7. Procédé selon l'une quelconque des revendications 1 à 6, comprenant en outre l'étape suivante consistant à :
contrôler le revêtement de la surface de substrat avec au moins la partie des particules solides séparées les unes des autres sur la base d'une quantité d'électrons qui est introduite dans les particules solides et/ou qui est évacuée des particules solides.

8. Procédé selon l'une quelconque des revendications 1 à 7,
dans lequel le substrat est déplacé pendant le revêtement de la surface de substrat avec au moins la partie des particules solides séparées les unes des autres.

9. Procédé selon l'une quelconque des revendications 1 à 8,
dans lequel le substrat comprend une électrode d'un accumulateur, d'un condensateur, d'une cellule solaire ou d'une pile à combustible.

10. Procédé selon l'une quelconque des revendications 1 à 9,
dans lequel le substrat comprend une couche de diffusion gazeuse d'une pile à combustible ; ou
dans lequel le substrat comprend un électrolyte d'un accumulateur ou d'une pile à combustible ; ou
dans lequel le substrat comprend un séparateur d'un accumulateur ou d'une pile à combustible ; ou
dans lequel le substrat comprend une électrode, un électrolyte ou une couche de diffusion gazeuse d'une pile à combustible et les particules solides comprennent un matériau catalyseur.

11. Dispositif de revêtement pour le revêtement d'un substrat, le dispositif de revêtement comprenant :
• un récipient (2) qui présente une zone destinée à recevoir des particules solides ;
• un dispositif de positionnement pour positionner un substrat avec une surface de substrat du substrat (7) en direction de la zone ;
• au moins une source d'électrons pour introduire des électrons dans les particules solides ;
• un contrôleur (116) configuré pour contrôler une charge électrostatique des particules solides de telle sorte qu'une force provoquée par la charge électrostatique sépare les particules solides les unes des autres et les accélère en direction de la surface de substrat du substrat (7) pour revêtir la surface de substrat avec au moins une partie des particules solides séparées les unes des autres ; et
• un autre récipient (10), dans lequel le contrôleur (116) est configuré pour évaporer un matériau de revêtement disposé dans l'autre récipient.

12. Dispositif de revêtement selon la revendication 11, dans lequel le contrôleur (116) est en outre configuré :
• pour contrôler une quantité d'électrons introduite dans les particules solides ;
• pour contrôler une quantité d'électrons évacuée des particules solides ;
• pour contrôler une différence de potentiel électrique entre le substrat et le récipient (2) ; et/ou
• pour contrôler le revêtement sur la base d'une quantité d'électrons qui est introduite dans les particules solides et/ou qui est évacuée des particules solides.

13. Dispositif de revêtement selon la revendication 11 ou 12, comprenant en outre :
• une anode (1106) pour fournir un champ électrique entre l'autre récipient (10) et le dispositif de positionnement, le contrôleur étant en outre configuré pour allumer un plasma moyennant le champ électrique ; et/ou
• un dispositif d'évaporation pour évaporer un matériau de revêtement (11).

14. Dispositif de revêtement selon l'une quelconque des revendications 11 à 13,
dans lequel l'autre récipient (10) est disposé dans le récipient (2) et/ou l'avoisine ; ou
dans lequel le récipient (2) est disposé dans l'autre récipient (10) et/ou l'avoisine.

15. Dispositif de revêtement selon l'une quelconque des revendications 11 à 14,
dans lequel le dispositif de positionnement définit une direction de transport ; et
dans lequel l'autre récipient (10) et le récipient (2) sont disposés à une distance l'un de l'autre s'étendant le long de la direction de transport.
